# EUROPEAN PATENT APPLICATION

(11) **EP 1 577 778 A2**
(43) Date of publication of application: **21.09.2005**
(21) Application number: 05251077.3
(22) Date of filing: 24.02.2005
(51) Int. Cl.: G06F 11/32

(54) **Network configuration information display apparatus and method**

(30) Priority: 27.02.2004 JP 2004054043; 21.12.2004 JP 2004369202
(71) Applicant: SONY CORPORATION, Tokyo 141 (JP)
(72) Inventor: Hirose, Yukiyoshi, Shinagawa-ku Tokyo (JP); Isozaki, Masaaki, Shinagawa-ku Tokyo (JP)
(74) Representative: Horner, David Richard

(57) **Abstract**

A system and method is disclosed by which a user can recognize readily and with certainty from an appearance of a network system that a plurality of information processing apparatus construct the network system or are operating cooperatively. A liquid crystal display section is provided on each of first to third information processing apparatus while an LED section is provided on a fourth information processing apparatus. If the second apparatus is connected to a network while the first, third and fourth apparatus are connected to the network, then the first apparatus set as a master apparatus collects information regarding all apparatus and produces flickering display information so that the liquid crystal display sections and the LED section display flickering. If the third apparatus is disconnected from the network, then the display section of the first apparatus and the LED section are caused to display flickering.

## Description

### FIELD OF THE INVENTION

This invention relates to an information processing apparatus connected to a network, a method of presenting a situation of a network system, and a computer program for presenting a situation of a network system.

### BACKGROUND OF THE INVENTION

Recently, attention is paid to grid computing. Grid computing is a technique of allowing a plurality of information processing apparatus connected to a network to operate cooperatively to achieve a high arithmetic operation performance.

For example, Japanese Patent Laid-Open No. 2002-342165 (hereinafter referred to as Patent Document 1), Japanese Patent Laid-Open No. 2002-351850 (hereinafter referred to as Patent Document 2), Japanese Patent Document No. 2002-358289 (hereinafter referred to as Patent Document 3), Japanese Patent Document No. 2002-366533 (hereinafter referred to as Patent Document 4) and Japanese Patent Laid-Open No. 2002-366534 (hereinafter referred to as Patent Document 5) disclose implementation of a computer architecture for high speed processing through use of a uniform modular structure, a common computing module and a uniform software cell.

Additionally, U.S. Patent No. 6,587,906 (hereinafter referred to as Patent Document 6), U.S. Patent No. 6,667,920 (hereinafter referred to as Patent Document 7), U.S. Patent No. 6,728,845 (hereinafter referred to as Patent Document 8), U.S. Patent Laid-Open No. 2004-0039895 (hereinafter referred to as Patent Document 9), U.S. Patent Laid-Open No. 2004-0054880 (hereinafter referred to as Patent Document 10) and U.S. Patent Laid-Open No. 2004-0098496 (hereinafter referred to as Patent Document 11) disclose speeding up of processing by causing a plurality of processors in an information processing apparatus to operate independently of and in parallel to each other.

However, where a plurality of information processing apparatus are connected to each other through a network to construct a network system or cooperatively operate as a virtual single information processing apparatus to execute a fixed process discretely, the user cannot easily recognize that the plural information processing apparatus construct a network system or are operating cooperatively.

### SUMMARY OF THE INVENTION

Embodiments of the present invention provide an information processing apparatus, a network system situation presenting method and a computer program by which a user can recognize readily and with certainty from an appearance of a network system that a plurality of information processing apparatus construct the network system or are operating cooperatively.

According to an aspect of the present invention, there is provided an information processing apparatus connectable to a network to construct a network system, including: a presentation section having a light emitting section, a display section or a sound outputting section; a detection section for detecting a situation of the network system; and a control section for producing presentation information based on a result of the detection by the detection section and causing the presentation section to present the situation of the network system based on the presentation information.

According to another aspect of the present invention, there is provided an information processing apparatus connectable to a network to construct a network system, including: a detection section for detecting a situation of the network system; and a control section for producing presentation information based on a result of the detection by the detection section and transmitting the presentation information to a different information processing apparatus connected to the network so that the situation of the network system is presented by a presentation section included in the different information processing apparatus based on the presentation information.

According to a further aspect of the present invention, there is provided a network system situation presenting method for presenting a situation of a network system wherein a plurality of information processing apparatus each having a presentation section are connected to the same network, including a detection step performed by one of the information processing apparatus of detecting a situation of the network system, an information production step performed by the one information processing apparatus or a different one of the plurality of information processing apparatus of producing presentation information based on a result of the detection at the detection step, and a presentation step performed by any of the plurality of information processing apparatus connected to the network of presenting the situation of the network system by means of a presentation section included in the information processing apparatus based on the presentation information produced at the information production step.

According to a still further aspect of the present invention, there is provided a computer program for causing a computer provided in an information processing apparatus, which is connected to a network to construct a network system, to present a situation of the network system by means of a presentation section provided in the information processing apparatus, the computer program causing the computer to function as a section for detecting a situation of the network system, and a section for producing presentation information based on a result of the detection and causing the presentation section to present the situation of the network system based on the presentation information.

According to a yet further aspect of the present invention, there is provided a computer program for causing a computer provided in an information processing apparatus, which is connected to a network to construct a network system, to allow a different information processing apparatus connected to the information processing apparatus through the network to present a situation of the network system, the computer program causing the computer to function as: a section for detecting a situation of the network system; and a section for producing presentation information based on a result of the detection and transmitting the presentation information to the different information processing apparatus so that the situation of the network system is presented by a presentation section included in the different information processing apparatus based on the presentation information.

In one embodiment of the information processing apparatus, network system situation presenting method and computer programs, the presentation section is a light emitting section or a display section, and the light emitting section or display section is controlled to flicker or emit light in response to the situation of the network system. In another embodiment, where the presentation section is a sound outputting section, a sound announcement can be outputted from the sound outputting section in response to the situation of the network system. Consequently, the user can recognize readily and with certainty from the appearance of the system or the like that a plurality of information processing apparatus construct a network system or are operating cooperatively.

Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

The invention will now be described by way of example with reference to the accompanying drawings, throughout which like parts are referred to by like references, and in which:
FIG. 1 is a block diagram showing a network system to which an embodiment of the present invention is applied;
FIGS. 2A, 2B and 2C are views illustrating an example of an information processing controller included in an information processing apparatus to which an embodiment of the present invention is applied;
FIG. 3 is a view showing an example of a software cell;
FIG. 4 is a view illustrating an example of a data area of a software cell;
FIG. 5 is a diagrammatic view showing a plurality of information processing apparatus where they operate as a virtual single information processing apparatus;
FIG. 6 is a diagrammatic view illustrating an example of a software configuration of the information processing apparatus;
FIG. 7 is a diagrammatic view showing four information processing apparatus where they operate as a virtual single information processing apparatus;
FIG. 8 is a diagrammatic view illustrating an example of distributed processing by the system shown in FIG. 7;
FIG. 9 is a diagrammatic view showing a particular example of information processing apparatus and a system;
FIG. 10 is a block diagram showing a hardware configuration of a hard disk recorder shown in FIG. 9;
FIG. 11 is a block diagram showing a hardware configuration of a television receiver shown in FIG. 9;
FIG. 12 is a block diagram showing a hardware configuration of a portable CD player shown in FIG. 9;
FIG. 13 is a schematic view showing an appearance of the system of FIG. 9;
FIG. 14 is a diagrammatic view showing an example of a software configuration of the information processing apparatus where a situation of a network system is presented;
FIG. 15 is a view illustrating an example of apparatus information to be used for presentation;
FIG. 16 is a view illustrating an example of flickering display information as presentation information;
FIG. 17 is a waveform diagram illustrating various flickering modes;
FIG. 18 is a flow chart illustrating an example of a process for presentation;
FIGS. 19A and 19B are views illustrating an example of commands for presentation;
FIGS. 20 and 21 are schematic views showing different examples of display for presentation;
FIG. 22 is a block diagram showing another network system to which an embodiment of the present invention is applied;
FIGS. 23A, 23B and 23C are views illustrating another example of the information processing controller included in the information processing apparatus to which an embodiment of the present invention is applied;
FIG. 24 is a block diagram showing an internal structure of a direct memory access controller;
FIG. 25 is a view showing a command/response structure in the information processing apparatus;
FIGS. 26A and 26B are flow diagrams illustrating procedures upon accessing from a sub processor to a main memory;
FIG. 27 is a block diagram showing an internal structure of a working memory;
FIG. 28 is a block diagram showing an internal structure of the sub processor;
FIG. 29 is a block diagram showing an internal structure of a control register;
FIG. 30 is a diagrammatic view showing a plurality of information processing apparatus where they operate as a virtual single information processing apparatus;
FIG. 31 is a diagrammatic view showing four information processing apparatus where wherein they operate as a virtual single information processing apparatus;
FIG. 32 is a flow chart illustrating an example of distributed processing by the system shown in FIG. 31;
FIG. 33 is a diagrammatic view showing another example of information processing apparatus and a system;
FIG. 34 is a block diagram showing a hardware configuration of a hard disk recorder shown in FIG. 33;
FIG. 35 is a block diagram showing a hardware configuration of a television receiver shown in FIG. 33;
FIG. 36 is a block diagram showing a hardware configuration of a portable CD player shown in FIG. 33;
FIG. 37 is a schematic view showing an appearance of the system of FIG. 33;
FIG. 38 is a diagrammatic view showing an example of a software configuration of the information processing apparatus where a situation of a network system is presented;
FIG. 39 is a flow chart illustrating an example of a process for presentation;
FIGS. 40 and 41 are schematic views showing different examples of display for presentation.

### DETAILED DESCRIPTION OF THE EMBODIMENTS

### [1. Basic Configuration 1 of the Network System and the Information Processing Apparatus]

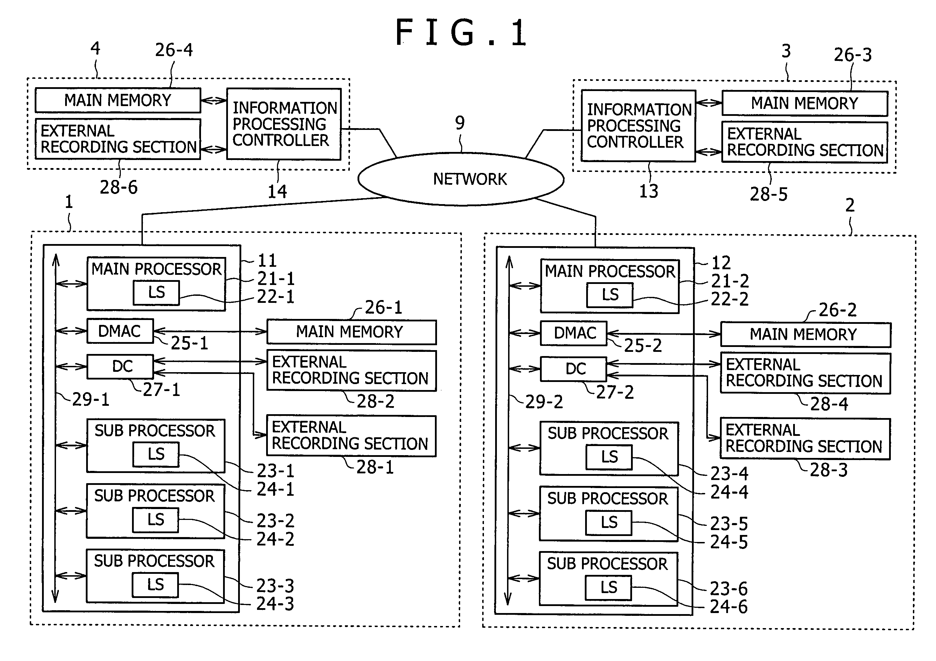

FIG. 1 shows an example of a network system to which an embodiment of the present invention is applied. Referring to FIG. 1, the network system shown includes a plurality of information processing apparatus 1, 2, 3 and 4 by a network 9.

### (1-1. Information Processing Apparatus and Information Processing Controller)

The information processing apparatus 1, 2, 3, and 4 are such various AV (Audio and Visual) apparatus and portable apparatus as hereinafter described.

The information processing apparatus 1 is described below. The information processing apparatus 1 includes an information processing controller 11 as a computer function section. The information processing controller 11 includes a main processor 21-1, sub processors 23-1, 23-2, and 23-3, a direct memory access controller (DMAC) 25-1, and a disk controller (DC) 27-1.

The main processor 21-1 performs schedule management of execution (data processing) of sub processor programs by the sub processors 23-1, 23-2, and 23-3 and general management of the information processing controller 11 (information processing apparatus 1). However, the main processor 21-1 may be configured otherwise such that a program other than the program for performing the management operates in the main processor 21-1. In this instance, the main processor 21-1 functions also as a sub processor. The main processor 21-1 includes a local storage (LS) 22-1.

Although the number of sub processors may be only one, preferably a plurality of sub processors are involved. In the example shown in FIG. 1, the information processing apparatus includes a plurality sub processors.

The sub processors 23-1, 23-2, and 23-3 execute sub processor programs parallelly and independently of each other to process data under the control of the main processor 21-1. Further, according to circumstances, a program in the main processor 21-1 can operate in cooperation with a sub processor program in any of the sub processors 23-1, 23-2, and 23-3. Also function programs hereinafter described operate in the main processor 21-1. Also the sub processors 23-1, 23-2, and 23-3 include local storages 24-1, 24-2, and 24-3, respectively.

The DMAC 25-1 accesses programs and data stored in a main memory 26-1 connected to the information processing controller 11 and formed from a DRAM (dynamic RAM) or the like. The DC 27-1 accesses external recording sections 28-1 and 28-2 connected to the information processing controller 11.

The external recording sections 28-1 and 28-2 may have a form of any of a fixed disk (hard disk) and a removable disk. As such a removable disk as just mentioned, various recording media such as an MO (magnetic disk), an optical disk such as a CD±RW or a DVD±RW, a memory disk, an SRAM (static RAM), and a ROM can be used. The DC 27-1 is an external recording section controller although it is called disk controller.

The information processing controller 11 can be configured such that a plurality of external recording sections 28 are connected thereto as in the example shown in FIG. 1.

The main processor 21-1, sub processors 23-1, 23-2, and 23-3, DMAC 25-1, and DC 27-1 are connected to each other by a bus 29-1.

An identifier is allocated as an information processing apparatus ID to the information processing controller 11. The identifier allows identification of the information processing apparatus 1, which incorporates the information processing controller 11, uniquely over the entire network.

Also to each of the main processor 21-1 and the sub processors 23-1, 23-2, and 23-3, an identifier with which it can be identified is allocated as a main processor ID or a sub processor ID similarly.

The information processing controller 11 is preferably formed as a one-chip IC (integrated circuit).

Also the other information processing apparatus 2, 3, and 4 are configured in a similar manner. Here, it is to be noticed that those units of reference characters having the same parent number operate similarly unless otherwise specified even if they have different branch numbers. Thus, in the following description, where the branch number of reference characters is omitted, the units are same irrespective of the difference in branch number.

### (1-2. Accessing from Each Sub Processor to the Main Memory)

As described hereinabove, although each of the sub processors 23 in one information processing controller executes a sub processor program independently to process data, if different sub processors perform reading out or writing at a time from or into the same area in the main memory 26, then mismatching of data may possibly occur. Therefore, accessing from the sub processors 23 to the main memory 26 is performed in accordance with the following procedure.

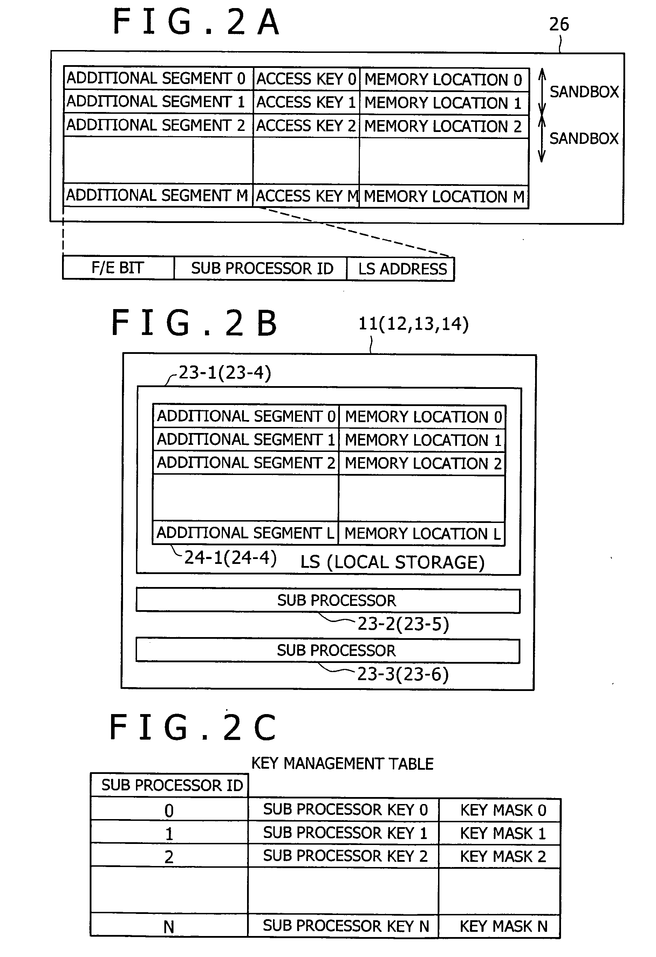

Referring to FIG. 2A, the main memory 26 is formed from a plurality of memory locations 0 to M with which a plurality of addresses can be designated. An additional segment 0 to M for storing information indicative of a state of data is allocated to each memory location. The additional segment includes an F/E bit, a sub processor ID, and an LS address (Local Storage address). Also an access key 0 to M hereinafter described is allocated to each memory location. The F/E bit is defined in the following manner.

The F/E bit = 0 represents that the data in the corresponding memory location is data being read and processed by a sub processor 23 or invalid data which it not the latest data since the location is in a blank state and is disabled from being read out. Further, the F/E bit = 0 indicates that data can be written into the corresponding memory location, and the F/E bit is set to 1 after writing into the memory location.

The F/E bit = 1 represents that data of the corresponding memory location is not read out by any sub processor 23 and is the latest data not processed as yet. The data of the memory location can be read out. After the sub processor 23 reads out the data, the F/E bit is set to 0. Further, the F/E bit = 1 represents that the memory location is disabled from writing of data.

Further, in the state of the F/E bit = 0 (readout disabled/writing enabled), it is possible to set a readout reservation with regard to the memory location. When readout reservation is to be performed with regard to a memory location with regard to which the F/E bit = 0, a sub processor 23 writes the sub processor ID and the LS address of the sub processor 23 as readout reservation information into the additional segment of the memory location with regard to which the readout reservation is performed.

Thereafter, the sub processor 23 on the data writing side writes the data into the memory location having the readout reservation, and the F/E bit is set to F/E bit = 1 (readout enabled/writing disabled). Then, the sub processor ID and the LS address written as the readout reservation information in the additional segment in advance are read out.

Where there is the necessity to process data at multiple stages using a plurality of sub processors, if readout/writing of data of each memory location are controlled in such a manner as described above, then immediately after data processed by a processor 23, which performs a process at a preceding stage, is written into a predetermined address on the main memory 26, another sub processor 23, which performs a process at a succeeding stage, can read out the pre-processed data.

Referring to FIG. 2B, also the local storage 24 in each sub processor 23 is formed from a plurality of memory locations 0 to L which can be designated each by an address. An additional segment 0 to L is allocated similarly to each of the memory locations. The additional segment includes a busy bit.

When the sub processor 23 is to read out data in the main memory 26 into a memory location of the local storage 24 thereof, it sets the corresponding busy bit corresponding to the memory location of the reading out destination to 1 to make reservation. Other data cannot be stored into any memory location with regard to which the busy bit is 1. After reading out of the memory location of the local storage 24, the busy bit is changed to 0 so that the memory location can be used for an arbitrary object later.

Referring back to FIG. 2A, the main memory 26 connected to each information processing controller includes a plurality of sandboxes. The sandboxes define areas in the main memory 26, and each sandbox is allocated for each sub processor 23 and can be used exclusively by the pertaining sub processor. In other words, each of the sub processors 23 can use a sandbox allocated thereto but cannot access data exceeding the area of the sandbox.

While the main memory 26 includes a plurality of memory locations 0 to M, each sandbox is a set of memory locations. In other words, one sandbox is formed from one or a plurality of memory locations.

Further, in order to implement exclusive control of the main memory 26, such a key management table as shown in FIG. 2C is used. The key management table is stored in a comparatively high speed memory such as an SRAM in the information processing controller and is coordinated with a DMAC 25.

The key management table includes a number of entries equal to the number of sub processors in the information processing controller. Each entry includes a sub processor ID and a corresponding sub processor key and a corresponding key mask stored in a coordinated relationship with each other.

The process when the sub processor 23 uses the main memory 26 is such as described below. First, the sub processor 23 outputs a readout or writing command to the DMAC 25. This command includes the sub processor ID of the sub processor and an address of the main memory 26, which is a destination of the request for use.

Before the DMAC 25 executes this command, it refers to the key management table to detect the sub processor key of the sub processor of the source of the request for access. Then, the DMAC 25 compares the detected sub processor key of the source of the request for use with the access key allocated to the memory location shown in FIG. 2A in the main memory 26, which is the destination of the request for use. Then, only when the keys coincide with each other, the DMAC 25 executes the command described above.

The key mask on the key management table shown in FIG. 2C can set, when an arbitrary bit thereof is set to the value 1, a corresponding bit of the sub processor key coordinated with the key mask to 0 or 1.

It is assumed that, for example, the sub processor key is 1010. Usually, the sub processor key enables accessing only to a sandbox having the access key of 1010. However, if the key mask coordinated with the sub processor key is set to 0001, then the coincidence determination between a sub processor key and an access key is masked only with regard to the digit in which the bit of the key mask is set to 1. Consequently, the sub processor key of 1010 enables accessing to a sandbox having the access key of 1010 or 1011.

The exclusive property of the sandboxes of the main memory 26 is implemented in such a manner as described above. In short, where there is the necessity for a plurality of sub processors in an information processing controller to process data at multiple stages, only a sub processor performing a process at a preceding stage and another sub processor performing a process at a succeeding stage are permitted to access a predetermined address of the main memory 26. Consequently, the data can be protected.

Such exclusive control of the memory can be used, for example, in the following manner. First, immediately after the information processing apparatus is started, the values of the key masks are all zero. It is assumed that a program in the main processor is executed and operates in a cooperating relationship with programs in the sub processors. When it is intended to store processing result data outputted from a first sub processor once into the main memory 26 and then transmit the processing result data to a second sub processor, it is necessary that the pertaining main memory area can be accessed from the two sub processors. In such an instance, the program in the main processor changes the values of the key masks suitably to provide a main memory area, which can be accessed from the plurality of sub processors, to allow multi-stage processing by the sub-processors.

More particularly, when multi-stage processing is to be performed in the procedure of data from a different information processing apparatus → processing by the first sub processor → first main memory area → processing by the second sub processor → second main memory area, the second processor cannot access the first main memory area if the following settings are maintained:
Sub processor key of the first sub processor, 0100;
Access key of the first main memory area, 0100;
Sub processor key of the second sub processor, 0101;
Access key of the second main memory area, 0101.

Thus, if the key mask of the second sub processor is changed to 0001, then the second sub processor is permitted to access the first main memory area. (1-3. Production and Configuration of a Software Cell)

In the network system of FIG. 1, a software cell is transmitted between the information processing apparatus 1, 2, 3, and 4 so that distributed processing may be performed by the information processing apparatus 1, 2, 3, and 4. In particular, the main processor 21 included in the information processing controller in a certain information processing apparatus produces a software cell including a command, a program, and data and transmits the software cell to another information processing apparatus through the network 9 to achieve distribution of processing.

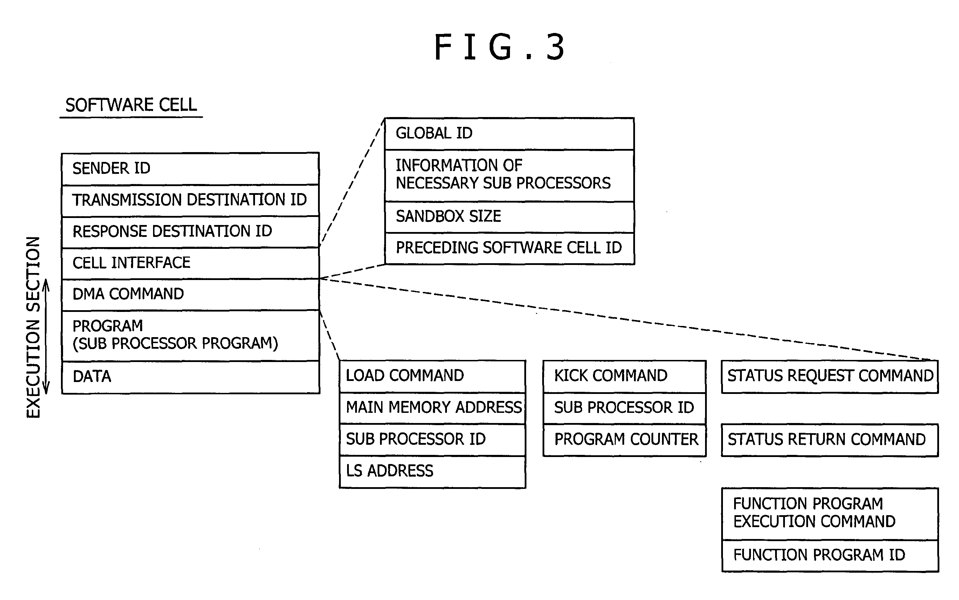

FIG. 3 shows an example of a configuration of a software cell. Referring to FIG. 3, the software cell shown generally includes a sender ID, a transmission destination ID, a response destination ID, a cell interface, a DMA command, a program, and data.

The sender ID includes a network address and the information processing apparatus ID of an information processing apparatus of the sender of the software cell. The sender ID includes identifiers (main processor ID and sub processor IDs) of the main processor 21 and the sub processors 23 included in the information processing controller in the information processing apparatus.

The transmission destination ID and the response destination ID individually include the same information regarding an information processing apparatus of the transmission destination of the software cell and an information processing apparatus of the response destination of a result of execution of the software cell.

The cell' interface is information necessary for utilization of the software cell and includes a global ID, information of necessary sub processors, a sandbox size, and a preceding software cell ID.

The global ID allows unique identification of the software cell through the entire network and is produced based on the sender ID and the date and hour of production or transmission of the software cell.

The information of necessary sub processors has set therein the number of sub processors necessary for execution of the software cell. The sandbox size has set therein the memory capacities in the main memory 26 and the local storages 24 of the sub processors 23 necessary for execution of the software cell.

The preceding software cell ID is an identifier of a preceding software cell among software cells of one group, which requires sequential execution such as streaming data.

An execution section of a software cell is formed from the DMA command, program, and data. The DMA command includes a series of DMA commands necessary to start the program, and the program includes sub processor programs to be executed by the sub processors 23. The data here is data to be processed by the program including the sub processor programs.

The DMA command further includes a load command, a kick command, a function program execution command, a status request command, and a status return command.

The load command is a command for loading information in the main memory 26 into the local storage 24 of a sub processor 23 and includes, in addition to the load command itself, a main memory address, a sub processor ID, and an LS (Local Storage) address. The main memory address indicates an address of a predetermined area in the main memory 26, which is a load source of the information. The sub process ID and the LS address indicate the identifier and the address of the local storage 24 of the sub processor 23 of a load destination of the information.

The kick command is a command for starting execution of a sub processor program and includes, in addition to the kick command, a sub processor ID and a program counter. The sub processor ID identifies a sub processor 23 of a kicking object, and the program counter provides an address for the program counter for execution of the program.

The function program execution command is a command (hereinafter described) used for a certain information processing apparatus to request another information processing apparatus for execution of a function program as hereinafter described. The information processing controller in the information processing apparatus, which receives the function program execution command, identifies a function program to be started from a function program ID.

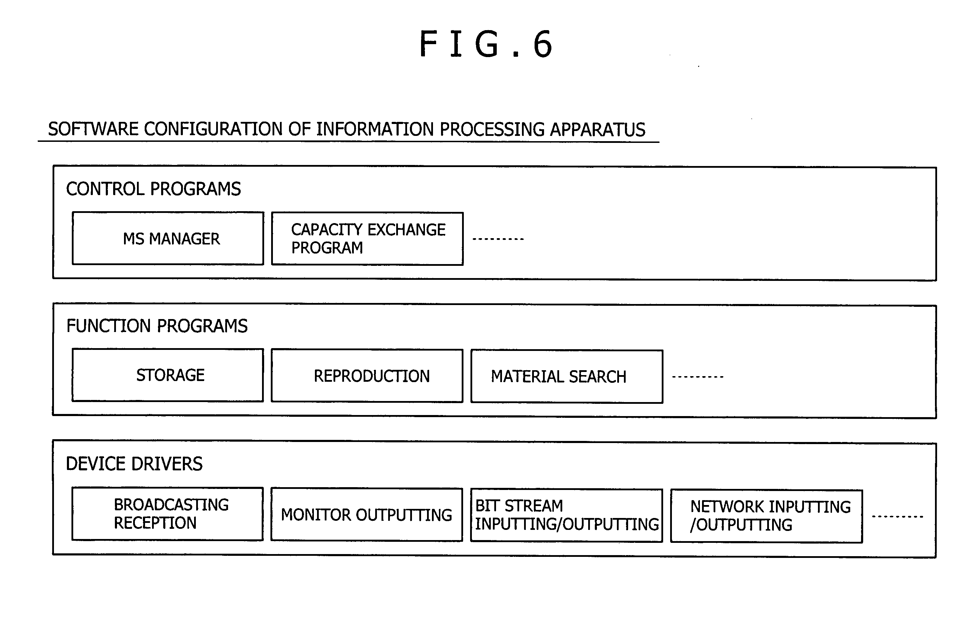

The status request command is a command for requesting for transmission of apparatus information regarding a current operation state (situation) of an information processing apparatus indicated by the transmission destination ID to an information processing apparatus indicated by the response destination ID. While the function program is hereinafter described, it is a program categorized into a function program in FIG. 6, which illustrates a configuration of software stored in the main memory 26. The function program is loaded into the main memory 26 and executed by the main processor 21.

The status return command is a command used for an information processing apparatus, which receives the status request command, to issue a response of apparatus information of the information processing apparatus itself to an information processing apparatus indicated by the response destination ID included in the status request command. The status return command places the apparatus information into the data region of the execution section.

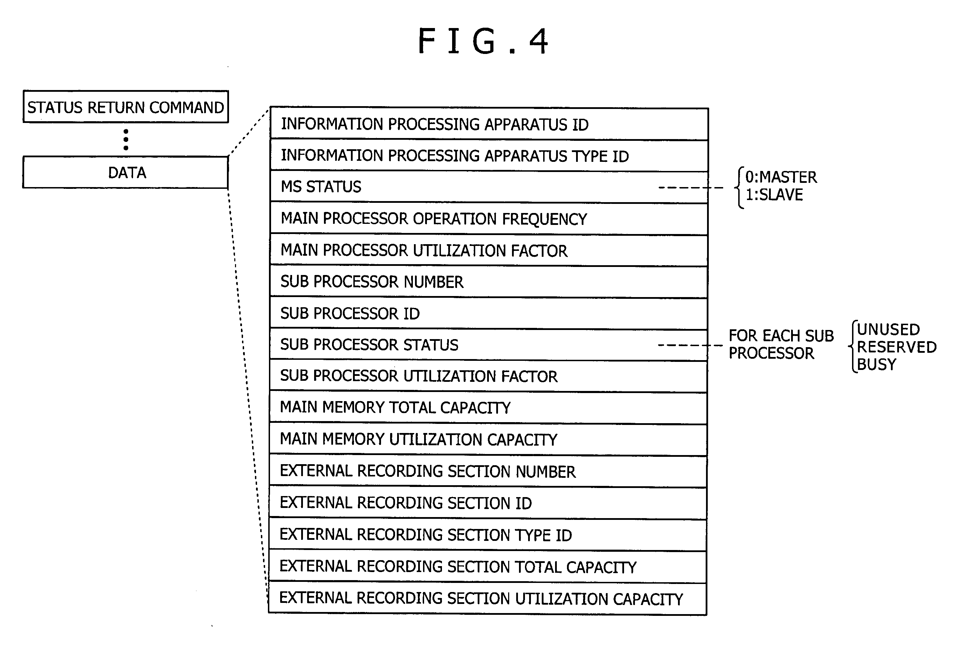

FIG. 4 illustrates a structure of the data area of a software cell where the DMA command is the status return command.

Referring to FIG. 4, the information processing apparatus ID is an identifier for identifying an information processing apparatus, which includes an information processing controller, and represents the ID of an information processing apparatus that transmits the status return command. The information processing apparatus ID is produced, when the power supply is made available, based on the date and hour when the power supply is made available, the network address of the information processing apparatus, the number of sub processors 23 included in the information processing controller in the information processing apparatus, and so forth by the main processor 21 included in the information processing controller in the information processing apparatus.

The information processing apparatus type ID includes a value representative of a characteristic of the information processing apparatus. The characteristic of the information processing apparatus is, for example, a hard disk recorder, a television receiver, a portable CD (Compact Disc) player, or the like hereinafter described. The information processing apparatus type ID may be of the type representing a function that the information processing apparatus has such as image and sound recording or image and sound reproduction. The value representative of a characteristic or a function of an information processing apparatus is determined in advance. If the information processing apparatus type ID is recalled, then a characteristic or a function of the information processing apparatus can be grasped.

The MS (Master/Slave) status represents as which one of a master apparatus and a slave apparatus the information processing apparatus operates as hereinafter described. Where the MS status is set to 0, this represents that the information processing apparatus should operate as a master apparatus, but where the MS status is set to 1, this represents that the information processing apparatus should operate as a slave apparatus.

The main processor operation frequency represents an operation frequency of the main processor 21 in the information processing controller. The main processor utilization factor represents the utilization factor in the main processor 21 regarding all programs, which are operating in the main processor 21 at present. The main processor utilization factor is a value representing the ratio of the processing capacity being currently used to the overall processing capacity of the object main processor and is calculated, for example, in a unit of MIPS, which is a unit for evaluation of the processor processing capacity, or based on the processor utilization time per unit time. This similarly applies also to a sub processor utilization factor hereinafter described.

The sub processor number represents the number of sub processors 23 provided in the information processing controller. The sub processor ID represents an identifier for identification of a sub processor 23 in the information processing controller.

The sub processor status represents a status of the sub processor 23 and may be one of an unused status, a reserved status, a busy status, and so forth. The unused status indicates that the sub processor is not used at present and is not reserved for use either. The reserved status indicates that the sub processor is not used but is reserved for use. The busy status indicates that the sub processor is currently used.

The sub processor utilization factor represents the utilization factor in the sub processor regarding a sub processor program being executed by the sub processor or being reserved for execution in the sub processor. In other words, the sub processor utilization factor indicates the utilization factor at present where the sub processor status is busy, but indicates an estimated utilization factor with which the sub processor is planned to be used later where the sub processor status is reserved.

One set of the sub processor ID, sub processor status, and sub processor utilization factor is set for one sub processor 23. Consequently, a number of sets corresponding to the number of sub processors 23 in one information processing controller are set.

The main memory total capacity and the main memory utilization capacity represent the total capacity and the capacity being currently used of the main memory 26 connected to the information processing controller, respectively.

The external recording section number represents the number of external recording sections 28 connected to the information processing controller. The external recording section ID is information for unique identification of each of the external recording sections 28 connected to the information processing controller. The external recording section type ID represents the type of each of the external recording sections 28 (for example, a hard disk, a CD±RW, a DVD±RW, a memory disk, an SRAM, a ROM, or the like).

The external recording section total capacity and the external recording section utilization capacity represent the total capacity and the currently used capacity of an external recording section 28 identified with the external recording section ID, respectively.

A set of the external recording section ID, external recording section type ID, external recording section total capacity, and external recording section utilization capacity is set for one external recording section 28. Consequently, a number of sets corresponding to the number of external recording sections 28 connected to the information processing controller are set. In particular, where a plurality of external recording sections are connected to an information processing controller, different external recording section IDs are applied individually to the external recording sections, and also the external recording section type IDs, external recording section total capacities, and external recording section utilization capacities are managed separately from each other.

### (1-4. Execution of a Software Cell)

The main processor 21 included in the information processing controller in a certain information processing apparatus produces a software cell having such a configuration as described above and transmits the software cell to a different information processing apparatus through the network 9 and also to the information processing controller in the certain information processing apparatus. The information processing apparatus of the sender, the information processing apparatus of the transmission destination, the information processing apparatus of the response destination, and the information processing controllers in the apparatus mentioned are individually identified with the sender ID, transmission destination ID, and response destination ID described hereinabove, respectively.

The main processor 21 included in the information processing controller in the information processing apparatus receiving the software cell stores the software cell into the main memory 26. Further, the main processor 21 of the transmission destination reads out the software cell and processes the DMA command included in the software cell.

In particular, the main processor 21 of the transmission destination first executes the load command. Consequently, the information is loaded from the main memory address indicated by the load command into a predetermined area of the local storage 24 in a sub processor specified by the sub processor ID and the LS address included in the load command. The information loaded here is a sub processor program or data or some other indicated data included in the received software cell.

Then, the main processor 21 outputs the kick command to a sub processor indicated by the sub processor ID included in the kick command together with a program counter included in the kick command similarly.

The indicated sub processor executes the sub processor program in accordance with the kick command and the program counter. Then, the sub processor stores a result of the execution into the main memory 26, and then notifies the main processor 21 of completion of the execution.

It is to be noted that the processor executing the software cell in the information processing controller in the information processing apparatus of the transmission destination is not limited to a sub processor 23, but it is possible to designate the main processor 21 so as to execute a main memory program such as a function program included in the software cell.

In this instance, the information processing apparatus of the sender transmits, to the information processing apparatus of the transmission destination, a software cell whose DMA command is the load command. The software cell includes a main memory program and data to be processed by the main memory program in place of the sub processor program. The main memory program and the data to be processed by the main memory program are stored into the main memory 26.

Then, the information processing apparatus of the sender transmits, to the information processing apparatus of the transmission destination, a software cell whose DMA command is the kick command or the function program execution command. The software cell includes the main processor ID and main memory address of the information processing controller in the information processing apparatus of the transmission destination, an identifier for identification of the main memory program such as a function program ID hereinafter described, and a program counter. Thus, the main processor 21 may execute the main memory program.

As described above, in the network system according to the present embodiment, an information processing apparatus of the sender transmits a sub processor program or a main memory program in the form of a software cell to an information processing apparatus of the transmission destination. Further, the information processing apparatus of the sender causes the information processing controller in the information processing apparatus of the transmission destination to load the sub processor program into a sub processor 23. Consequently, the information processing apparatus of the sender can cause the information processing apparatus of the transmission destination to execute the sub processor program or the main memory program.

Where the program included in the received software cell is a sub processor program, the information processing controller in the information processing apparatus of the transmission destination loads the sub processor program into a designated sub processor. Thus, the information processing controller causes the sub processor to execute the sub processor program or the main memory program included in the software cell.

Accordingly, even if the user does not operate the information processing apparatus of the transmission destination, the sub processor program or the main memory program can be executed automatically by the information processing controller in the information processing apparatus of the transmission destination.

In this manner, any information processing apparatus can acquire, where the information processing controller thereof does not include a sub processor program or a main memory program such as a function program, such programs from another information processing apparatus connected thereto by the network. Further, each sub processor and the main memory can transfer data therebetween in accordance with the DMA system and such sandboxes as described hereinabove are used. In such a case, even where it is necessary to process data at multiple states within one information processing controller, the processing can be executed at a high speed and with a high degree of security.

### [2. Example 1 of Distributed Processing between the Information Processing Apparatus]

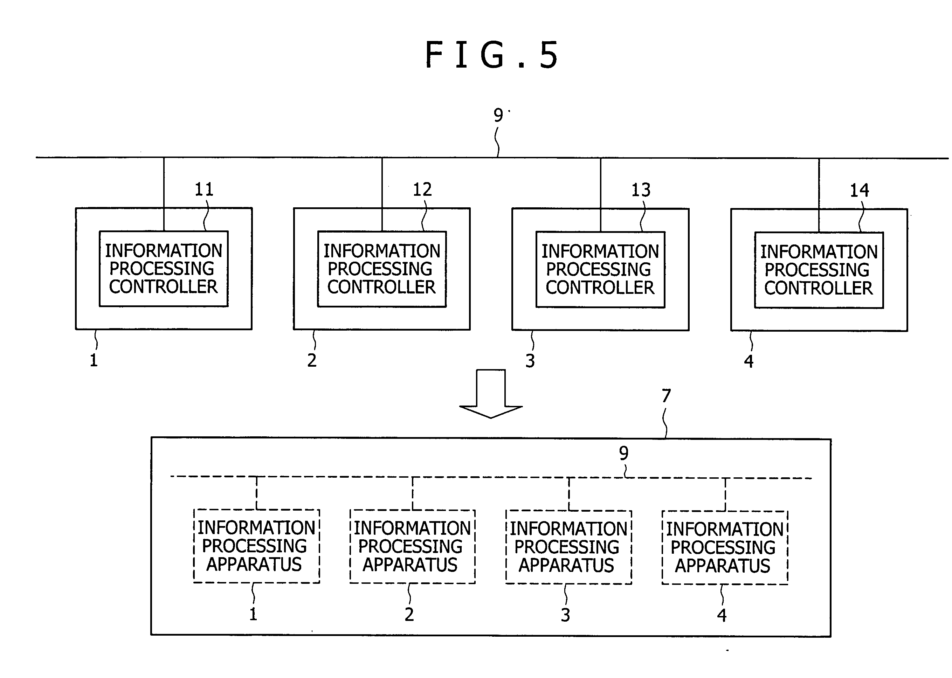

As a result of the distributed processing through use of a software cell, the plural information processing apparatus 1, 2, 3, and 4 connected to the network 9 as seen at the upper stage in FIG. 5 operate as a virtual single information processing apparatus 7 as seen at the lower stage in FIG. 5. However, in order to implement such virtual operation as just described, processes described below must be executed by such a configuration as described below.

### (2-1. Software Configuration of the System and Loading of a Program)

FIG. 6 illustrates a configuration of software to be stored by the main memories 26 of the individual information processing controllers. Referring to FIG. 6, the pieces of software (programs) are recorded in an external recording section 28 connected to the information processing controller before the power supply is made available to the information processing apparatus.

The programs are categorized, depending upon the function or characteristic thereof, into control programs, function programs, and device drivers.

The control programs are provided commonly in the information processing controllers and executed by the main processor 21 in each of the information processing controllers. The control programs include an MS (Master/Slave) manager and a capacity exchange program hereinafter described.

The main processors 21 execute the function programs, and for each information processing apparatus, such function programs as a recording program, a reproduction program, a material search program, and so forth are provided for the information processing controller.

The device drivers are provided for inputting and outputting (transmission and reception) of each information processing controller (information processing apparatus), and such devices as those for broadcast reception, monitor outputting, bit stream inputting/outputting, network inputting/outputting, and so forth, which are suitable for each of the information processing apparatus, are provided for the information processing controller.

When the power supply is made available to an information processing apparatus in a state wherein the information processing apparatus is physically connected to the network 9 by connection of a cable or the like and consequently the information processing apparatus is connected to the network 9 also electrically and functionally, the main processor 21 of the information processing controller of the information processing apparatus loads the programs belonging to the control programs and the programs belonging to the device drivers into the main memory 26.

As a loading procedure of the programs, the main processor 21 first controls the DC 27 to execute a reading out instruction to read out the programs from the external recording section 28 and then controls the DMAC 25 to execute a writing instruction to write the programs into the main memory 26.

The programs belonging to the function programs may be handled such that only a necessary one of the programs is loaded when necessary or otherwise such that all of them are loaded immediately after the main power supply is made available similarly to the programs belonging to the other categories.

The programs belonging to the function programs need not necessarily be recorded in the external recording sections 28 of all of the information processing apparatus connected to the network. However, if they are recorded in an external recording section 28 of any one of the information processing apparatus, they can be loaded into the other information processing apparatus by the method described hereinabove. As a result, the function programs can be executed by the virtual single information processing apparatus 7 as shown at the lower stage of FIG. 5.

As described hereinabove, a function program executed by the main processor 21 sometimes operates cooperatively with a sub processor program processed by a sub processor 23. Therefore, when the main processor 21 reads out a function program from the external recording section 28 and writes the function program into the main memory 26, if any sub processor is to operate cooperatively with the object function program, then the main processor 21 writes also the sub processor program into the same main memory 26 together. In this instance, although a single sub processor program may be to operate cooperatively, a plurality of sub processor programs may possibly be to operate cooperatively. Where a plurality of sub processor programs are to operate cooperatively, all of them are written into the main memory 26.

Each sub processor program written in the main memory 26 is thereafter written into the local storage 24 in the sub processor 23 and operates cooperatively with the function program processed by the main processor 21.

As described hereinabove in connection with the software cell shown in FIG. 3, an identifier, with which a program can be identified uniquely, is allocated as a function program ID to each of the function programs. The function program ID is determined from the date and hour of production, the information processing apparatus ID, and so forth at a stage of production of the function program.

Also each sub processor program has a sub processor program ID allocated thereto so that the sub processor program can be identified uniquely. The sub processor program ID allocated in this manner may be an identifier having some relationship to the function program ID of the function program of the counterpart of the cooperative operation thereof. The example of the identifier is composed of the function program ID as a parent number and a branch number added to the tail end of the function program ID. However, the sub processor program ID may otherwise be an identifier having no relationship to the function program ID of the function program of the counterpart of the cooperative operation.

Anyway, where a function program and a sub processor program should operate cooperatively, it is necessary for each of them to store the program ID of the identifier of the counterpart therein. Also where a function program should operate cooperatively with a plurality of sub processor programs, the function program stores all of the sub processor program IDs of the plural sub processor programs.

The main processor 21 secures, in the main memory 26, an area for storing apparatus information (information relating to the apparatus such as a type, a capacity, and an operation state of the apparatus, resources owned by the apparatus, and so forth) of the information processing apparatus in which the main processor 21 operates, and records the information as an apparatus information table of the information processing apparatus itself. The apparatus information here is information of the information processing apparatus ID and so forth illustrated in FIG. 4.

### (2-2. Determination of the Master/Slave in the System)

In the network system described above, when the main power supply to a certain information processing apparatus is made available, the main processor 21 of the information processing controller of the information processing apparatus loads a master/slave manager (hereinafter referred to as MS manager) into the main memory 26 and executes the master/slave manager.

After the MS manager detects that the information processing apparatus in which the MS manager operates is connected to the network 9, it confirms presence of the other information processing apparatus connected to the same network 9. The "connection" or "presence" here represents that the information processing apparatus is connected to the network 9 not only physically but also electrically and functionally.

The information processing apparatus in which the MS manager itself operates is hereinafter referred to as self apparatus, and any other information processing apparatus is referred to as different apparatus. Also the term pertaining apparatus represents the pertaining information processing apparatus.

A method by which the MS manager confirms presence of a different information processing apparatus connected to the same network 9 is described in the following.

The MS manager produces a software cell that designates the status request command as the DMA command and designates the pertaining information processing apparatus as the sender ID and the response destination ID but does not specify the transmission destination ID. Then, the MS manager transmits the software cell to the network to which the pertaining information processing apparatus is connected, and sets a timer for network connection confirmation. The timeout time of the timer is, for example, 10 minutes.

If a different information processing apparatus is connected to the network system, then the different apparatus receives the software cell of the status request command and transmits a software cell whose DMA command is the status return command and which includes apparatus information of the self apparatus (different apparatus) as the data to an information processing apparatus which is specified by the response destination ID of the received software cell and has issued the status request command. The software cell of the status return command at least includes information for specifying the different apparatus (information processing apparatus ID, information regarding the main processor, information regarding a sub processor, or the line) and the MS status of the different apparatus.

The MS manager of the information processing apparatus, which has issued the status request command, supervises reception of a software cell of the status return command transmitted from the different apparatus on the network until timeout occurs with the timer for network connection confirmation. As a result, if the status return command representative of the MS status = 0 (master apparatus) is received, then the MS status in the apparatus information table of the self apparatus is set to 1. Consequently, the pertaining apparatus becomes a slave apparatus.

On the other hand, if no status return command is received within the time until timeout occurs with the timer for network connection confirmation, or if the status return command representative of the MS status = 0 (master apparatus) is not received, then the MS status in the apparatus information table of the self apparatus is set to 0. Consequently, the pertaining apparatus becomes a master apparatus.

In short, if a new information processing apparatus is connected to the network 9 in a state wherein no apparatus is connected to the network 9 or in another state wherein a master apparatus does not exist on the network 9, then the pertaining apparatus is automatically set as a master apparatus. On the other hand, if a new information processing apparatus is connected to the network 9 in a further state wherein a master apparatus exists already on the network 9, then the pertaining apparatus is automatically set as a slave apparatus.

In any of the master apparatus and slave apparatus, the MS manager periodically transmits the status request command to the different apparatus on the network 9 to inquire about the status information to supervise the situation of the different apparatus. As a result, when the connection state of the network 9 undergoes a variation such as when the main power supply to an information processing apparatus connected to the network 9 is cut or an information processing apparatus is disconnected from the network 9 and consequently the status return command is not returned from the particular different apparatus within a predetermined period of time set for the discrimination in advance, the information is conveyed to a capacity exchange program hereinafter described.

### (2-3. Acquisition of Apparatus Information through Capacity Exchange)

If the main processor 21 receives, from the MS manager, a notification of an inquiry about a different apparatus on the network 9 and completion of setting of the MS status of the self apparatus, then it executes a capacity exchange program.

The capacity exchange program acquires, if the self apparatus is a master apparatus, apparatus information of all different apparatus connected to the network 9, that is, apparatus information of all slave apparatus.

The acquisition of apparatus information of a different apparatus can be performed such that the DMA command produces and transmits a software cell of the status request command to the different apparatus and then receives a software cell whose DMA command is the status return command and includes apparatus information of the different apparatus as the data from the different apparatus.

The capacity exchange program secures an area for storing apparatus information of all different apparatus (all slave apparatus) connected to the network 9 in the main memory 26 of the self apparatus and stores the information as apparatus information tables of the different apparatus (slave apparatus) similarly to the apparatus information table of the self apparatus as the master apparatus. In other words, the apparatus information of all of the information processing apparatus connected to the network 9 including the self apparatus is stored as apparatus information tables in the main memory 26 of the master apparatus.

On the other hand, if the self apparatus of the capacity exchange program is a slave apparatus, then the capacity exchange program acquires the apparatus information of all of the different apparatus connected to the network 9, that is, the apparatus information of the master apparatus and all of the slave apparatus other than the self apparatus, and records the information processing apparatus IDs and the MS statuses included in the apparatus information into the main memory 26 of the self apparatus. In other words, in the main memory 26 of each slave apparatus, the apparatus information of the self apparatus is recorded as an apparatus information table, and the information processing apparatus IDs and the MS statuses of all of the master apparatus and the slave apparatus connected to the network 9 other than the self apparatus are recorded as different apparatus information tables.

Further, in any of the master apparatus and the slave apparatus, when the capacity exchange program receives a notification that an information processing apparatus is newly connected to the network 9 from the MS manager as described above, it acquires apparatus information of the information processing apparatus and registers the apparatus information into the main memory 26 as described hereinabove.

It is to be noted that the MS manager and the capacity exchange program may be executed not by the main processor 21 but by any sub processor 23. Further, the MS manager and the capacity exchange program preferably are resident programs that operate normally while the main power supply to the information processing apparatus is available.

### (2-4. When an Information Processing Apparatus is Disconnected from the Network)

In any of the master apparatus and the slave apparatus, if the capacity exchange program is notified from the MS manager that the main power supply to an information processing apparatus connected to the network 9 is disconnected or an information processing apparatus is disconnected from the network 9, it deletes the apparatus information table of the information processing apparatus from the main memory 26 of the self apparatus.

Further, if the information processing apparatus disconnected from the network 9 is the master apparatus, then another master apparatus is determined newly by the following method.

In particular, for example, each of those information processing apparatus that are not disconnected from the network 9 replaces the information processing apparatus IDs of the self apparatus and the different apparatus into numerical values and compares the information processing apparatus ID of the self apparatus with the information processing apparatus IDs of the different apparatus. If the information processing apparatus ID of the self apparatus exhibits the lowest value among the information processing apparatus that are not disconnected from the network 9, then the slave apparatus changes itself to the master apparatus and sets the MS status to zero. Then, it operates as the master apparatus and acquires and records the apparatus information of all of the different apparatus (slave apparatus) connected to the network 9 into the main memory 26 as described hereinabove.

### (2-5. Distributed Processing between Information Processing Apparatus Based on Apparatus Information)

In order to allow a plurality of information processing apparatus 1, 2, 3, and 4 connected to the network 9 to operate as a virtual single information processing apparatus 7 as shown at the lower stage of FIG. 5, it is necessary for the master apparatus to grasp an operation of a user and operation states of the slave apparatus.

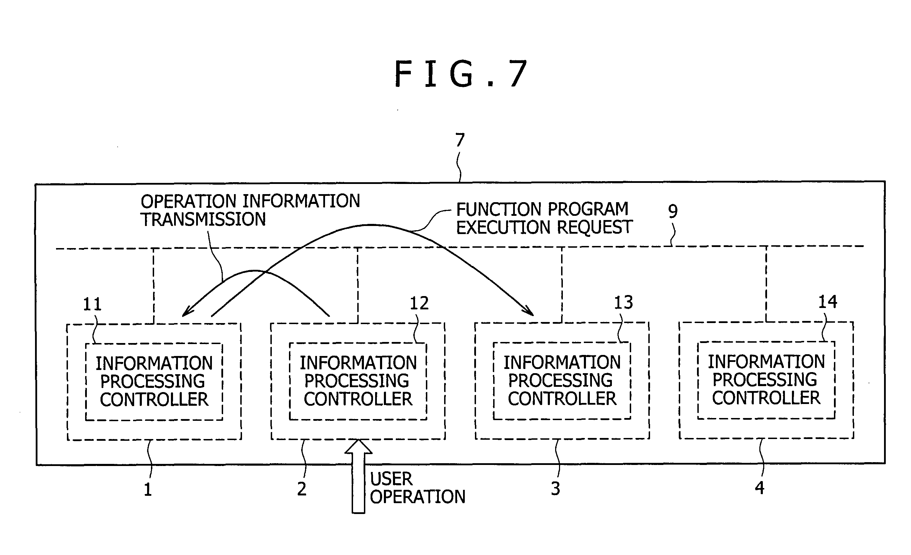

FIG. 7 shows four information processing apparatus in a state wherein they operate as a virtual single information processing apparatus 7. It is assumed that the information processing apparatus 1 acts as the master apparatus while the information processing apparatus 2, 3, and 4 act as slave apparatus A, B, and C, respectively.

When a user operates any of the information processing apparatus connected to the network 9, if the object of the operation is the master apparatus 1, then the operation information then is grasped directly by the master apparatus 1. On the other hand, if the object of the operation is a slave apparatus, then the operation information then is transmitted from the operated slave apparatus to the master apparatus 1. In other words, irrespective of whether the object of operation of the user is the master apparatus 1 or one of the slave apparatus, the master apparatus 1 always grasps the operation information. Transmission of the operation information is performed, for example, using a software cell whose DMA command is the operation information transmission command.

Then, the main processor 21-1 included in the information processing controller 11 in the master apparatus 1 selects a function program to be executed in accordance with the operation information. In this instance, if necessary, the main processor 21-1 included in the information processing controller 11 in the master apparatus 1 loads the function program from the external recording sections 28-1 and 28-2 of the self apparatus into the main memory 26-1 using the method described hereinabove. However, the function program may otherwise be transmitted from a different information processing apparatus (slave apparatus) to the master apparatus 1.

The function program defines required specifications regarding apparatus such as an information processing apparatus type ID, a processing capacity of the main processor or a sub processor, a main memory utilization capacity, and conditions relating to an external recording section as represented as various types of information in FIG. 4, which are required for each execution unit.

The main processor 21-1 included in the information processing controller 11 in the master apparatus 1 reads out such requested specifications required by the individual function programs. Further, the main processor 21-1 refers to the apparatus information tables recorded in the main memory 26-1 by the capacity exchange program in advance to read out the apparatus information of the individual information processing apparatus. The apparatus information here signifies the items of information including the item of the information processing apparatus ID and the succeeding items illustrated in FIG. 4 and is information relating to the main processor, sub processors, main memory, and external recording sections.

The main processor 21-1 included in the information processing controller 11 in the master apparatus 1 successively compares the apparatus information of the information processing apparatus connected to the network 9 with the required specifications necessary for execution of the function program.

For example, if the function program requires a recording function, then the main processor 21-1 specifies and extracts only those information processing apparatus, which have a recording function, based on the information processing apparatus type IDs. Further, the main processor 21-1 specifies that one of the slave apparatus that can assure the processing capacity of the main processor or a sub processor necessary to execute the processing program, the main memory utilization capacity, and conditions regarding an external recording section as an execution request candidate apparatus. Here, if a plurality of execution request candidate apparatus are specified, then one of the execution request candidate apparatus is specified and selected.

After a slave apparatus to which an execution request is to be issued is specified, the main processor 21-1 included in the information processing controller 11 in the master apparatus 1 updates the apparatus information table with regard to the specified slave apparatus recorded in the main memory 26-1 included in the information processing controller 11 in the self apparatus.

Further, the main processor 21-1 included in the information processing controller 11 in the information processing apparatus 1 produces a software cell, which includes the function program execution command as the DMA commands, and sets information of a necessary sub processor and the sandbox size (refer to FIG. 3) regarding the function program to the cell interface of the software cell. Then, the main processor 21-1 transmits the resulting software cell to the slave apparatus, which is requested to execute the function program.

The slave apparatus requested to execute the function program executes the function program and updates the apparatus information table of the self apparatus. In this instance, if necessary, the main processor 21 included in the information processing controller in the slave apparatus loads the function program and a sub processor program or programs, which should operate cooperatively with the function program, from an external recording section 28 of the self apparatus into the main memory 26 using the method described hereinabove.

The system may be configured such that, if the necessary function program or a sub processor program or programs, which should operate cooperatively with the function program, is not recorded in any of the external recording sections 28 of the slave apparatus requested to execute the function program, then a different information processing apparatus transmits the function program and the sub processor program or programs to the slave apparatus requested to execute the function program.

Also it is possible for the sub processor program or programs to be executed by a different information processing apparatus making use of the load command and the kick command described hereinabove.

After the execution of the function program comes to an end, the main processor 21 included in the information processing controller in the slave apparatus having executed the function program transmits an execution end notification to the main processor 21-1 included in the information processing controller 11 in the master apparatus 1, and updates the apparatus information table of the self apparatus. The main processor 21-1 included in the information processing controller 11 in the master apparatus 1 receives the end notification and updates the apparatus information table of the slave apparatus having executed the function program.

The main processor 21-1 included in the information processing controller 11 in the master apparatus 1 may possibly select the self apparatus as an information processing apparatus, which can execute the function program, from a result of the reference to the apparatus information tables of the self apparatus and the different apparatus. In this instance, the master apparatus 1 executes the function program.

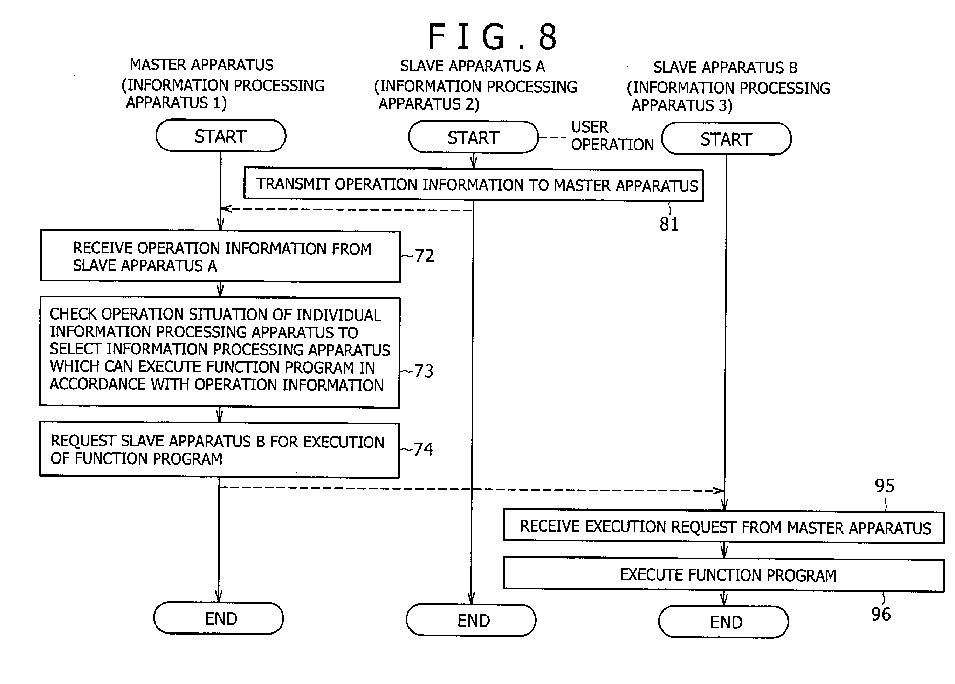

Distributed processing where a user operates, in the example illustrated in FIG. 7, the slave apparatus A (information processing apparatus 2) and the different slave apparatus B (information processing apparatus 3) executes a function program in response to the operation is described with reference to FIG. 8.

In the example illustrated in FIG. 8, when the user operates the slave apparatus A, distributed processing of the entire network system including the slave apparatus A is started, and the slave apparatus A first transmits operation information then to the master apparatus 1 at step 81.

The master apparatus 1 receives the operation information at step 72 and checks the operation states of the information processing apparatus from the apparatus information tables of the self apparatus and the different apparatus recorded in the main memory 26-1 of the self apparatus to select an information processing apparatus, which can execute a function program corresponding to the received operation information at step 73. In the example illustrated in FIG. 8, the slave apparatus B is selected.

Then, the master apparatus 1 issues a request for execution of the function program to the selected slave apparatus B at step 74.

The slave apparatus B receives the execution request at step 95 and executes the function program whose execution is requested at step 96.

In this manner, if a user operates only one of the information processing apparatus, then it can cause the plural information processing apparatus 1, 2, 3, and 4 to operate as a virtual single information processing apparatus 7 without operating any other one of the information processing apparatus. (2-6. Particular Examples of the Information Processing Apparatus and the System)

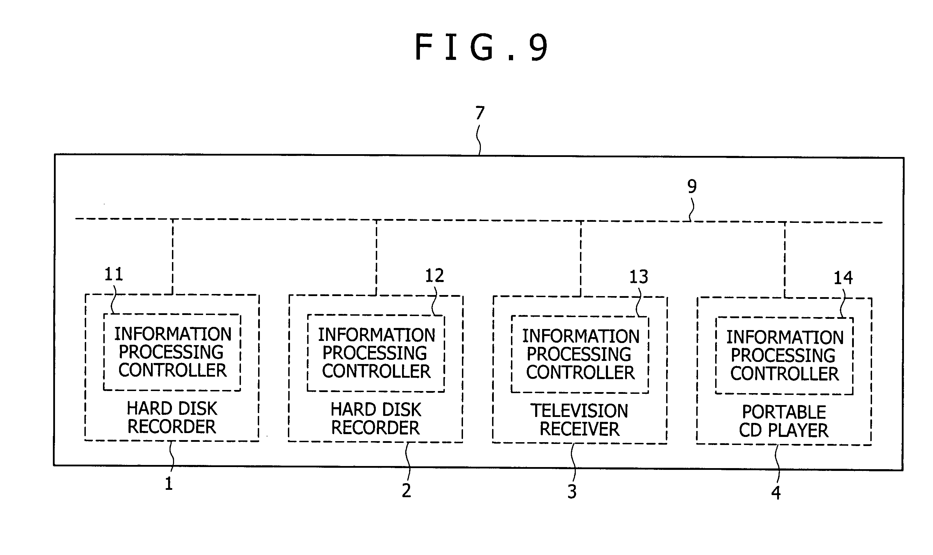

Each of the information processing apparatus 1, 2, 3, and 4 connected to each other through the network 9 may basically have any configuration only if information processing is performed by such an information processing controller 11, 12, 13, or 14 as described hereinabove. FIG. 9 shows an example of a configuration of the information processing apparatus.

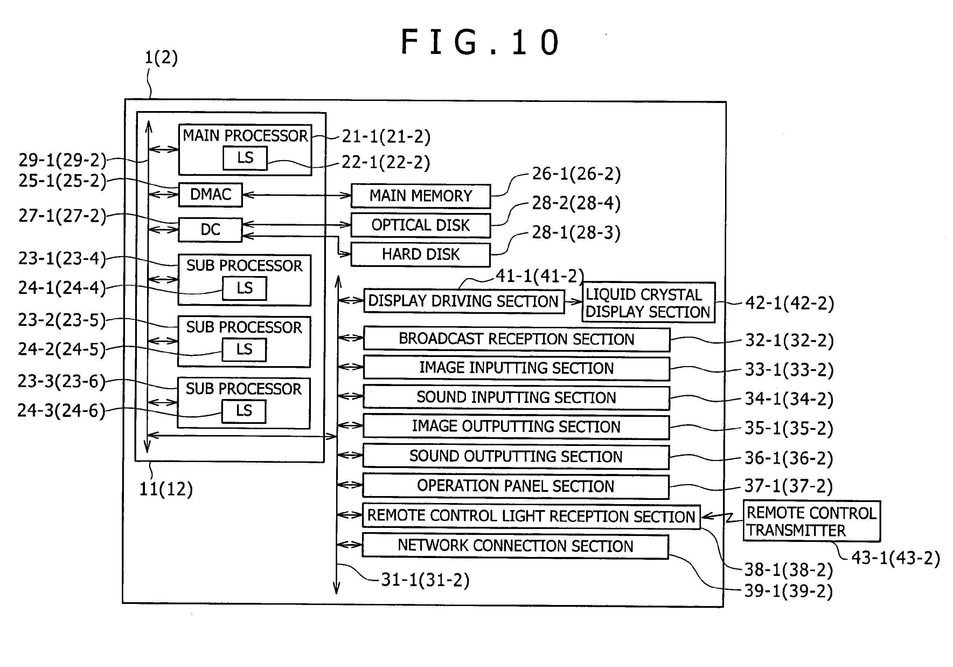

In the example shown, the information processing apparatus 1 which includes the information processing controller 11 is a hard disk recorder. FIG. 10 shows a hardware configuration and a software configuration of the hard disk recorder shown in FIG. 9, respectively. Referring to FIG. 10, the information processing apparatus 1 shown includes, as the hardware configuration thereof, a built-in hard disk serving as the external recording section 28-1 shown in FIG. 1. The information processing apparatus 1 further includes the external recording section 28-2 shown in FIG. 1 into which an optical disk such as DVD±R/RW, CD±R/RW, a Bluray-Disc (registered trademark) and so forth can be loaded. The information processing apparatus 1 further includes a broadcast reception section 32-1, an image inputting section 33-1, a sound inputting section 34-1, an image outputting section 35-1, a sound outputting section 36-1, an operation panel section 37-1, a remote control light reception section 38-1 and a network connection section 39-1 connected to a bus 31-1 which is in turn connected to the bus 29-1 of the information processing controller 11.

The broadcast reception section 32-1, image inputting section 33-1 and sound inputting section 34-1 receive a broadcasting signal or an image signal and a sound signal from the outside of the information processing apparatus 1, convert the received signal or signals into digital data of a predetermined format, and signals the digital data to the bus 31-1 so as to be processed by the information processing controller 11. The image outputting section 35-1 and the sound outputting section 36-1 process image data and sound data signaled from the information processing controller 11 to the bus 31-1 and signal the image data and the sound data as they are or after converted into analog signals to the outside of the information processing apparatus 1. The remote control light reception section 38-1 receives a remote control infrared signal from a remote control transmitter 43-1.

The liquid crystal display section 42-1 displays an operation situation of the information processing apparatus 1 in the form of a hard disk recorder and displays a connection situation of the network 9 and a state of the entire network system as hereinafter described.

Also the information processing apparatus 2 which includes the information processing controller 12 shown in FIG. 9 is a hard disk recorder and is configured similarly to the information processing apparatus 1 as seen in FIG. 10 in which reference numerals are applied in parentheses.

The information processing apparatus 1 and 2 each in the form of a hard disk recorder include, as the software configuration, the MS manager and the capacity exchange program as the control programs as illustrated in FIG. 6. Further, the information processing apparatus 1 and 2 include programs for image and sound recording, image and sound reproduction, material search, and program recording reservation as the function programs. Furthermore, the information processing apparatus 1 and 2 include programs for broadcast reception, image inputting, sound inputting, image outputting, sound outputting, external recording section inputting/outputting, and network inputting/outputting as the device drivers.

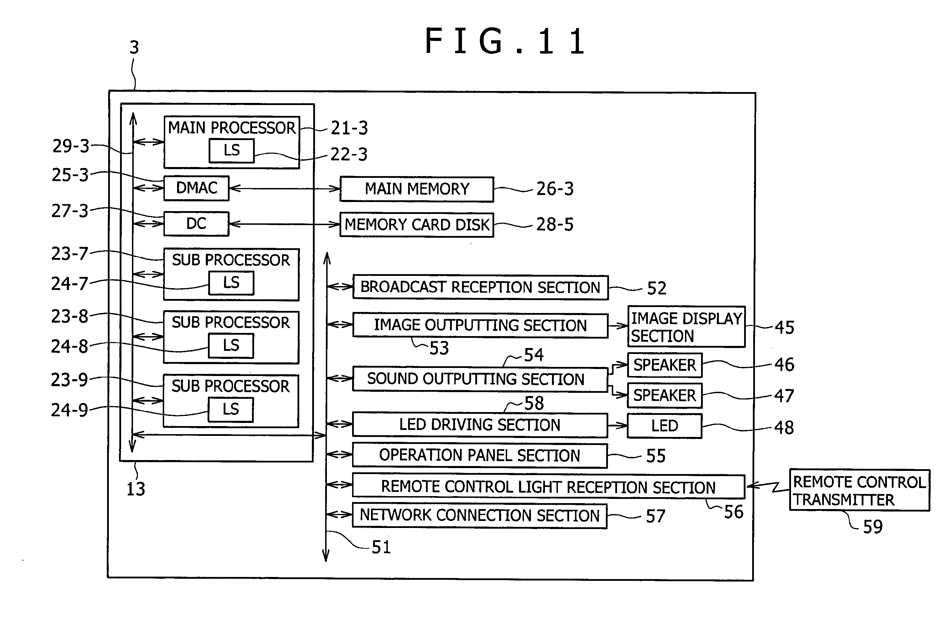

The information processing apparatus 3 shown in FIG. 9 which includes the information processing controller 13 has such a hardware configuration as shown in FIG. 11. Referring to FIG. 11, the information processing apparatus 3 includes the external recording section 28-5 shown in FIG. 1 into which a memory card disk can be loaded. The information processing apparatus 3 further includes a broadcast reception section 52, an image outputting section 53, a sound outputting section 54, an operation panel section 55, a remote control light reception section 56, a network connection section 57, and an LED driving section 58 connected to a bus 51 which is in turn connected to the bus 29-3 of the information processing controller 13. An image display section 45 such as a liquid crystal display apparatus or a plasma display apparatus is connected to the image outputting section 53, and left and right speakers 46 and 47 are connected to the sound outputting section 54. Further, an LED section 48 is connected to the LED driving section 58.

The broadcast reception section 52 receives a broadcasting signal, converts an image signal and a sound signal of the broadcasting signal individually into digital data of predetermined formats, and signals the digital data to the bus 51 so as to be processed by the information processing controller 13. The image outputting section 53 processes the image data signaled from the information processing controller 13 to the bus 51 and outputs resulting image data to the image display section 45. The sound outputting section 54 processes the sound data signaled from the information processing controller 13 to the bus 51 and outputs resulting sound data to the speakers 46 and 47. The remote control light reception section 56 receives a remote control infrared signal from a remote control transmitter 59.

The LED section 48 indicates a connection state of the network 9 or a state of the entire network system as hereinafter described.

It is to be noted that the information processing controller 13 whose internal configuration is not shown in FIG. 1 includes a main processor 21-3, sub processors 23-7, 23-8, and 23-9, a direct memory access controller (DMAC) 25-3, a disk controller (DC) 27-3, and a bus 29-3. The main processor 21-3 includes a local storage (LS) 22-3, and the sub processors 23-7, 23-8, and 23-9 include local storages (LS) 27-7, 24-8, and 24-9, respectively.

The information processing apparatus 3 in the form of a television receiver includes, as the software configuration, the MS manager and the capacity exchange program as the control programs as illustrated in FIG. 6. Further, the information processing apparatus 3 includes programs for image and sound processing and so forth as the function programs and includes programs for broadcast reception, image outputting, sound outputting, network inputting/outputting, and so forth as the device drivers.

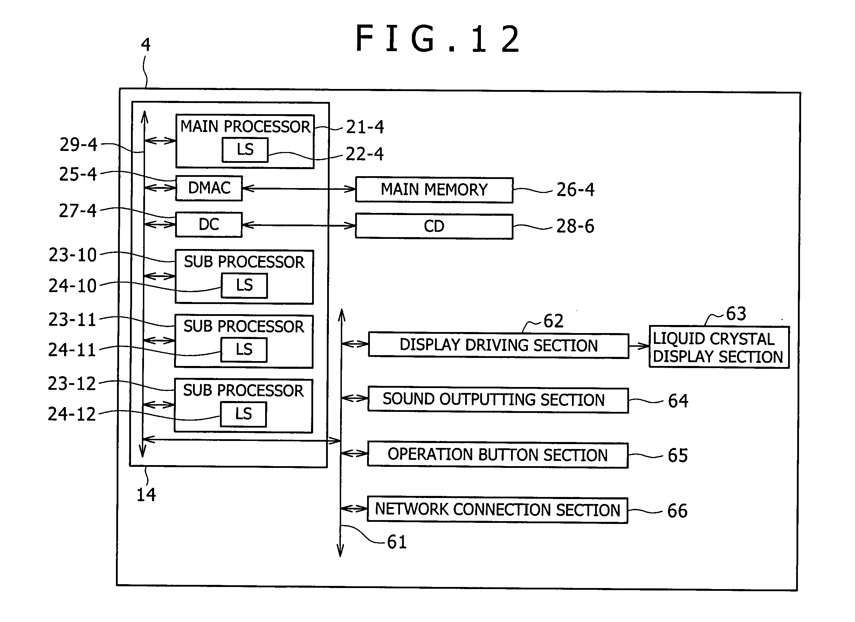

The information processing apparatus 4 shown in FIG. 9, which includes the information processing controller 14, is a portable CD player. FIG. 12 shows a hardware configuration of the information processing apparatus 4 in the form of a portable CD player. Referring to FIG. 12, the information processing apparatus 4 includes the external recording section 28-6 shown in FIG. 1 into which a CD (Compact Disc) can be loaded. The information processing apparatus 4 further includes a display driving section 62, a sound outputting section 64, an operation button section 65 and a network connection section 66 connected to a bus 61 which is in turn connected to the bus 29-4 of the information processing controller 14. A liquid crystal display section 63 is connected to the display driving section 62.

The liquid crystal display section 63 displays song titles and so forth for selection operation of the information processing apparatus 4 in the form of a portable CD player and displays a connection state of the network 9 or a state of the entire network system.

It is to be noted that the information processing controller 14 whose internal configuration is not shown in FIG. 1 includes a main processor 21-4, sub processors 23-10, 23-11, and 23-12, a direct memory access controller (DMAC) 25-4, a disk controller (DC) 27-4, and a bus 29-4. The main processor 21-4 includes a local storage 22-4, and the sub processors 23-10, 23-1,1 and 23-12 include local storages 24-10, 24-11, and 24-12, respectively.

The information processing apparatus 4 in the form of a portable CD player includes, as the software configuration, the MS manager and the capacity exchange program as the control programs as illustrated in FIG. 6. Further, the information processing apparatus 4 includes programs for music reproduction and so forth as the function programs and includes programs for sound outputting, CD control and network inputting/outputting as the device drivers.

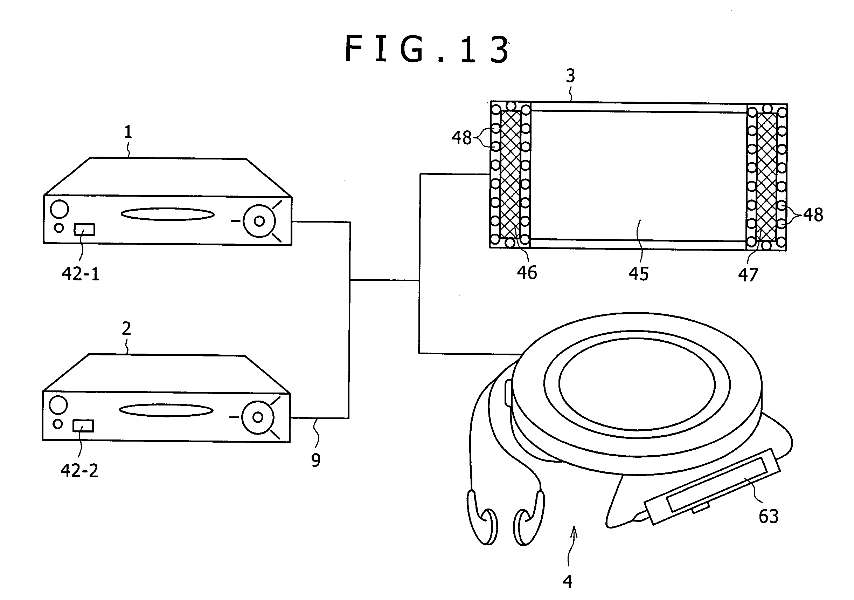

The network system having such a configuration as described above with reference to FIG. 9 has such an appearance as shown in FIG. 13.

The liquid crystal display sections 42-1 and 42-2 are provided on the front of the information processing apparatus 1 and 2 each in the form of a hard disk recorder, respectively. Meanwhile, the speakers 46 and 47 are provided on the left and right sides of the image display section 45 of the information processing apparatus 3 in the form of a television receiver, and the LED section 48 is provided around the speakers 46 and 47 on the information processing apparatus 3. Further, the liquid crystal display section 63 is provided on the information processing apparatus 4 in the form of a portable CD player. The LED section 48 includes a plurality of LEDs as hereinafter described.

It is assumed that, in the system shown in FIGS. 9 to 13, the information processing apparatus 1, 3, and 4 are connected to the network 9, and the information processing apparatus 1 is set as the master apparatus (MS status = 0) and the information processing apparatus 3 and 4 are set as slave apparatus (MS status = 1).

If, in this state, the information processing apparatus 2 is newly connected to the network 9, then the MS manager which is executed in the main processor 21-2 included in the information processing controller 12 in the information processing apparatus 2 inquires the other information processing apparatus 1, 3 and 4 about the MS status and recognizes that the information processing apparatus 1 already exists as the master apparatus. Thus, the MS manager sets the self apparatus (information processing apparatus 2) as a slave apparatus (MS status = 1). Meanwhile, the information processing apparatus 1 set as the master apparatus collects the apparatus information of the apparatus including the newly added information processing apparatus 2 and updates the apparatus information tables in the main memory 26-1 based on the collected apparatus information.

Operation of the network system of FIG. 9 when, in this state, the user operates the information processing apparatus (television receiver) 3, which is a slave apparatus, for recording reservation of a broadcast program for two hours is described below.

In this instance, the information processing apparatus 3, which is a slave apparatus, accepts inputting of recording reservation information including information of recording start time, recording end time, a recording object broadcast channel, and a recording picture quality, and produces a software cell including the recording reservation information and the recording reservation command as the DMA command. Then, the information processing apparatus 3 transmits the produced software cell to the information processing apparatus (hard disk recorder) 1 which is the master apparatus.

The main processor 21-1 included in the information processing controller 11 in the information processing apparatus 1 which receives the software cell whose DMA command is the recording reservation command reads out the recording reservation command and refers to the apparatus information tables in the main memory 26-1 to specify an information processing apparatus which can execute the recording reservation command.

First, the main processor 21-1 reads out the information processing apparatus type IDs of the information processing apparatus 1, 2, 3 and 4 included in the apparatus information tables to extract those information processing apparatus which can execute a function program corresponding to the recording reservation command. Here, the information processing apparatus 1 and 2 having the information processing apparatus type ID indicative of the recording function are specified as candidate apparatus while the information processing apparatus 3 and 4 are excepted from candidate apparatus.

The main processor 21-1 included in the information processing controller 11 in the information processing apparatus 1 refers to the apparatus information tables to read out information regarding the apparatus such as the processing capacities of the main processors and sub processors and information regarding the main memories of the information processing apparatus 1 and 2, and discriminates whether or not the information processing apparatus 1 and 2 satisfy the required specifications necessary for execution of a function program corresponding to the recording reservation command. It is assumed here that both of the information processing apparatus 1 and 2 satisfy the required specifications necessary for execution of a function program corresponding to the recording reservation command.

In this instance, it is assumed that the free capacity of the external recording section 28-1 of the information processing apparatus 1 is 10 minutes when it is converted into a recording period of time and the free capacity of the hard disk 28-3 of the information processing apparatus 2 is 20 hours when it is converted into a recording period of time.

In this instance, the main processor 21-1 included in the information processing controller 11 in the information processing apparatus 1 which is the master apparatus specifies the information processing apparatus which can secure the free capacity for two hours necessary for execution of the recording reservation command as a slave apparatus of a destination of an execution request.

As a result, only the information processing apparatus 2 is selected as the execution request destination slave apparatus, and the main processor 21-1 included in the information processing controller 11 in the information processing apparatus 1 which is the master apparatus transmits the recording reservation command including the recording reservation information transmitted from the information processing apparatus 3 operated by the user to the information processing apparatus 2 to request the information processing apparatus 2 for recording reservation of the broadcast program for two hours described hereinabove.

Then, the main processor 21-2 included in the information processing controller 12 in the information processing apparatus 2 analyzes the recording reservation command and loads a function program necessary for recording from the hard disk 28-3, which is an external recording section, into the line memory 26-2. Then, the main processor 21-2 executes recording in accordance with the recording reservation information. As a result, image and sound data of the broadcast program for two hours reserved for recording are recorded on the hard disk 28-3 of the information processing apparatus 2.

In this manner, also in the network system shown in FIGS. 9 to 13, the user can cause the plural information processing apparatus 1, 2, 3 and 4 to operate as a virtual single information processing apparatus 7 only by operating only one of the information processing apparatus without operating any other one of the information processing apparatus.

### [3. Presentation 1 of the Situation of the Network System]

According to the system described above, the user cannot easily recognize from the appearance of the system that a plurality of information processing apparatus construct the network system or that a plurality of information processing apparatus are operating cooperatively.

Therefore, embodiments of the present invention make it possible for a user to recognize readily and with certainty from an appearance of a system that a plurality of information processing apparatus construct the network system or that a plurality of information processing apparatus are operating cooperatively as described below.

### (3-1. System Configuration)

In the system shown in FIGS. 9 to 13, the liquid crystal display sections 42-1 and 42-2 are provided for the information processing apparatus 1 and 2 each in the form of a hard disk recorder, respectively, and the LED section 48 is provided for the information processing apparatus 3 in the form of a television receiver while the liquid crystal display section 63 is provided for the information processing apparatus 4 in the form of a portable CD player. The LED section 48 includes a plurality of sets of, for example, a green LED, a red LED, and a blue LED around the speakers 46 and 47.

Further, each of the information processing apparatus 1, 2, 3, and 4 has a function of measuring the date and hour (day and time), and those of the information processing apparatus 1, 2, 3, and 4, which are connected to each other by the network 9, are controlled by one of them which is set as a master apparatus so that they have common date and hour data.

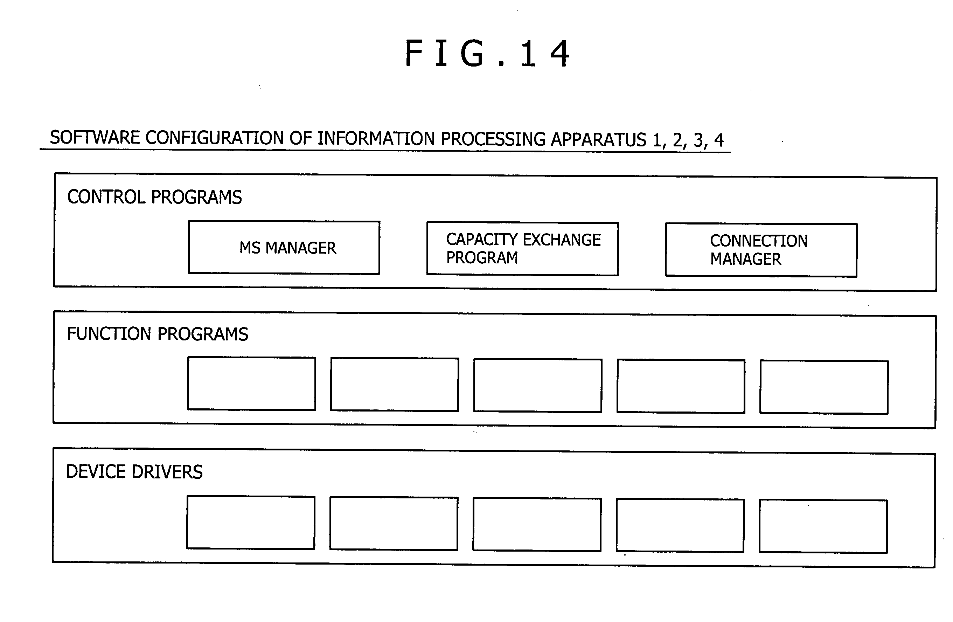

The information processing apparatus 1, 2, 3, and 4 have such a software configuration as illustrated in FIG. 14. Referring to FIG. 14, the information processing apparatus 1, 2, 3, and 4 include a connection manager in addition to the MS manager and the capacity exchange program as the control programs, and individually include such function programs and device drives as described hereinabove.

The connection manager is started after a capacity exchange (acquisition of apparatus information of a self apparatus and the other apparatus by each of the master apparatus and slave apparatus) by the capacity exchange program after an MS status (0 for the master apparatus and 1 for each slave apparatus) is set by the MS manager. Then, the connection manager produces flickering display information as presentation information based on the apparatus information acquired by the capacity exchange and causes the light emitting display sections of the information processing apparatus, that is, in the example of FIGS. 9 to 13, the liquid crystal display sections 42-1 and 42-2 of the information processing apparatus 1 and 2, the LED section 48 of the information processing apparatus 3, and the liquid crystal display section 63 of the information processing apparatus 4, to display flickering based on the flickering display information thereby to present a connection situation of the network 9 or a state of the entire network system to the user.

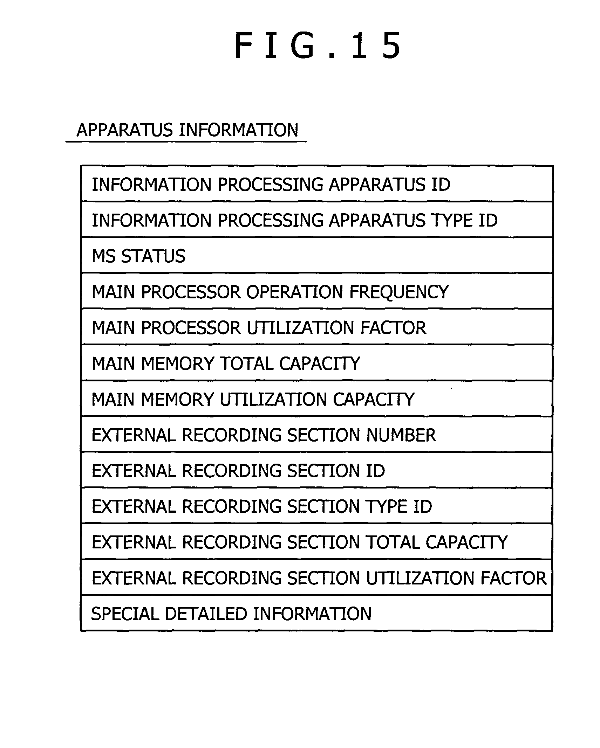

The apparatus information for presentation such as the connection situation is various kinds of information including the kinds of information beginning with the information processing apparatus ID illustrated in FIG. 4 except information relating to sub processors such as the sub processor number and the sub processor status and additionally including special detailed information as occasion demands as seen in FIG. 15.

The special detailed information is information indicative of the number of those information processing apparatus which are connected to the network 9 or, where two or more information processing apparatus are connected to the network 9, information indicating that the plural information processing apparatus are operating cooperatively, and so forth. The special detailed information is produced from apparatus information other than the apparatus information illustrated in FIG. 15.

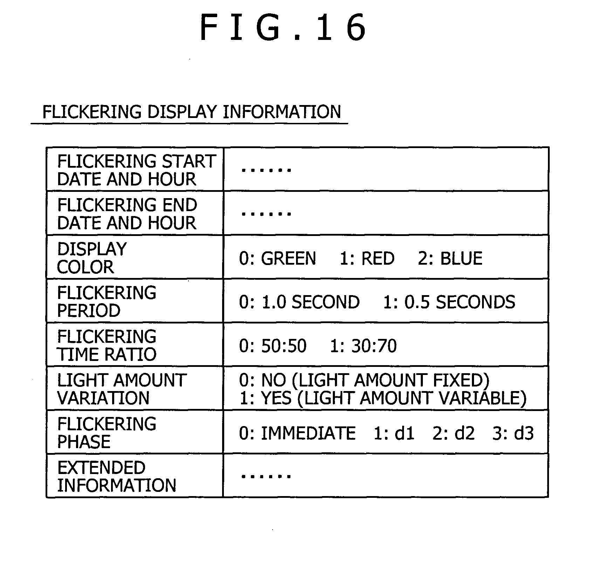

The flickering display information produced from the apparatus information for presentation includes, for example, as seen in FIG. 16, flickering start date and hour, flickering end date and hour, display color, flickering period, flickering time ratio, light amount variation, flickering phase, and extended information.

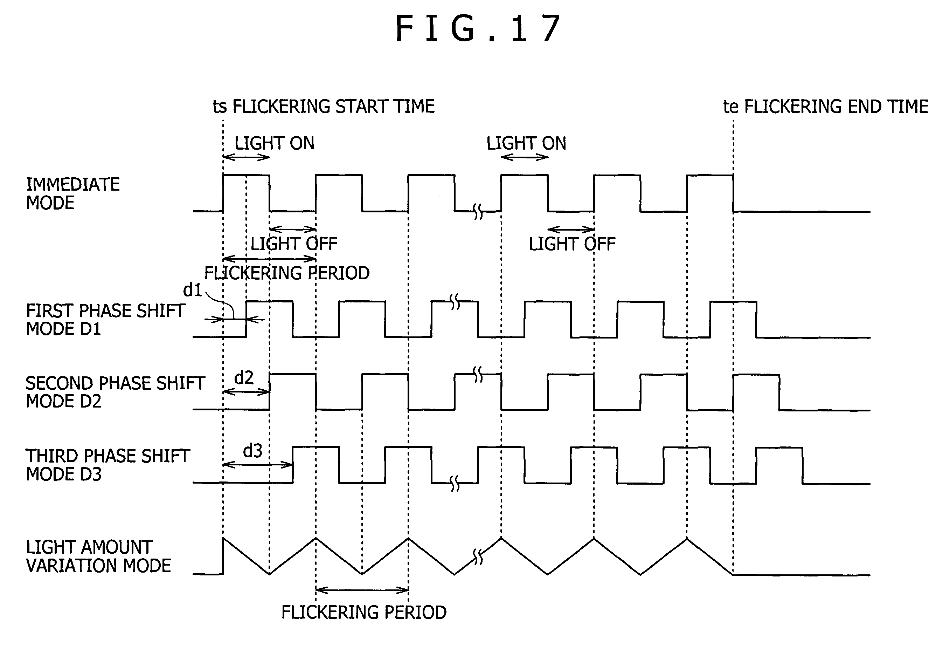

The flickering start date and hour and the flickering end date and hour indicate to perform flickering display for such a period of time from time ts to time te as seen in FIG. 17. However, in place of the flickering end date and hour, the time width of the flickering period may be indicated like 10 seconds from the flickering start date and hour.

The display color (lighting color) provides a plurality of color options such that one of colors such as green, red, and blue is selectively designated as hereinafter described.

The flickering period is the sum of a light-on time period and a light-off time period as seen in FIG. 17, and one of a plurality of options such as 1.0 second and 0.5 second is selectively designated as such.

The flickering time ratio is a ratio of the light-on time period and the light-off time period as seen in FIG. 17, and one of a plurality of options such as 50:50 and 30:70 is selectively designated.

The light amount variation indicates whether or not the amount of light to be used for illumination should be varied within the light-on time period. The light amount variation provides a light amount fixed mode and a light mount variation mode. In the light amount fixed mode, the light amount for illumination is fixed as denoted by an immediate mode or a phase shift mode in FIG. 17. In the light mount variation mode, the light amount gradually decreases from its maximum value to zero and then gradually increases from zero to the maximum value within one flickering period. One of the light amount fixed mode and the light amount variation mode is selectively designated as hereinafter described.

However, in such a light amount variation mode as illustrated in FIG. 17, actually the light-off time within which the amount of light is zero is just a moment and does not provide such a flickering time ratio of 50:50 as mentioned hereinabove. However, the flickering time ratio in the light amount variation mode is defined such that the period of time within which the light amount gradually decreases from the maximum value to zero is determined as the light-off time period and the period of time within which the light amount gradually increases from zero to the maximum value is determined as the light-on time period. Alternatively, the period within which the light amount is equal to or greater than 1/2 the maximum value is determined as the light-on time and the period within which the light amount is smaller than 1/2 the maximum value is determined as the light-off time period. Then, the flickering time ratio defined in this manner is set fixedly to 50:50.

The flickering phase in the flickering display information of FIG. 16 indicates whether flickering display is to be started immediately at or after a delay for a certain interval of time from the flickering start date and hour designated as described above. The flickering phase provides, for example, such four options as illustrated in FIG. 17 including an immediate mode (no delay time is involved), a first phase shift mode D1 (the delay time is time d1 which is 1/4 the flickering period), a second phase shift mode D2 (the delay time is time d2 which is 1/2 the flickering period), and a third phase shift mode D3 (the delay time is time d3 which is 3/4 the flickering period). One of the four modes is selected for each information processing apparatus as hereinafter described.

The extended information in the flickering display information
(u) indicates the number of times of flickering within the flickering period from time ts to time te in FIG. 17 in response to the number of information processing apparatus connected to the network 9,
(v) indicates that a plurality of colors designated by the user in advance or a plurality of colors selected at random by the connection manager are used as display colors and flickering display is performed in the order of colors designated by the user or in the order of colors determined at random by the connection manager, or
indicates some other information.

The system described above is configured such that, with regard to the display colors of the flickering display, the user can selectively set in advance
(a) that a particular one color is designated,
(b) that, although one color is designated, selection of the color is left to the system (connection manager),
(c) that a plurality of particular colors are designated and also the order of the colors to be lit is designated,
(d) that, although a plurality of particular colors are designated, determination of the order of the colors to be lit is left to the system, or
(e) that, although more than two colors are designated, selection of the colors and determination of the order of the colors to be lit are left to the system.

In the case of (a) or (b) above, the connection manager describes the particular color designated by the user or the color selected at random by the connection manager itself as the display color in the flickering display information in FIG. 16. However, in the case of (c), (d) or (e), the connection manager describes the plural colors and the order of the colors to be lit designated by the user or selectively determined at random by the connection manner itself.

### (3-2. Presentation Method)

A method for production of the flickering display information described above and flickering display based on the flickering display information is described in connection with a case wherein, while the information processing apparatus 1, 3 and 4 are connected to the network 9 and the information processing apparatus 1 is set as a master apparatus while the information processing apparatus 3 and 4 are set as slave apparatus as described hereinabove, the information processing apparatus 2 is connected newly to the network 9.

At this time, the information processing apparatus 2 newly added sets the information processing apparatus 2 itself as a slave apparatus, and the information processing apparatus 1 set as the master apparatus collects apparatus information of the information processing apparatus including the newly added information processing apparatus 2 and updates the apparatus information table in the main memory 26-1 with the collected apparatus information.

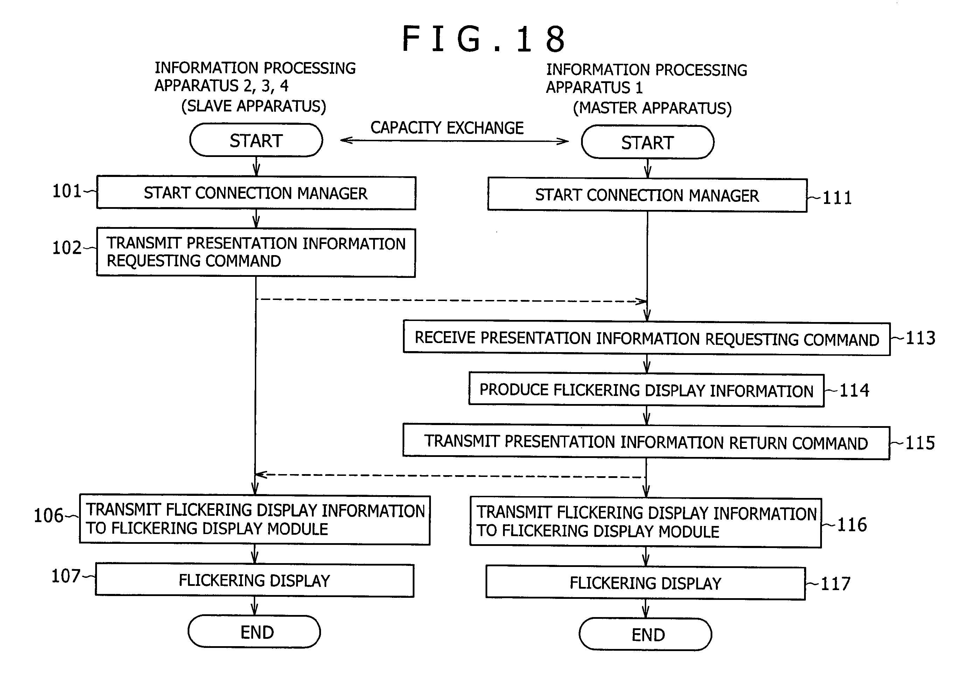

Thereafter, the main processor 21 of each of the information processing apparatus 1, 2, 3 and 4 starts the connection manager to execute such a presentation process as illustrated in FIG. 18.

Referring to FIG. 18, after the capacity exchange (updating of the apparatus information table), the information processing apparatus 2, 3 and 4 each set as a slave apparatus and the information processing apparatus 1 set as the master apparatus start the connection manager at steps 101 and 111, respectively.

Then, the information processing apparatus 2, 3 and 4 each set as a slave apparatus transmit a presentation information requesting command to the information processing apparatus 1 set as the master apparatus at step 102.

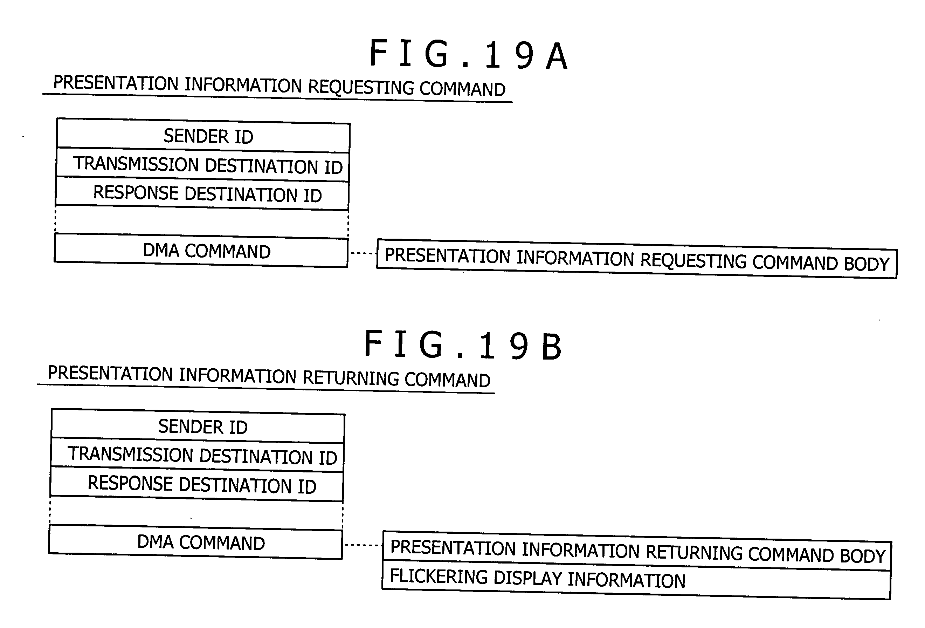

The presentation information requesting command includes, as seen in FIG. 19A, a sender ID (in this instance, information processing apparatus ID of the information processing apparatus 2, 3 or 4), a sender ID (in this instance, information processing apparatus ID of the information processing apparatus 1), and a response destination ID (in this instance, information processing apparatus ID of the information processing apparatus 2, 3 or 4). The representation information requesting command further includes a presentation information requesting command body as a DMA command.

Referring back to FIG. 18, the information processing apparatus 1 set as the master apparatus receives the presentation information requesting command at step 113. Then at step 114, the information processing apparatus 1 produces such flickering display information as illustrated in FIG. 16 for the information processing apparatus 1 itself and the other information processing apparatus as presentation information from such apparatus information as illustrated in FIG. 15 in the apparatus information tables of the information processing apparatus 1 and the other information processing apparatus 2, 3 and 4 in the main memory 26-1.

Then at step 115, the information processing apparatus 1 set as the master apparatus transmits the thus produced flickering display information for the other apparatus (information processing apparatus 2, 3 and 4) individually to the information processing apparatus 2, 3 and 4 using a presentation information returning command.

Referring to FIG. 19B, the presentation information returning command includes a sender ID (in this instance, information processing apparatus ID of the information processing apparatus 1), a transmission destination ID (in this instance, information processing apparatus ID of the information processing apparatus 2, 3 or 4), and a response destination ID (in this instance, information processing apparatus ID of the information processing apparatus 2, 3 or 4). The presentation information returning command further includes, as a DMA command, a presentation information returning command body and the produced flickering display information.

Referring back to FIG. 18, the information processing apparatus 1 set as a master apparatus transmits the flickering display information for the information processing apparatus 1 itself to the flickering display module of the information processing apparatus 1 itself at step 116. Further at step 117, the information processing apparatus 1 performs flickering display using the flickering display module.

On the other hand, each of the information processing apparatus 2, 3 and 4 set as a slave apparatus receives the presentation information returning command destined for the information processing apparatus 2, 3 or 4 itself and transmits the flickering display information for the self apparatus included in the presentation information returning command to the flickering display module of the self apparatus at step 106. Then at step 107, each of the information processing apparatus 2, 3 and 4 performs flickering display by means of the flickering display module.

The flickering display module of each of the information processing apparatus 1, 2, 3 and 4 is formed from a flickering display program and a light emitting display section (hardware section). In the information processing apparatus 1, 2, 3 and 4, the flickering display information is analyzed and processed using the flickering display program, and the light emitting display section is driven to perform flickering display.

The light emitting display section is, in the information processing apparatus 1, the liquid crystal display section 42-1 shown in FIGS. 10 and 13, and is, in the information processing apparatus 2, the liquid crystal display section 42-2 shown in FIGS. 10 and 13 while it is, in the information processing apparatus 3, the LED section 48 shown in FIGS. 11 and 13 and is, in the information processing apparatus 4, the liquid crystal display section 63 shown in FIGS. 12 and 13.

### (3-3. Presentation Modes)

In the following, contents of the flickering display information produced in various cases and flickering display modes in the various cases are described.

### <3-3-1>

In the first mode, the apparatus information for presentation illustrated in FIG. 15 describes nothing as the special detailed information and the flickering display information illustrated in FIG. 16 describes nothing as the extended information, and for all of the information processing apparatus, for example, the display color is set to green; the flickering period is set to 1.0 second; the flickering time ratio is set to 50:50; the light amount variation is set to zero (light amount fixed); and the flickering phase is set to the immediate (no time delay).

In this instance, on the information processing apparatus 1, the entire display screen of the liquid crystal display section 42-1 flickers in green; on the information processing apparatus 2, the entire display screen of the liquid crystal display section 42-2 flickers in green; on the information processing apparatus 3, the green LEDs in the LED section 48 flicker; and on the information processing apparatus 4, the entire display screen of the liquid crystal display section 63 flickers in green.

Accordingly, the user can discriminate readily and with certainty from the appearance of the system that the information processing apparatus 1, 2, 3 and 4 construct the network system.

### <3-3-2>

In the second mode, an information processing apparatus set as the master apparatus and any other information apparatus set as a slave apparatus display in different flickering periods or in different display colors.

Since, in the example described above, the information processing apparatus 1 is set as the master apparatus and the information processing apparatus 2, 3 and 4 are set as slave apparatus, (2a) a case wherein the same display color, for example, green, is used and the flickering period is set to 0.5 seconds for the information processing apparatus 1 while it is set to 1.0 second for the information processing apparatus 2, 3 and 4, (2b) another case wherein the equal flickering period, for example, 1.0 second, is used and the display color is set to red for the information processing apparatus 1 while it is set to green for the information processing apparatus 2, 3 and 4, (2c) a further case wherein, for the information processing apparatus 1, the flickering period is set to 0.5 seconds and the display color is set to red while, for the information processing apparatus 2, 3 and 4, the flickering period is set to 1.0 second and the display color is set to green, and so forth are available.

According to the second mode, the user can recognize readily and with certainty from the appearance of the system not only that the information processing apparatus 1, 2, 3 and 4 construct the network system but also that the information processing apparatus 1 is set as the master apparatus while the information processing apparatus 2, 3 and 4 are set as slave apparatus.

### <3-3-3>

In the third mode, the flickering phase is successively displaced in order of the information processing apparatus IDs of the information processing apparatus. In particular, if the information processing apparatus IDs in the example described hereinabove are substituted into numerical values, then the information processing apparatus 2 assumes the next place to the information processing apparatus 1; the information processing apparatus 3 assumes the next place to the information processing apparatus 2; and the information processing apparatus 4 assumes the next place to the information processing apparatus 3 (if no higher value is available, then the next place is assigned to the information processing apparatus of the lowest value). Therefore, the information processing apparatus 1 is set to such an immediate mode as seen in FIG. 17; the information processing apparatus 2 is set to such a first phase shift mode D1 as seen in FIG. 17; the information processing apparatus 3 is set to such a second phase shift mode D2 as seen in FIG. 17; and the information processing apparatus 4 is set to such a third phase shift mode D3 as seen in FIG. 17.

According to the third mode, the user can recognize readily and with certainty from the appearance of the system not only that the information processing apparatus 1, 2, 3 and 4 construct the network system but also the order of the information processing apparatus 1, 2, 3 and 4.

### <3-3-4>

In the fourth mode, the number of those information processing apparatus connected to the network 9 is described as the special detailed information in the apparatus information for presentation illustrated in FIG. 15, and the number of times of flickering within a flickering period as in the paragraph (u) described hereinabove is described as the extended information in the flickering display information illustrated in FIG. 16.

In the example described above, since the four information processing apparatus 1, 2, 3 and 4 are connected to the network 9, within one flickering period from time ts to time te of FIG. 17, flicking is performed four times, and then for another flickering period, the flocking state is stopped and a light-off state is maintained. Thus, each of the information processing apparatus 1, 2, 3 and 4 displays flickering in this pattern.

According to the fourth mode, the user can recognize readily and with certainty from the appearance of the system not only that a plurality of information processing apparatus construct the network system but also what number of information processing apparatus are connected to the network.

### <3-3-5>

According to the fifth mode, a plurality of colors and an order of the colors designated by the user or selectively determined at random by the system (connection manager of the information processing apparatus 1 set as the master apparatus) as in the paragraph (v) hereinabove is described in the flickering display information illustrated in FIG. 16.

In this instance, in the example described hereinabove, for example, red is for used flickering for the information processing apparatus 1; green is used for flickering for the information processing apparatus 2; blue is used for flickering for the information processing apparatus 3; and yellow is used for flickering for the information processing apparatus 4.

According to the fifth mode, the user can recognize readily and with certainty from the appearance of the system not only that a plurality of information processing apparatus construct the network system but also what number of information processing apparatus are connected to the network 9.

It is to be noted that the information processing apparatus 3 may be configured such that, for example, the green LED and the red LED in the LED section 48 shown in FIG. 13 are disposed and lit flickering simultaneously to cause the information processing apparatus 3 to flicker in yellow.

### <3-3-6>

According to the sixth mode, that the network system is operating cooperatively is described as the special detailed information in the apparatus information for presentation illustrated in FIG. 15, and this is reflected on one of the items of the flickering display information illustrated in FIG. 16.

For example, when the information processing apparatus 2 is connected to the network 9 while the information processing apparatus 1, 3 and 4 remain connected to the network 9 as described hereinabove, if a process corresponding to an operation performed on the information processing apparatus 3 by the user is being executed by the information processing apparatus 1, 3 or 4, then the network system is in a state wherein it is operating cooperatively.

Then, for example, where the network system is operating cooperatively in this manner, blue is used as the display color, but where the network system is not in such a cooperatively operating state, green is used as the display color. Or, where the network system is operating cooperatively in this manner, the flickering period of 0.5 seconds is used, but where the network system is not in such a cooperatively operating state, the other flickering period of 1.0 second is used.

According to the sixth mode, the user can recognize readily and with certainty from the appearance of the system not only that a plurality of information processing apparatus construct the network system but also whether or not they are operating cooperatively.

### <3-3-7>

According to the seventh mode, information regarding the main processor, main memory or external recording section in the apparatus information for presentation illustrated in FIG. 15 is reflected on one of the items in the flickering display information illustrated in FIG. 16.

Further, if the main processor utilization factor of a certain information processing apparatus is higher than a fixed value, then in order to cause the user to pay attention, the flickering period is set to 0.5 seconds equal to one half the ordinary flickering period of 1.0 second or the display color is changed from green to red.

Further, the main memory utilization factor is calculated from the main memory total capacity and the main memory utilization capacity. Then, if the main memory utilization factor of a certain information processing apparatus is higher than a fixed value, then in order to cause the user to pay attention, the flickering period is set to 0.5 seconds equal to one half the ordinary flickering period of 1.0 second or the display color is changed from green to red.

Further, it is determined from the external recording section type ID whether or not a hard disk is used as the external recording section, and if a hard disk is used in any one of the information processing apparatus (in the example described above, the information processing apparatus 1 and 2), then the utilization factor is calculated from the total capacity of the hard disk and the utilization capacity. Then, if the hard disk utilization factor of a certain information processing apparatus is higher than a fixed value, then in order to cause the user to pay attention, the flickering period is set to 0.5 seconds equal to one half the ordinary flickering period of 1.0 second or the display color is changed from green to red.

It is to be noted that the flickering period may be varied continuously in response to the main processor utilization factor, main memory utilization factor or hard disk utilization factor so that the flickering period may be made shorter as the main processor utilization factor, main memory utilization factor or hard disk utilization factor increases.

### <3-3-8>

According to the eighth mode, if any information processing apparatus connected to the network is abnormal or has some trouble, then this is described as the special detailed information in the apparatus information for presentation illustrated in FIG. 15 so that it may be reflected on one of the items in the flickering display information illustrated in FIG. 16.

In this instance, in order to cause the user to pay attention to the information processing apparatus connected to the network or that information processing apparatus which is abnormal or has some trouble, the flickering period is set to 0.5 seconds equal to one half the ordinary flickering period of 1.0 second or the display color is changed from green to red.

### <Other Presentation Modes>

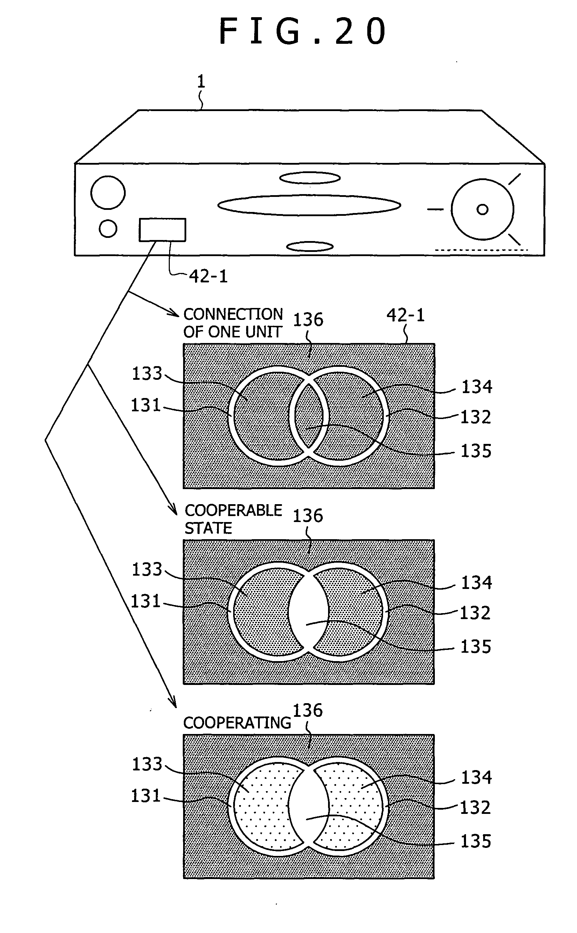

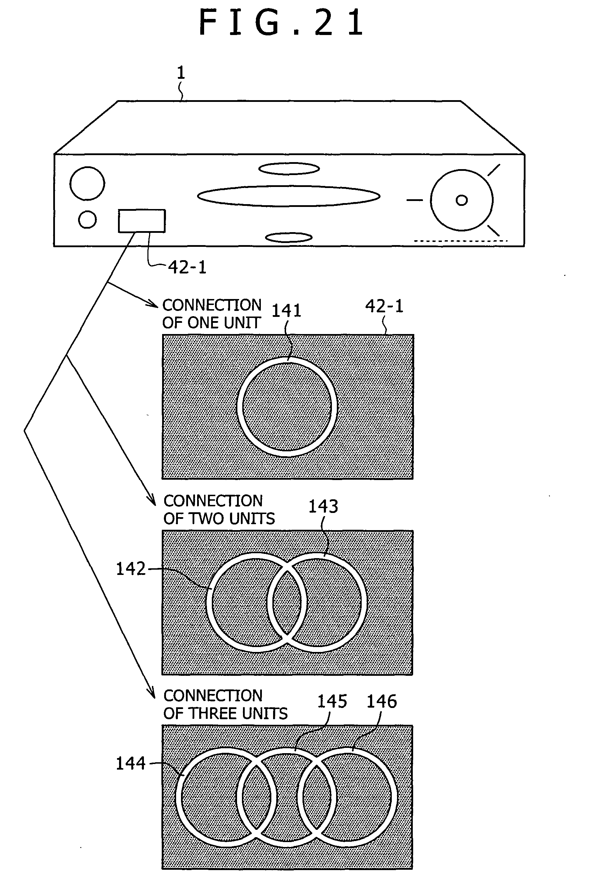

In place of or in addition to the presentation modes described above, for example, in the system described above, each of the information processing apparatus 1 and 2 in the form of a hard disk recorder preferably has such a presentation mode as shown in FIG. 20 or 21.

In the example of FIG. 20, where only the information processing apparatus 1 is connected to the network 9, two rings 131 and 132 are displayed flickering (or lit continuously) in a crossing state on the liquid crystal display section 42-1 as denoted by "connection of one unit". Regarding the display color, for example, yellow having a high luminance is used for the rings 131 and 132, and black is used for inner portions 133 and 134 of the rings 131 and 132, a crossing portion 135 between the rings 131 and 132 and a peripheral portion 136 of the rings 131 and 132.

If the information processing apparatus 1 and a different information processing apparatus are connected to the network 9 but are not operating cooperatively, then as denoted by "cooperable state" in FIG. 20, blue is used for the inner portions 133 and 134 and yellow same as that for the rings 131 and 132 is used for the crossing portion 135 while the luminance of the entire screen is set higher than that in the case of the single connection of one unit.

If the information processing apparatus 1 and a different information processing apparatus are connected to the network 9 and besides are operating cooperatively, then as denoted by "cooperating" in FIG. 20, green is used for the inner portions 133 and 134 and the luminance of the entire screen is set higher than that in the case of the cooperable state.

In the system described above, the information processing apparatus 4 in the form of a portable CD player is disconnected with a high degree of possibility from the network 9. However, the information processing apparatus 1 and 2 each in the form of a hard disk recorder are placed at fixed places and disconnected with a low degree of possibility from the network 9. Therefore, when the user checks the situation of the system, the user frequently takes notice of the information processing apparatus 1 or 2 in the form of a hard disk recorder.

Accordingly, if the presentation mode described above with reference to FIG. 20 is used, then the user can determine various states of the system readily and with certainty.

In the example of FIG. 21, when only the information processing apparatus 1 is connected to the network 9, one ring 141 is displayed flickering (or lit continuously) on the liquid crystal display section 42-1 as denoted by "connection of one unit". However, if the information processing apparatus 1 and a different information processing apparatus are connected to the network 9, then as denoted by "connection of two units" in FIG. 21, two rings 142 and 143 are displayed flickering (or lit continuously) in a crossing state on the liquid crystal display section 42-1. On the other hand, if the information processing apparatus 1 and two different information processing apparatus are connected to the network 9, then as denoted by "connection of three units", three rings 144, 145 and 146 are displayed flickering (or lit continuously) in a successively crossing state on the liquid crystal display section 42-1.

According to the example of FIG. 21, the user can determine from the appearance of the system readily and with certainty what number of information processing apparatus are connected to the network.

### (3-4. Other Presentation Methods and Presentation Modes)

The system can be configured otherwise such that, also where only a certain one of the information processing apparatus is connected to the network and set as a master apparatus as denoted by "connection of one unit" in FIGS. 20 and 21, the master apparatus produces presentation information for the master apparatus itself from apparatus information of the master apparatus itself and performs such flickering display (or continuously lit display) as described above.

Further, the system can be configured otherwise such that, also where a certain information processing apparatus is connected to the network and set as a master apparatus and another or other information processing apparatus are newly connected to the network in this state as in the examples described hereinabove, each of the slave apparatus does not issue a request to the master apparatus but produces presentation information for the slave apparatus itself from apparatus information of the slave apparatus itself or from apparatus information of the self apparatus itself and the other apparatus and performs such flickering display (or continuously lit display) as described hereinabove.

Further, the system can be configured otherwise such that, also when a plurality of information processing apparatus are connected to the network and one or more of the information processing apparatus in this state are disconnected from the network, the other information processing apparatus which remain not disconnected from the network (when only one of the information processing apparatus remains not disconnected, the one information processing apparatus) present the situation of the network system then by a method and a mode similar to those described hereinabove.

In this instance, the user can recognize readily and with certainty from the appearance of the system that the situation of the network system has changed as a result of disconnection of a certain information processing apparatus from the network.

Further, while, in the examples described above, the light emitting display section of the information processing apparatus is lit flickering or continuously to present a situation of the network system, the system may be configured otherwise such that the situation of the network system is presented by announcement by voice.

In this instance, each of the information processing apparatus is configured in the following manner. In particular, each information processing apparatus includes a sound outputting section such as a speaker, and a program and text data for announcement by voice are prepared. Then, sound data for the announcement by voice are produced by text speech synthesis from the apparatus information described hereinabove, and the sound data are converted into and signaled as an analog sound signal to the sound outputting section such as a speaker.

Particularly, when a certain information processing apparatus is connected to the network and set as a master apparatus and another or other information processing apparatus are newly connected to the network in this state as in the examples described hereinabove, such announcement by voice as "an apparatus has been added", "apparatus have increased to four", "a hard disk recorder has been added" or "cooperative operation of four apparatus is proceeding" is provided to present the situation of the network system then. On the other hand, when a plurality of information processing apparatus are connected to the network and one or more of the information processing apparatus in this state are disconnected from the network, each of the other information processing apparatus which remain not disconnected from the network (when only one of the information processing apparatus remains not disconnected, the one information processing apparatus) presents the situation of the network system then by such announcement by voice as "an apparatus has been disconnected", "apparatus have decreased to three", "a CD player has been added" or "the master has been disconnected and another apparatus has been set as the master".

### [4. Basic Configuration 2 of the Network System and the Information Processing Apparatus]

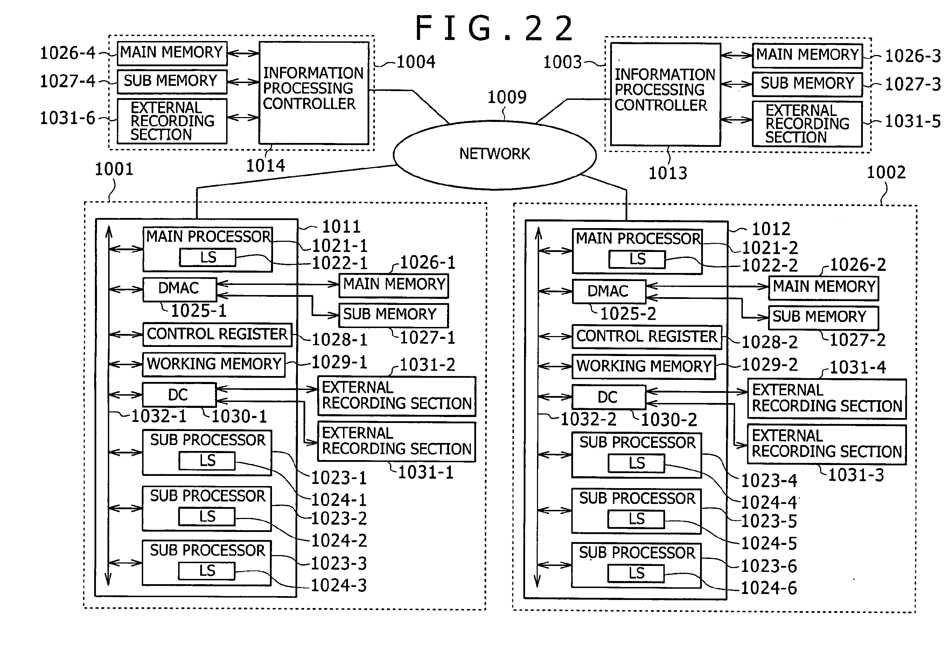

FIG. 22 shows another example of the network system according to an embodiment of the present invention. Referring to FIG. 22, the network system shown includes a plurality of information processing apparatus 1001, 1002, 1003, and 1004 by a network 1009.

### (4-1. Information Processing Apparatus and Information Processing Controller)

The information processing apparatus 1001, 1002, 1003, and 1004 are such various AV (Audio and Visual) apparatus and portable apparatus as hereinafter described.

The information processing apparatus 1001 is described below. The information processing apparatus 1001 includes an information processing controller 1011 as a computer function section. The information processing controller 1011 includes a main processor 1021-1, sub processors 1023-1, 1023-2, and 1023-3, a direct memory access controller (DMAC) 1025-1, a control register 1028-1, a working memory 1029-1, and a disk controller (DC) 1030-1.

The main processor 1021-1 performs schedule management of execution (data processing) of sub processor programs by the sub processors 1023-1, 1023-2, and 1023-3 and general management of the information processing controller 1011 (information processing apparatus 1001). However, the main processor 1021-1 may be configured otherwise such that a program other than the program for performing the management operates in the main processor 1021-1. In this instance, the main processor 1021-1 functions also as a sub processor. The main processor 1021-1 includes a local storage (LS) 1022-1.

Although the number of sub processors may be only one, preferably a plurality of sub processors are involved. In the example shown in FIG. 22, the information processing apparatus includes a plurality sub processors.

The sub processors 1023-1, 1023-2, and 1023-3 execute sub processor programs parallelly and independently of each other to process data under the control of the main processor 1021-1. Further, according to circumstances, a program in the main processor 1021-1 can operate in cooperation with a sub processor program in any of the sub processors 1023-1, 1023-2, and 1023-3. Also function programs hereinafter described operate in the main processor 1021-1. Also the sub processors 1023-1, 1023-2, and 1023-3 include local storages (LS) 1024-1, 1024-2, and 1024-3, respectively.

The DMAC 1025-1 accesses programs and data stored in a main memory 1026-1 connected to the information processing controller 1011 and formed from a DRAM (dynamic RAM) or the like and a sub memory 1027-1 connected to the information processing controller and formed from an SRAM (static RAM) or the like. Since the DMAC 1025-1 is interposed, data can be transferred in accordance with the DMA method between each of the sub processors 1023-1, 1023-2, and 1023-3 and the main memory 1026-1. Consequently, high speed data transfer can be anticipated.

The control register 1028-1 determines which one of the sub processors and which one of a plurality of processing threads (hereinafter described) included in the sub processor should process a sub processor program to be processed in the information processing controller 1011. The control register 1028-1 is further used to manage the progress of execution of the sub processor program by the sub processor.

The working memory 1029-1 is a working storage formed from an SRAM included in the information processing controller 1011 and is accessed by the main processor 1021-1 and the sub processors 1023-1, 1023-2, and 1023-3.

The DC 1030-1 accesses external recording sections 1031-1 and 1031-2 connected to the information processing controller 1011.

The external recording sections 1031-1 and 1031-2 may have a form of any of a fixed disk (hard disk) and a removable disk. As such a removable disk as just mentioned, various recording media such as an MO (magnetic disk), an optical disk such as a CD±RW or a DVD±RW, a memory disk, an SRAM (static RAM), and a ROM can be used. The DC 1030-1 is an external recording section controller although it is called disk controller.

The information processing controller 1011 can be configured such that a plurality of external recording sections 1031 can be connected thereto as in the example shown in FIG. 22.

The main processor 1021-1, sub processors 1023-1, 1023-2, and 1023-3, DMAC 1025-1, control register 1028-1, working memory 1029-1, and DC 1030-1 are connected to each other by a bus 1032-1.

An identifier is allocated as an information processing apparatus ID to the information processing controller 1011. The identifier allows identification of the information processing apparatus 1001, which incorporates the information processing controller 1011, uniquely over the entire network.

Also to each of the main processor 1021-1 and the sub processors 1023-1, 1023-2, and 1023-3, an identifier with which it can be identified is allocated as a main processor ID or a sub processor ID similarly.

The information processing controller 1011 is preferably formed as a one-chip IC (Integrated Circuit).

Also the other information processing apparatus 1002, 1003, and 1004 are configured in a similar manner. Here, it is to be noticed that those units of reference characters having the same parent number operate similarly unless otherwise specified even if they have different branch numbers. Thus, in the following description, where the branch number of reference characters is omitted, the units are same irrespective of the difference in branch number.

### (4-2. Accessing from Each Sub Processor to the Main Memory)

As described hereinabove, although each of the sub processors 1023 in one information processing controller executes a sub processor program independently to process data, if different sub processors perform reading out or writing at a time from or into same areas in the main memory 1026, then mismatching of data may possibly occur. Therefore, accessing from the sub processors 1023 to the main memory 1026 is performed in accordance with the following procedure.

Although the same region of each sub memory 1027 or the working memory 1029 may possibly be accessed simultaneously by different ones of the sub processors, description is given here only of the main memory 1026.

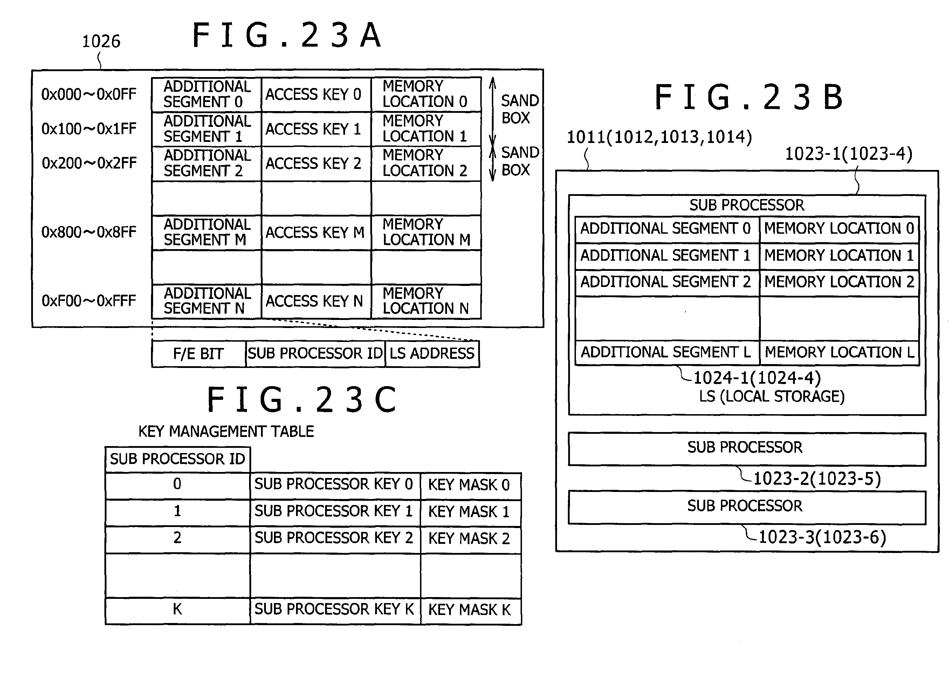

Referring to FIG. 23A, the main memory 1026 is formed from a plurality of memory locations 0 to N with which a plurality of addresses can be designated. An additional segment 0 to N for storing information indicative of a state of data is allocated to each memory location. The additional segment includes an F/E bit, a sub processor ID, and an LS address (Local Storage address). Also an access key 0 to N hereinafter described is allocated to each memory location. The F/E bit is defined in the following manner.

The F/E bit = 0 represents that the data is data being read and processed by a sub processor 1023 or invalid data, which it not the latest data since the location is in a blank state, and is disabled from being read out. Further, the F/E bit = 0 indicates that data can be written into the corresponding memory location, and the F/E bit is set to 1 after writing into the memory location.

The F/E bit = 1 represents that data of the corresponding memory location is not read out by any sub processor 1023 and is the latest data not processed as yet. The data of the memory location can be read out. After a sub processor 1023 reads out the data, the F/E bit is set to 0. Further, the F/E bit = 1 represents that the memory location is disabled from writing of data.

Further, in the state of the F/E bit = 0 (readout disabled/writing enabled), it is possible to set a readout reservation with regard to the memory location. When readout reservation is to be performed with regard to a memory location with regard to which the F/E bit = 0, a sub processor 1023 writes the sub processor ID and the LS address of the sub processor 1023 as readout reservation information into the additional segment of the memory location with regard to which the readout reservation is performed.

Thereafter, the sub processor 1023 on the data writing side writes the data into the memory location having the readout reservation, and the F/E bit is set to F/E bit = 1 (readout enabled/writing disabled). Then, the sub processor ID and the LS address written as the readout reservation information in the additional segment in advance are read out.

Where there is the necessity to process data at multiple stages using a plurality of sub processors, if readout/writing of data of each memory location are controlled in such a manner as described above, then immediately after data processed by a processor 1023, which performs a process at a preceding stage, is written into a predetermined address in the main memory 1026, another sub processor 1023, which performs a process at a succeeding stage, can read out the pre-processed data.

Referring to FIG. 23B, also the local storage 1024 in each sub processor 1023 is formed from a plurality of memory locations 0 to L which can be designated each by an address. An additional segment 0 to L is allocated similarly to each of the memory locations. The additional segment includes a busy bit.

When the sub processor 1023 is to read out data in the main memory 1026 into a memory location of the local storage 1024 thereof, it sets the corresponding busy bit corresponding to the memory location of the reading out destination to 1 to make reservation. Other data cannot be stored into any memory location with regard to which the busy bit is 1. After reading out of the memory location of the local storage 1024, the busy bit is changed to 0 so that the memory location can be used for an arbitrary object later.

Referring back to FIG. 23A, the main memory 1026 connected to each information processing controller includes a plurality of sandboxes. The sandboxes define areas in the main memory 1026, and each sandbox is allocated for each sub processor 1023 and can be used exclusively by the pertaining sub processor. In other words, each of the sub processors 1023 can use a sandbox allocated thereto but cannot access data exceeding the area of the sandbox.

While the main memory 1026 includes a plurality of memory locations 0 to N, each sandbox is a set of memory locations. In other words, one sandbox is formed from one or a plurality of memory locations.

Further, in order to implement exclusive control of the main memory 1026, such a key management table as shown in FIG. 23C is used. The key management table is stored in a comparatively high speed memory such as an SRAM in the information processing controller and is coordinated with a DMAC 1025. However, the key management table may otherwise be stored in the working memory 1092.

The key management table includes a number of entries equal to the number of sub processors in the information processing controller. Each entry includes a sub processor ID and a corresponding sub processor key and a corresponding key mask stored in a coordinated relationship with each other.

The process when the sub processor 1023 uses the main memory 1026 is such as described below. First, the sub processor 1023 outputs a readout or writing command to the DMAC 1025. This command includes the sub processor ID of the sub processor and an address of the main memory 1026, which is a destination of the request for use.

Before the DMAC 1025 executes this command, it refers to the key management table to detect the sub processor key of the sub processor 1023 of the source of the request for access. Then, the DMAC 1025 compares the detected sub processor key of the source of the request for access with the access key allocated to the memory location shown in FIG. 23A in the main memory 1026, which is the destination of the request for access. Then, only when the keys coincide with each other, the DMAC 1025 executes the command described above.

The key mask on the key management table shown in FIG. 23C can set, when an arbitrary bit thereof is set to the value 1, a corresponding bit of the sub processor key coordinated with the key mask to 0 or 1.

It is assumed that, for example, the sub processor key is 1010. Usually, the sub processor key enables accessing only to a sandbox having the access key of 1010. However, if the key mask coordinated with the sub processor key is set to 0001, then the coincidence determination between a sub processor key and an access key is masked only with regard to the digit in which the bit of the key mask is set to 1. Consequently, the sub processor key of 1010 enables accessing to a sandbox having the access key of 1010 or 1011.

The exclusive property of the sandboxes of the main memory 1026 is implemented in such a manner as described above. In short, where there is the necessity for a plurality of sub processors in an information processing controller to process data at multiple stages, only a sub processor performing a process at a preceding stage and another sub processor performing a process at a succeeding stage are permitted to access a predetermined address of the main memory 1026. Consequently, the data can be protected.

Such exclusive control of the memory can be used, for example, in the following manner. First, immediately after the information processing apparatus is started, the values of the key masks are all zero. It is assumed that a program in the main processor is executed and operates in a cooperating relationship with programs in the sub processors. When it is intended to store processing result data outputted from a first sub processor once into the main memory 1026 and then transmit the processing result data to a second sub processor, it is naturally necessary that the pertaining main memory area can be accessed from the two sub processors. In such an instance, the program in the main processor changes the values of the key masks suitably to provide a main memory area, which can be accessed from the plurality of sub processors, to allow multi-stage processing by the sub-processors.

More particularly, when multi-stage processing is to be performed in the procedure of data from a different information processing apparatus → processing by the first sub processor → first main memory area → processing by the second sub processor → second main memory area, the second processor cannot access the first main memory area if the following settings are maintained:
Sub processor key of the first sub processor, 0100;
Access key of the first main memory area, 0100;
Sub processor key of the second sub processor, 0101;
Access key of the second main memory area, 0101. Thus, if the key mask of the second sub processor is changed to 0001, then the second sub processor is permitted to access the first main memory area.

### (4-3. Accessing from Each Sub Processor to the Main Memory and the Sub Memories)

Each of the sub processors 1023 in one information processing controller can perform reading out from and writing into the sub memory 1027 similarly to the main memory 1026. However, several different commands may be applicable to such accessing and may be different in priority. Therefore, a configuration and a procedure allowing each sub processor 1023 to use the main memory 1026 and the sub memory 1027 accurately are described below.

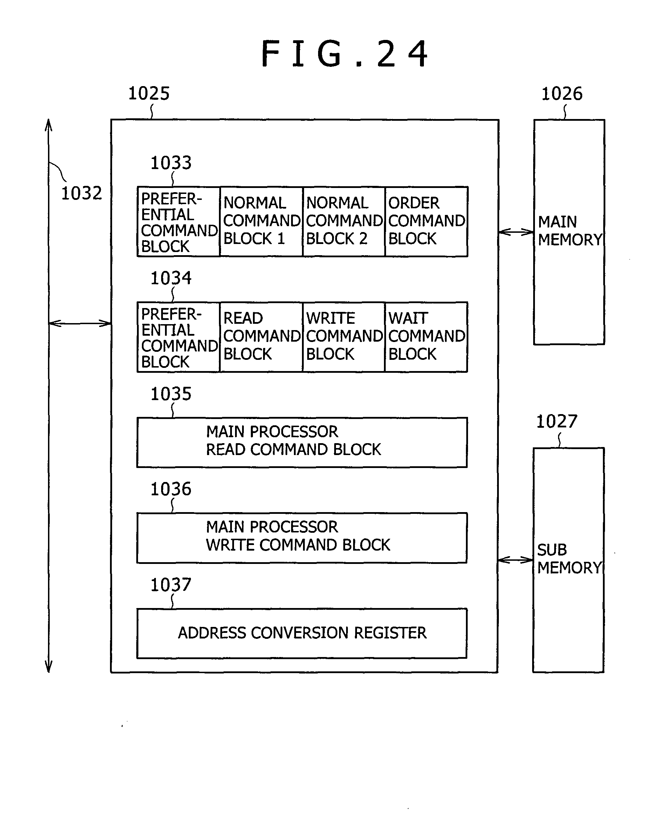

Referring to FIG. 24, a direct memory access controller (DMAC) 1025 includes a main memory control register 1033 and a sub memory control register 1034 provided in the inside thereof. The main memory control register 1033 is provided to access the main memory 1026 while the sub memory control register 1034 is provided to access the sub memory 1027.

The main memory control register 1033 includes four blocks described below, each of which stores commands for accessing the main memory 1026.

A preferential command block stores a plurality of commands having a high priority. The commands are processed preferentially.

A normal command block 1 stores a plurality of normal commands therein, and also a normal command block 2 stores a plurality of normal commands therein. The normal command block 1 and the normal command block 2 do not have any functional difference. However, if commands before execution of accessing to the main memory 1026 are stored in one of the blocks while commands after the execution are stored in the other block, then the commands before the execution and after the execution can be processed continuously in a concentrated manner.

An order command block stores a plurality of commands, which must be processed in a correct order. In particular, commands from the sub processors 1023 are stored in a received order thereof together with sub processor IDs of the sub processors of the command senders. Consequently, the commands can be processed in the received order thereof, and results of execution of the commands can be returned in the same order to the sub processors of the command senders.

Also the sub memory control register 1034 includes four blocks described below, each of which stores commands for accessing the sub memory 1027.

A preferential command block stores a plurality of commands having a high priority. The commands are processed preferentially.

A read command block stores a plurality of read commands therein, and also a write command block stores a plurality of write commands therein.

A wait command block stores a plurality of commands whose accessing to an arbitrary region in the sub memory 1027 has been attempted but has resulted in failure because the object region is locked. When the object region is unlocked, the command is moved to the preferential command block.

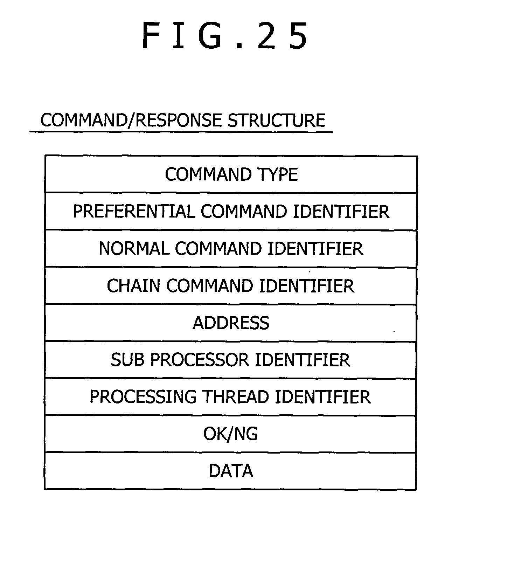

Each of the sub processors 1023 accesses the main memory 1026 or the sub memory 1027 using a command having, for example, such a structure as illustrated in FIG. 25. Also a response of an execution result from the main memory 1026 or the sub memory 1027 after execution of the accessing has the same structure.

Referring to FIG. 25, in the command/response structure illustrated, reading and writing commands are available for a command type. A preferential command identifier indicates that the command has a high priority. An ordinary command identifier is used upon accessing to the main memory 1026 and indicates that the command is to be stored into the normal command block 1 or the normal command block 2.

Also a chain command identifier is used upon accessing to the main memory 1026 and indicates that the command requires successive accessing together with another command immediately preceding or following the command. The chain command identifier may alternatively indicate a consecutive number of a train of successive commands. Although a command in which the chain command identifier is set is placed into the order command block, the priority of the command in processing is higher than commands in the preferential command block.

An address in the command/response structure indicates an address in the main memory 1026 or the sub memory 1027 when the command is executed or may alternatively indicate an address in the working memory 1029.

A sub processor identifier is a sub processor ID of a sub processor of the command sender. A processing thread identifier is an identifier of a processing thread hereinafter described of the command sender.

An OK/NG indicates success/failure of the command. Data here is read out data included in a response upon execution of the read command or data to be written which is included in the write command upon execution of the command.

Referring back to FIG. 24, the DMAC 1025 may include, in addition to the main memory control register 1033, which allows the sub processors 1023 to accurately access the main memory 1026, and the sub memory control register 1034, which allows the sub processors 1023 to accurately access the sub memory 1027, a main processor read command block 1035 and a main processor write command block 1036. The command blocks 1035 and 1036 are capable of storing a plurality of read commands and a plurality of write commands for allowing the main processor 1021 to access the main memory 1026 or the sub memory 1027, respectively. An address conversion register 1037 is hereinafter described.

If a plurality of sub processors transmit memory access commands having the same priority at the same timing to the DMAC 1025, then the following procedure is taken. In particular, the DMAC 1025 has a pointer provided therein indicative of a sub processor which has succeeded last in the memory accessing. When the DMAC 1025 receives a plurality of memory access commands having the same priority at the same timing from different sub processors, it gives priority to that one of the commands which has a value higher than the pointer and has the smallest difference from the pointer. In this instance, the highest pointer value is followed by the lowest pointer value.

### (4-4. Accessing to the Sub Memory for Accessing Accurately to the Main Memory from Each Sub Processor)

Since the main memory 1026 formed from a DRAM or the like and the sub memory 1027 formed from an SRAM or the like are naturally different in structure of the individual sections, also the objects of use thereof are different from each other.

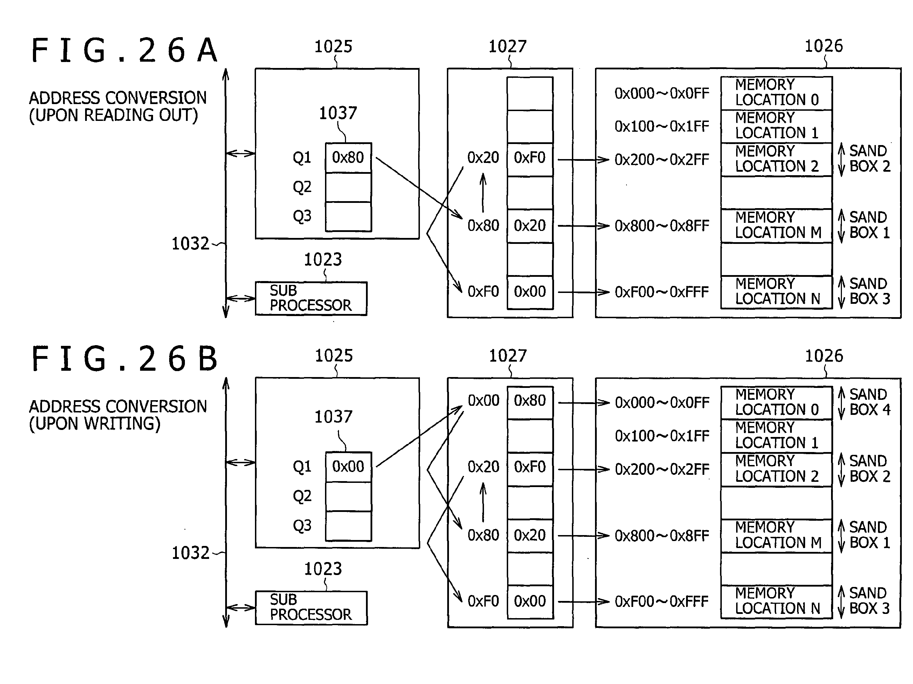

Therefore, as an example of a method of using the main memory 1026 and the sub memory 1027 in combination, it is a possible idea for the sub memory 1027 to take charge of address conversion when each sub processor 1023 tries to access the main memory 1026. A structure and a procedure for the method are described with reference to FIGS. 26A and 26B.

As described hereinabove, the main memory 1026 includes a plurality of memory locations, and one sandbox is formed from one or a plurality of memory locations. Each sub processor 1023 can exclusively use a sandbox allocated thereto.

It is assumed that, for example, sandboxes 1, 2, and 3 in the main memory 1026 are allocated to a certain one of the sub processors 1023 as seen in FIG. 26A. The sandbox 1 has addresses 0x800 to 0x8FF; the sandbox 2 has addresses 0x200 to 0x2FF; and the sandbox 3 has addresses 0xF00 to 0xFFF, and each of the sandboxes is identified with the top address thereof. In other words, the addresses of the sandboxes allocated need not be consecutive to each other.

When the sub processor 1023 tries to read out data from any of the sandboxes 1, 2, and 3, it first accesses the address conversion register 1037 in the DMAC 1025.

The address conversion register 1037 is a register for coordinating the sub processor 1023 and the sandboxes allocated to the sub processor 1023 and includes a number of entries equal to the number of the sub processors 1023. Here, it is assumed that the entry denoted by Q1 is coordinated with the sub processor 1023.

At this time, the sub processor 1023 reads out the value of the entry Q1 coordinated therewith. Further, the sub processor 1023 reads out data (0x20) from the first address in the sub memory 1027 indicated by the read out value (0x80) of the entry Q1.

The region of the sandbox 1 is specified based on the value of the entry Q1. For example, a value obtained by multiplying the value of the entry Q1 by 16 indicates the top address of the sandbox 1, and another value obtained by adding 255 to the top address indicates the end address of the sandbox 1. Accordingly, when the value of the entry Q1 is 0x80 as described above, the region of the sandbox 1 ranges from 0x800 to 0x8FF.

Further, the sub processor 1023 reads out data (0xF0) from the second address in the sub memory 1027 indicated by the data (0x20) read out from the first address mentioned above.

The region of the sandbox 2 is specified based on the data read out from the second address. More particularly, similarly as in the sandbox 1, a value obtained by multiplying the data read out from the second address by 16 indicates the top address of the sandbox 2, and a value obtained by adding 255 to the top address indicates the end address of the sandbox 2. Accordingly, when the data read out from the second address is 0xF0 as described hereinabove, the region of the sandbox 2 ranges from 0x200 to 0x2FF.

Furthermore, the sub processor 1023 reads out data (0x00) from the third address in the same sub memory 1027 indicated by the data (0xF0) read out from the second address mentioned above. The data 0x00 indicates the end of the allocated sandboxes.

The region of the sandbox 3 is specified based on the data read out from the third address. More particularly, similarly as in the sandboxes 1 and 2, a value obtained by multiplying the data read out from the third address by 16 indicates the top address of the sandbox 3, and a value obtained by adding 255 to the top address indicates the end address of the sandbox 3. Accordingly, when the data read out from the third address is 0x00 as described hereinabove, the region of the sandbox 3 ranges from 0xF00 to 0xFFF.

Thus, even if the addresses of sandboxes allocated to each of the sub processors 1023 are not successive, the sub processor 1023 can accurately access the sandboxes allocated thereto and can read out data with certainty from the sandboxes allocated thereto.

Now, a procedure for allowing the same sub processor 1023 to write data into a new sandbox in the main memory 1026 and then add the sandbox to a sandbox group managed with an entry in the address conversion register 1037, which corresponds to the sub processor 1023, is described with reference to FIG. 26B.

It is assumed that the sub processor 1023 writes data into a sandbox 4 of a region from 0x000 to 0x0FF in the main memory 1026. In this instance, the sub processor 1023 first reads out the value of the entry Q1 (initial value of the entry Q1, for example, 0x80 as described hereinabove).

Then, the sub processor 1023 writes the value (0x80) of the entry Q1 read out as above into an address in the sub memory 1027 with which the sandbox 4 into which the data has been written newly can be specified. For example, since the data has been written into the region from 0x000 to 0x0FF in the present cycle, the value (0x80) of the entry Q1 is written into an address in the sub memory 1027 indicated by 0x00 obtained by dividing the top address 0x000 by 16. Further, the sub processor 1023 writes the address (0x00) in the sub memory 1027, into which the value (0x80) of the entry Q1 has been written, as a new value of the entry Q1 into the entry Q1 in the address conversion register 1037.

Each sub processor 1023 can add a new sandbox to an existing sandbox group in such a manner as described above. Also in this instance, the addresses of the sandboxes may not be successive. Further, also where no existing sandbox group is found and the first sandbox is to be coordinated with the sub memory 1027 and the address conversion register 1037, the method described above can be used.

### (4-5. Accessing from the Main Processor and Each Sub Processor to the Working Memory)

Since the main memory 1026 is formed from a DRAM or the like and data is transferred in accordance with the DMA method as described hereinabove, each of the sub processors 1023 can use the main memory 1026 of a great capacity at a high speed. Further, the sub memory 1027 is formed from an SRAM or the like and can be used at a high speed similarly.

Further, if the main processor 1021 and the sub processors 1023 can commonly use the working memory 1029 included in the information processing controller as a working memory together with te main memory 1026 and the sub memory 1027 connected to the information processing controller, then higher speed operation can be anticipated.

Further, if the working memory 1029 can be used for simple numerical arithmetic operation, then the efficiency further enhances. Since the working memory 1029 is formed from an SRAM or the like as described above, although such a great capacity as can be achieved by a DRAM cannot be anticipated, the operation speed is very high.

In the following, a configuration and a procedure where the main processor 1021 and the sub processors 1023 access the working memory 1029 are described.

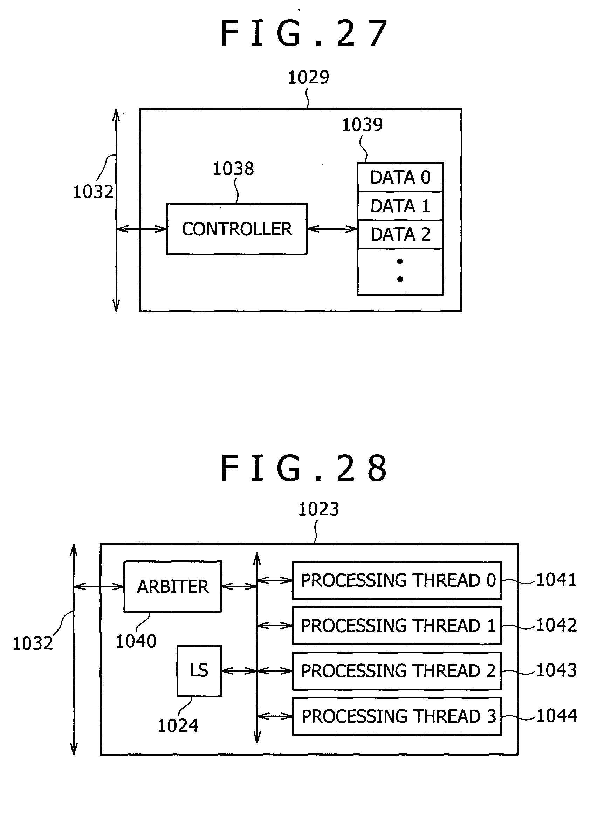

Referring to FIG. 27, the working memory 1029 includes a controller 1038 and a RAM 1039. Although an SRAM can be used for the RAM 1039, the RAM 1039 is not limited to this. The RAM 1039 is formed from a plurality of blocks. Each of the blocks has an address allocated thereto and stores data therein.

The main processor 1021 and the sub processors 1023 access the RAM 1039 through the controller 1038. More particularly, each of the main processor 1021 and the sub processors 1023 transmits a command, an address, or data to the controller 1038, and the controller 1038 accesses the RAM 1039 in accordance with the received command, address, or data.

After the process is executed, the controller 1038 returns a command execution result to the main processor 1021 or the sub processor 1023 of the command sender.

The commands used when the sub processors 1023 access the working memory 1029 are, for example, same as such commands used for accessing to the main memory 1026 or the sub memory 1027 as illustrated in FIG. 25. Also the response of the execution result from the working memory 1029 after execution of the process has the same structure.

However, when the working memory 1029 is to be accessed, the preferential command identifier, normal command identifier, chain command identifier, and processing thread identifier among the commands illustrated in FIG. 25 are not used basically. However, if the working memory 1029 is ready for the identifiers mentioned, then the identifiers may be used. Such several command types as described below are available.

The first command is a read command. The read command is used to read out data in the working memory 1029. The main processor 1021 and the sub processors 1023 transmit an address of a block in the RAM 1039, into which desired data is to be stored, together with the read command. As an execution result, the OK/NG representative of the success/failure of the read command and read out data are transmitted back from the controller 1038.

The second command is a write command. The write command is used to write data into the working memory 1029. The main processor 1021 and the sub processors 1023 transmit the write command, data, and an address of a block in the RAM 1039 into which the data is to be stored. As an execution result, the OK/NG representative of the success/failure of the write command is transmitted back from the controller 1038.

The third command is an addition command. The addition command is used to add data in the working memory 1029. The main processor 1021 and the sub processors 1023 transmit the addition command and an address of a block in the RAM 1039 into which data to be added is stored. The controller 1038 adds 1 to the data in the block of the received address and overwrites the data with a result of the addition. As an execution result, the OK/NG representative of the success/failure of the addition command is transmitted back from the controller 1038.

The fourth command is a set command. The set command is used to operate data in the working memory 1029 in a unit of a bit. The main processor 1021 and the sub processors 1023 transmit the set command, an address of a block in the RAM 1039 into which data to be operated is stored, and mask data.

In response to the set command received, the controller 1038 compares the received mask data and the data in the block of the received address to set the value of the bit of the data at a position same as each of those bits of the mask data, which have the value of 1, to 1. As an execution result, "Completed" indicative of completion of the set command is transmitted back from the controller 1038. At this time, also the data before execution of the set command may be transmitted so that success/failure of the command can be confirmed.

The fifth command is a clear command. Also the clear command is used to operate data in the working memory 1029 in a unit of a bit. The main processor 1021 and the sub processors 1023 transmit the clear command, an address of a block in the RAM 1039 into which data to be operated is stored, and mask data.

In response to the clear command received, the controller 1038 compares the received mask data and the data in the block of the received address to clear the value of the bit of the data at a position same as each of those bits of the mask data, which have the value of 1, to 0. As an execution result, "Completed" indicative of completion of the clear command is transmitted back from the controller 1038. At this time, also the data before execution of the clear command may be transmitted so that success/failure of the command can be confirmed.

As described above, the main processor 1021 and the sub processors 1023 can use the working memory 1029 commonly in addition to the main memory 1026 of a large capacity and the sub memory 1027 of high speed operation. Further, if the working memory 1029 is utilized as a cache for the sub memory 1027, then further high speed operation can be anticipated.

### (4-6. Processing Threads in the Sub Processors)

As described hereinabove, the sub processors 1023 in one information processing controller are structurally independent of each other. Accordingly, each of the sub processors 1023 can execute a sub process program and process data independently. Further, it is a possible idea to provide a plurality of processing threads virtually independent of each other in each of the sub processors 1023. The structure of the sub processors 1023 is shown in FIG. 28.

Referring to FIG. 28, each of the sub processors 1023 is connected to a bus 1032 through an arbiter 1040 provided in the inside thereof. The sub processor 1023 includes a local storage (LS) 1024, and processing threads 1041, 1042, 1043, and 1044. The arbiter 1040 takes charge of notifying an appropriate processing thread of a signal received from the outside.

Although the processing threads 1041, 1042, 1043, and 1044 are shown independently of each other in FIG. 28, they actually are virtually independent of each other. The processing threads 1041, 1042, 1043, and 1044 have processing thread identifiers allocated thereto individually and can operate independently of and in parallel to each other.

Since the processing threads 1041, 1042, 1043, and 1044 access the main memory 1026, sub memory 1027, or working memory 1029 independently of each other, a response must be returned with certainty to a processing thread of the source of transmission of the command. A procedure for this is described below.

The commands used to access the memories by the processing threads 1041, 1042, 1043, and 1044 are, for example, same as those commands used when the sub processors 1023 access the memories as illustrated in FIG. 25. Also responses of a result of execution from the memories after the process have the same structure.

Although the command/response structure of FIG. 25 is described hereinabove, the sub processor identifier is a sub processor ID of the sub processor of the sender of the command. Further, the processing thread identifier is used to identify which one of processing threads in the sub processor is the sender of the command.

A response from the main memory 1026, sub memory 1027, or working memory 1029 is transmitted first back to the sub processor 1023 of the sender of the command based on the sub processor identifier. Further, the response is transmitted to the processing thread of the sender of the command by the arbiter 1040 in the sub processor 1023 based on the processing thread identifier.

However, where any one of a plurality of processing threads in a sub processor may be used such as where the same process is performed, the response may be transmitted to that one of the processing threads to which the load is light without depending upon the processing thread identifier. Further, every time a response is received from the main memory 1026, sub memory 1027, or working memory 1029, one of a plurality of processing threads may be selected in order such that the response is transmitted back to the selected processing thread.

In this manner, even where a plurality of processing threads in each of the sub processors 1023 access the main memory 1026, sub memory 1027, or working memory 1029 independently of each other, a response can be transmitted back to a processing thread of the sender of the command with certainty.

### (4-7. Management of Sub Processor Programs by the Control Register)

Where a plurality of sub processors 1023 are included in one information processing controller and each of the sub processors 1023 includes a plurality of processing threads, it is significant for implementation of high speed operation of the information processing controller to determine which one of the processing threads should be used to process a sub processor program which is to be processed in the information processing controller.

Therefore, a configuration and a procedure, which use the control register 1028 shown in FIG. 22, to allocate processes of sub processor programs appropriately to individual processing threads so that the information processing controller may operate efficiently are described below.

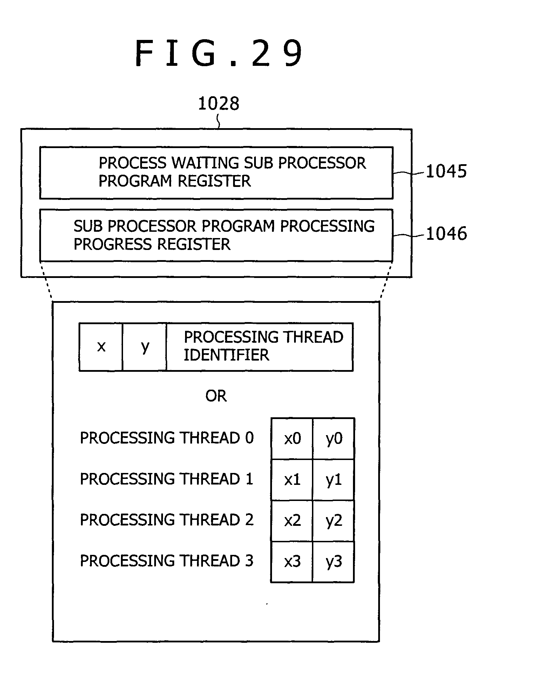

Referring to FIG. 29, the control register 1028 includes a process waiting sub processor program register 1045 and a sub processor program processing progress register 1046.

The process waiting sub processor program register 1045 is described. If a sub processor program to be processed in the information processing controller appears, then the main processor 1021 writes an address of the main memory 1026, sub memory 1027, working memory 1029, or local storage (LS) 1022 or 1024 in which the sub processor program or data relating to the sub processor program is stored into the process waiting sub processor program register 1045.

In a state wherein a sub processor program to be executed does not exist, the value of the process waiting sub processor program register 1045 is zero. All processing threads read out, while they themselves execute no sub processor program, the value of the process waiting sub processor program register 1045 periodically or non-periodically, and that one of the processing threads that has read out a value other than zero executes the process.

Further, the processing thread writes the value of zero into the process waiting sub processor program register 1045. The processing thread, which is to perform the process, reads out and processes the sub processor program of an object of the process or relating data based on the read out value of the process waiting sub processor program register 1045. At this time, the sub processor program may have been read out already by the sub processor 1023, which has the processing thread, and may not have to be read out any more.

In this manner, the process of the sub processor program can be allocated rapidly to a processing thread, which is not executing any sub processor program and hence has a sufficient processing capacity. The information processing controller can operate efficiently.

The sub processor program processing progress register 1046 is a 2-bit (x, y) register into which a processing thread to which a process of a sub process program is allocated is to write a progressing situation of the process. For example, (0, 0) represents that the process is not executed as yet; (0, 1) represents that the process is being executed at a stage 1; (1, 0) represents that the process is being executed at another stage 2; and (1, 1) represents completion of the process. Further, the processing thread identifier may be written together with the 2 bits so that the processing thread to which the process is allocated may be represented.

Further, as indicated as processing threads 0, 1, 2, and 3 in FIG. 29, a register into which a progressing situation of a process of a sub processor program may be provided for each of processing threads in the information processing controller.

The sub processor program processing progress register 1046 can be accessed by the main processor 1021, all of the sub processors 1023, and all of the processing threads in the information processing controller. Consequently, the progressing situation of the process of the sub processor program can be grasped precisely. Further where a process progressing register is provided for each processing thread, the process progressing situation can be grasped also when a plurality of sub processor programs are executed simultaneously.

The example of the processing thread management method where each of the sub processors 1023 has a plurality of processing threads virtually independent of each other is such as described above.

It is to be noted that, in the following description, where a sub processor performs some process, any one of the processing threads in the sub processor may be performed and no difference appears between results of execution by different processing threads. Therefore, description of how a plurality of processing threads in a sub processor take charge of contents of a process is omitted herein.

### (4-8. Production and Configuration of a Software Cell)

In the network system of FIG. 22, a software cell is transmitted between the information processing apparatus 1001, 1002, 1003, and 1004 so that distributed processing may be performed by the information processing apparatus 1001, 1002, 1003, and 1004. In particular, the main processor 1021 included in the information processing controller in a certain information processing apparatus produces a software cell including a command, a program, and data and transmits the software cell to another information processing apparatus through the network 1009 to achieve distribution of processing.

FIG. 3 shows an example of a configuration of a software cell. Referring to FIG. 3, the software cell shown generally includes a sender ID, a transmission destination ID, a response destination ID, a cell interface, a DMA command, a program, and data.

The sender ID includes a network address and the information processing apparatus ID of an information processing apparatus of the sender of the software cell. The sender ID includes identifiers (main processor ID and sub processor IDs) of the main processor 1021 and the sub processors 1023 included in the information processing controller in the information processing apparatus.

The transmission destination ID and the response destination ID individually include the same information regarding an information processing apparatus of the transmission destination of the software cell and an information processing apparatus of the response destination of a result of execution of the software cell.

The cell interface is information necessary for utilization of the software cell and includes a global ID, information of necessary sub processors, a sandbox size, and a preceding software cell ID.

The global ID allows unique identification of the software cell through the entire network and is produced based on the sender ID and the date and hour of production or transmission of the software cell.

The information of necessary sub processors has set therein the number of sub processors necessary for execution of the software cell. The sandbox size has set therein the memory capacities in the main memory 1026 and the local storages 1024 of the sub processors 1023 necessary for execution of the software cell.

The preceding software cell ID is an identifier of a preceding software cell among software cells of one group, which requires sequential execution such as streaming data.

An execution section of a software cell is formed from the DMA command, program, and data. The DMA command includes a series of DMA commands necessary to start the program, and the program includes sub processor programs to be executed by the sub processors 1023. The data here is data to be processed by the program including the sub processor programs.

The DMA command further includes a load command, a kick command, a function program execution command, a status request command, and a status return command.

The load command is a command for loading information in the main memory 1026 into the local storage 1024 of a sub processor 1023 and includes, in addition to the load command itself, a main memory address, a sub processor ID, and an LS (Local Storage) address. The main memory address indicates an address of a predetermined area in the main memory 1026, which is a load source of the information. The sub process ID and the LS address indicate the identifier and the address of the local storage 1024 of the sub processor 1023 of a load destination of the information.

The kick command is a command for starting execution of a sub processor program and includes, in addition to the kick command, a sub processor ID and a program counter. The sub processor ID identifies a sub processor 1023 of a kicking object, and the program counter provides an address for the program counter for execution of the program.

The function program execution command is a command used by a certain information processing apparatus to request another information processing apparatus for execution of a function program as hereinafter described. The information processing controller in the information processing apparatus, which receives the function program execution command, identifies a function program to be started from a function program ID hereinafter described.

The status request command is a command for requesting for transmission of apparatus information regarding a current operation state (situation) of an information processing apparatus indicated by the transmission destination ID to an information processing apparatus indicated by the response destination ID. While the function program is hereinafter described, it is a program categorized into a function program in FIG. 6, which illustrates a configuration of software stored in the main memory 1026 of the information processing apparatus. The function program is loaded into the main memory 1026 and executed by the main processor 1021.

The status return command is a command used by an information processing apparatus, which receives the status request command, to issue a response of apparatus information of the information processing apparatus itself to an information processing apparatus indicated by the response destination ID included in the status request command. The status return command places the apparatus information into the data region of the execution section.

FIG. 4 illustrates a structure of the data area of a software cell where the DMA command is the status return command.

Referring to FIG. 4, the information processing apparatus ID is an identifier for identifying an information processing apparatus, which includes an information processing controller, and represents the ID of an information processing apparatus that transmits the status return command. The information processing apparatus ID is produced, when the power supply is made available, based on the date and hour when the power supply is made available, the network address of the information processing apparatus, the number of sub processors 1023 included in the information processing controller in the information processing apparatus, and so forth by the main processor 1021 included in the information processing controller in the information processing apparatus.

The information processing apparatus type ID includes a value representative of a characteristic of the information processing apparatus. The characteristic of the information processing apparatus is, for example, a hard disk recorder, a television receiver, a portable CD (Compact Disc) player, or the like hereinafter described. The information processing apparatus type ID may be of the type representing a function of the information processing apparatus such as image and sound recording or image and sound reproduction. The value representative of a characteristic or a function of an information processing apparatus is determined in advance. If the information processing apparatus type ID is read out, then a characteristic or a function of the information processing apparatus can be grasped.

The MS (Master/Slave) status represents as which one of a master apparatus and a slave apparatus the information processing apparatus operates as hereinafter described. Where the MS status is set to 0, this represents that the information processing apparatus should operate as a master apparatus, but where the MS status is set to 1, this represents that the information processing apparatus should operate as a slave apparatus.

The main processor operation frequency represents an operation frequency of the main processor 1021 in the information processing controller. The main processor utilization factor represents the utilization factor in the main processor 1021 regarding all programs, which are operating in the main processor 1021 at present. The main processor utilization factor is a value representing the ratio of the processing capacity being currently used to the overall processing capacity of the object main processor and is calculated, for example, in a unit of MIPS, which is a unit for evaluation of the processor processing capacity, or based on the processor utilization time per unit time. This similarly applies also to a sub processor utilization factor hereinafter described.

The sub processor number represents the number of sub processors 1023 provided in the information processing controller. The sub processor ID represents an identifier for identification of a sub processor 1023 in the information processing controller.

The sub processor status represents a status of each sub processor 1023 and may be one of an unused status, a reserved status, a busy status, and so forth. The unused status indicates that the sub processor is not used at present and is not reserved for use either. The reserved status indicates that the sub processor is not used but is reserved for use. The busy status indicates that the sub processor is currently used.

The sub processor utilization factor represents the utilization factor in the sub processor regarding a sub processor program being executed by the sub processor or being reserved for execution in the sub processor. In other words, the sub processor utilization factor indicates the utilization factor at present where the sub processor status is busy, but indicates an estimated utilization factor with which the sub processor is planned to be used later where the sub processor status is reserved.

One set of the sub processor ID, sub processor status, and sub processor utilization factor is set for one sub processor 1023. Consequently, a number of sets corresponding to the number of sub processors 1023 in one information processing controller are set.

The main memory total capacity and the main memory utilization capacity represent the total capacity and the capacity being currently used of the main memory 1026 connected to the information processing controller, respectively.

The external recording section number represents the number of external recording sections 1031 connected to the information processing controller. The external recording section ID is information for unique identification of each of the external recording sections 1031 connected to the information processing controller. The external recording section type ID represents the type of each of the external recording sections 1031 (for example, a hard disk, a CD±RW, a DVD±RW, a memory disk, an SRAM, a ROM, or the like).

The external recording section total capacity and the external recording section utilization capacity represent the total capacity and the currently used capacity of an external recording section 1031 identified with the external recording section ID, respectively.

A set of the external recording section ID, external recording section type ID, external recording section total capacity, and external recording section utilization capacity is set for one external recording section 1031. Consequently, a number of sets corresponding to the number of external recording sections 1031 connected to the information processing controller are set. In particular, where a plurality of external recording sections are connected to an information processing controller, different external recording section IDs are applied individually to the external recording sections, and also the external recording section type IDs, external recording section total capacities, and external recording section utilization capacities are managed separately from each other.

### (4-9. Execution of a Software Cell)

The main processor 1021 included in the information processing controller in a certain information processing apparatus produces a software cell having such a configuration as described above and transmits the software cell to a different information processing apparatus through the network 9 and also to the information processing controller in the certain information processing apparatus. The information processing apparatus of the sender, the information processing apparatus of the transmission destination, the information processing apparatus of the response destination, and the information processing controllers in the apparatus mentioned are individually identified with the sender ID, transmission destination ID, and response destination ID described hereinabove, respectively.

The main processor 1021 included in the information processing controller in the information processing apparatus receiving the software cell stores the software cell into the main memory 1026. Further, the main processor 1021 of the transmission destination reads out the software cell and processes the DMA command included in the software cell.

In particular, the main processor 1021 of the transmission destination first executes the load command. Consequently, the information is loaded from the main memory address indicated by the load command into a predetermined area of the local storage 1024 in a sub processor specified by the sub processor ID and the LS address included in the load command. The information loaded here is a sub processor program or data or some other indicated data included in the received software cell.

Then, the main processor 1021 outputs the kick command to a sub processor indicated by the sub processor ID included in the kick command together with a program counter included in the kick command similarly.

The indicated sub processor executes the sub processor program in accordance with the kick command and the program counter. Then, the sub processor stores a result of the execution into the main memory 1026, and then notifies the main processor 1021 of completion of the execution.

It is to be noted that the processor executing the software cell in the information processing controller in the information processing apparatus of the transmission destination is not limited to a sub processor 1023, but it is possible to designate the main processor 1021 so as to execute a main memory program such as a function program included in the software cell.

In this instance, the information processing apparatus of the sender transmits, to the information processing apparatus of the transmission destination, a software cell whose DMA command is the load command. The software cell includes a main memory program and data to be processed by the main memory program in place of the sub processor program. The main memory program and the data to be processed by the main memory program are stored into the main memory 1026.

Then, the information processing apparatus of the sender transmits, to the information processing apparatus of the transmission destination, a software cell whose DMA command is the kick command or the function program execution command. The software cell includes the main processor ID and main memory address of the information processing controller in the information processing apparatus of the transmission destination, an identifier for identification of the main memory program such as a function program ID hereinafter described, and a program counter. Thus, the main processor 1021 may execute the main memory program.

As described above, in the network system according to the present embodiment, an information processing apparatus of the sender transmits a sub processor program or a main memory program in the form of a software cell to an information processing apparatus of the transmission destination. Further, the information processing apparatus of the sender causes the information processing controller in the information processing apparatus of the transmission destination to load the sub processor program into a sub processor 1023. Consequently, the information processing apparatus of the sender can cause the information processing apparatus of the transmission destination to execute the sub processor program or the main memory program.

Where the program included in the received software cell is a sub processor program, the information processing controller in the information processing apparatus of the transmission destination loads the sub processor program into a designated sub processor. Thus, the information processing controller causes the sub processor to execute the sub processor program or the main memory program included in the software cell.

Accordingly, even if the user does not operate the information processing apparatus of the transmission destination, the sub processor program or the main memory program can be executed automatically by the information processing controller in the information processing apparatus of the transmission destination.

In this manner, any information processing apparatus can acquire, where the information processing controller thereof does not include a sub processor program or a main memory program such as a function program, such programs from another information processing apparatus connected thereto by the network. Further, each sub processor and the main memory can transfer data therebetween in accordance with the DMA system and such sandboxes as described hereinabove are used. In such a case, even where it is necessary to process data at multiple states within one information processing controller, the processing can be executed at a high speed and with a high degree of security.

### [5. Example 2 of Distributed Processing between the Information Processing Apparatus]

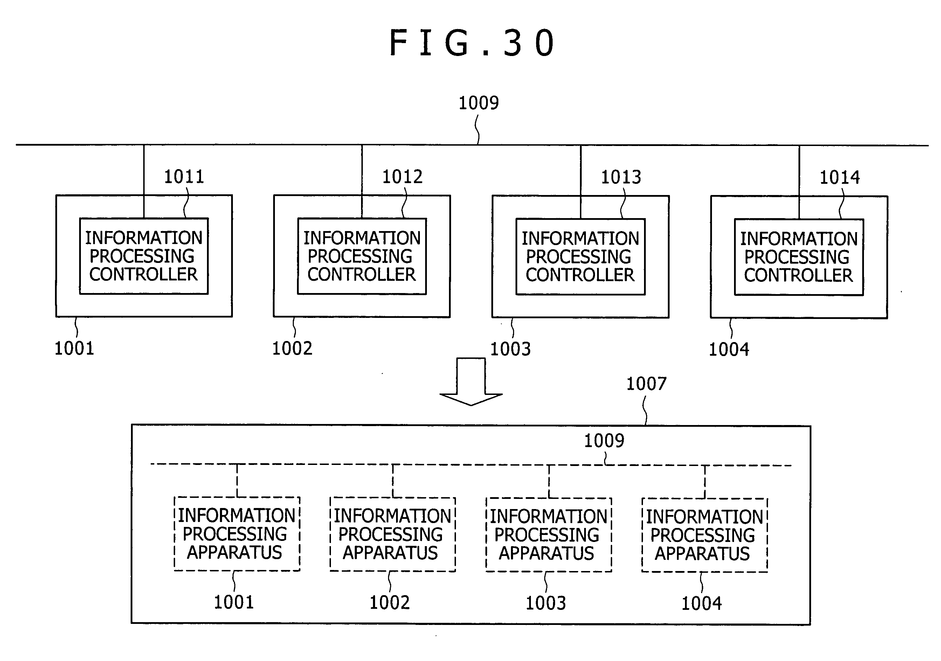

As a result of the distributed processing through use of a software cell, the plural information processing apparatus 1001, 1002, 1003 and 1004 connected to the network 1009 as seen at the upper stage in FIG. 30 operate as a virtual single information processing apparatus 1007 as seen at the lower stage in FIG. 30. However, in order to implement such virtual operation as just described, processes described below must be executed by such a configuration as described below.

### (5-1. Software Configuration of the System and Loading of a Program)

FIG. 6 illustrates a configuration of software to be stored by the main memories 1026 of the individual information processing controllers. Referring to FIG. 6, the pieces of software (programs) are recorded in an external recording section 1031 connected to the information processing controller before the power supply is made available to the information processing apparatus.

The programs are categorized, depending upon the function or characteristic thereof, into control programs, function programs, and device drivers.

The control programs are provided commonly in the information processing controllers and executed by the main processor 1021 in each of the information processing controllers. The control programs include an MS (Master/Slave) manager and a capacity exchange program hereinafter described.

The function programs are executed by the main processors 1021, and for each information processing apparatus, such function programs as a recording program, a reproduction program, a material search program, and so forth are provided for the information processing controller.

The device drivers are provided for inputting and outputting (transmission and reception) of each information processing controller (information processing apparatus), and such devices as those for broadcast reception, monitor outputting, bit stream inputting/outputting, network inputting/outputting, and so forth, which are suitable for each of the information processing apparatus, are provided for the information processing controller.

When the power supply is made available to an information processing apparatus in a state wherein the information processing apparatus is physically connected to the network 1009 by connection of a cable or the like and consequently the information processing apparatus is connected to the network 1009 also electrically and functionally, the main processor 1021 of the information processing controller of the information processing apparatus loads the programs belonging to the control programs and the programs belonging to the device drivers into the main memory 1026.

As a loading procedure of the programs, the main processor 1021 first controls the DC 1030 to execute a reading out instruction to read out the programs from the external recording section 1031 and then controls the DMAC 1025 to execute a writing instruction to write the programs into the main memory 1026.

The programs belonging to the function programs may be handled such that only a necessary one of the programs is loaded when necessary or otherwise such that all of them are loaded immediately after the main power supply is made available similarly to the programs belonging to the other categories.

The programs belonging to the function programs need not necessarily be recorded in the external recording sections 1031 of all of the information processing apparatus connected to the network, but if they are recorded in an external recording section 1031 of any one of the information processing apparatus, they can be loaded into the other information processing apparatus by the method described hereinabove. As a result, the function programs can be executed by the virtual single information processing apparatus 1007 as shown at the lower stage of FIG. 30.

As described hereinabove, a function program executed by the main processor 1021 sometimes operates cooperatively with a sub processor program processed by a sub processor 1023. Therefore, when the main processor 1021 reads out a function program from the external recording section 1031 and writes the function program into the main memory 1026, if any sub processor is to operate cooperatively with the object function program, then the main processor 1021 writes also the sub processor program into the same main memory 1026 together. In this instance, although a single sub processor program may be to operate cooperatively, a plurality of sub processor programs may possibly be to operate cooperatively. Where a plurality of sub processor programs are to operate cooperatively, all of them are written into the main memory 1026.

Each sub processor program written in the main memory 1026 is thereafter written into the local storage 1024 in the sub processor 1023 and operates cooperatively with the function program processed by the main processor 1021.

As described hereinabove in connection with the software cell shown in FIG. 3, an identifier, with which a program can be identified uniquely, is allocated as a function program ID to each of the function programs. The function program ID is determined from the date and hour of production, the information processing apparatus ID, and so forth at a stage of production of the function program.

Also each sub processor program has a sub processor program ID allocated thereto so that the sub processor program can be identified uniquely. The sub processor program ID allocated in this manner may be an identifier which has some relationship to the function program ID of the function program of the counterpart of the cooperative operation thereof such as, for example, an identifier which is composed of the function program ID as a parent number and a branch number added to the tail end of the function program ID. However, the sub processor program ID may otherwise be an identifier having no relationship to the function program ID of the function program of the counterpart of the cooperative operation.

Anyway, where a function program and a sub processor program should operate cooperatively, it is necessary for each of them to store the program ID of the identifier of the counterpart therein. Also where a function program should operate cooperatively with a plurality of sub processor programs, the function program stores all of the sub processor program IDs of the plural sub processor programs.

The main processor 1021 secures, in the main memory 1026, an area for storing apparatus information (information relating to the apparatus such as a type, a capacity and an operation state of the apparatus, resources owned by the apparatus and so forth) of the information processing apparatus in which the main processor 1021 operates, and records the information as an apparatus information table of the information processing apparatus itself. The apparatus information here is information of the information processing apparatus ID and so forth illustrated in FIG. 4.

### (5-2. Determination of the Master/Slave in the System)

In the network system described above, when the main power supply to a certain information processing apparatus is made available, the main processor 1021 of the information processing controller of the information processing apparatus loads a master/slave manager (hereinafter referred to as MS manager) into the main memory 1026 and executes the master/slave manager.

After the MS manager detects that the information processing apparatus in which the MS manager operates is connected to the network 1009, it confirms presence of the other information processing apparatus connected to the same network 1009. The "connection" or "presence" here represents that the information processing apparatus is connected to the network 1009 not only physically but also electrically and functionally.

The information processing apparatus in which the MS manager itself operates is hereinafter referred to as self apparatus, and any other information processing apparatus is referred to as different apparatus. Also the term pertaining apparatus represents the pertaining information processing apparatus.

A method by which the MS manager confirms presence of a different information processing apparatus connected to the same network 1009 is described in the following.

The MS manager produces a software cell that designates the status request command as the DMA command and designates the pertaining information processing apparatus as the sender ID and the response destination ID but does not specify the transmission destination ID. Then, the MS manager transmits the software cell to the network to which the pertaining information processing apparatus is connected, and sets a timer for network connection confirmation. The timeout time of the timer is, for example, 10 minutes.

If a different information processing apparatus is connected to the network system, then the different apparatus receives the software cell of the status request command and transmits a software cell whose DMA command is the status return command and which includes apparatus information of the self apparatus (different apparatus) as the data to an information processing apparatus which is specified by the response destination ID of the received software cell and has issued the status request command. The software cell of the status return command at least includes information for specifying the different apparatus (information processing apparatus ID, information regarding the main processor, information regarding a sub processor, or the line) and the MS status of the different apparatus.

The MS manager of the information processing apparatus, which has issued the status request command, supervises reception of a software cell of the status return command transmitted from the different apparatus on the network until timeout occurs with the timer for network connection confirmation. As a result, if the status return command representative of the MS status = 0 (master apparatus) is received, then the MS status in the apparatus information table of the self apparatus is set to 1. Consequently, the pertaining apparatus becomes a slave apparatus.

On the other hand, if no status return command is received within the time until timeout occurs with the timer for network connection confirmation, or if the status return command representative of the MS status = 0 (master apparatus) is not received, then the MS status in the apparatus information table of the self apparatus is set to 0. Consequently, the pertaining apparatus becomes a master apparatus.

In short, if a new information processing apparatus is connected to the network 1009 in a state wherein no apparatus is connected to the network 1009 or in another state wherein a master apparatus does not exist on the network 1009, then the pertaining apparatus is automatically set as a master apparatus. On the other hand, if a new information processing apparatus is connected to the network 1009 in a further state wherein a master apparatus exists already on the network 1009, then the pertaining apparatus is automatically set as a slave apparatus.

In any of the master apparatus and slave apparatus, the MS manager periodically transmits the status request command to the different apparatus on the network 1009 to inquire about the status information to supervise the situation of the different apparatus. As a result, when the connection state of the network 1009 undergoes a variation such as when the main power supply to an information processing apparatus connected to the network 1009 is cut or an information processing apparatus is disconnected from the network 1009 and consequently the status return command is not returned from the particular different apparatus within a predetermined period of time set for the discrimination in advance, the information is conveyed to a capacity exchange program hereinafter described. (5-3. Acquisition of Apparatus Information through Capacity Exchange)

If the main processor 1021 receives, from the MS manager, a notification of an inquiry about a different apparatus on the network 1009 and completion of setting of the MS status of the self apparatus, then it executes a capacity exchange program.

The capacity exchange program acquires, if the self apparatus is a master apparatus, apparatus information of all different apparatus connected to the network 1009, that is, apparatus information of all slave apparatus.

The acquisition of apparatus information of a different apparatus can be performed such that the DMA command produces and transmits a software cell of the status request command to the different apparatus and then receives a software cell whose DMA command is the status return command and includes apparatus information of the different apparatus as the data from the different apparatus.

The capacity exchange program secures an area for storing apparatus information of all different apparatus (all slave apparatus) connected to the network 1009 in the main memory 1026 of the self apparatus and stores the information as apparatus information tables of the different apparatus (slave apparatus) similarly to the apparatus information table of the self apparatus as the master apparatus.

In other words, the apparatus information of all of the information processing apparatus connected to the network 1009 including the self apparatus is stored as apparatus information tables in the main memory 1026 of the master apparatus.

On the other hand, if the self apparatus of the capacity exchange program is a slave apparatus, then the capacity exchange program acquires the apparatus information of all of the different apparatus connected to the network 1009, that is, the apparatus information of the master apparatus and all of the slave apparatus other than the self apparatus, and records the information processing apparatus IDs and the MS statuses included in the apparatus information into the main memory 1026 of the self apparatus.

In other words, in the main memory 1026 of each slave apparatus, the apparatus information of the self apparatus is recorded as an apparatus information table, and the information processing apparatus IDs and the MS statuses of all of the master apparatus and the slave apparatus connected to the network 1009 other than the self apparatus are recorded as different apparatus information tables.

Further, in any of the master apparatus and the slave apparatus, when the capacity exchange program receives a notification that an information processing apparatus is newly connected to the network 1009 from the MS manager as described above, it acquires apparatus information of the information processing apparatus and registers the apparatus information into the main memory 1026 in such a manner as described hereinabove.

It is to be noted that the MS manager and the capacity exchange program may be executed not by the main processor 1021 but by any sub processor 1023. Further, the MS manager and the capacity exchange program preferably are resident programs that operate normally while the main power supply to the information processing apparatus is available.

### (5-4. When an Information Processing Apparatus is Disconnected from the Network)

In any of the master apparatus and the slave apparatus, if the capacity exchange program is notified from the MS manager that the main power supply to an information processing apparatus connected to the network 1009 is disconnected or an information processing apparatus is disconnected from the network 1009, it deletes the apparatus information table of the information processing apparatus from the main memory 1026 of the self apparatus.

Further, if the information processing apparatus disconnected from the network 1009 is the master apparatus, then another master apparatus is determined newly by the following method.

In particular, for example, each of those information processing apparatus that are not disconnected from the network 1009 replaces the information processing apparatus IDs of the self apparatus and the different apparatus into numerical values and compares the information processing apparatus ID of the self apparatus with the information processing apparatus IDs of the different apparatus. If the information processing apparatus ID of the self apparatus exhibits the lowest value among the information processing apparatus that are not disconnected from the network 1009, then the slave apparatus changes itself to the master apparatus and sets the MS status to zero. Then, it operates as the master apparatus and acquires and records the apparatus information of all of the different apparatus (slave apparatus) connected to the network 1009 into the main memory 1026 as described hereinabove.

### (5-5. Distributed Processing between Information Processing Apparatus Based on Apparatus Information)

In order to allow a plurality of information processing apparatus 1001, 1002, 1003 and 1004 connected to the network 1009 to operate as a virtual single information processing apparatus 1007 as shown at the lower stage of FIG. 30, it is necessary for the master apparatus to grasp an operation of a user and operation states of the slave apparatus.

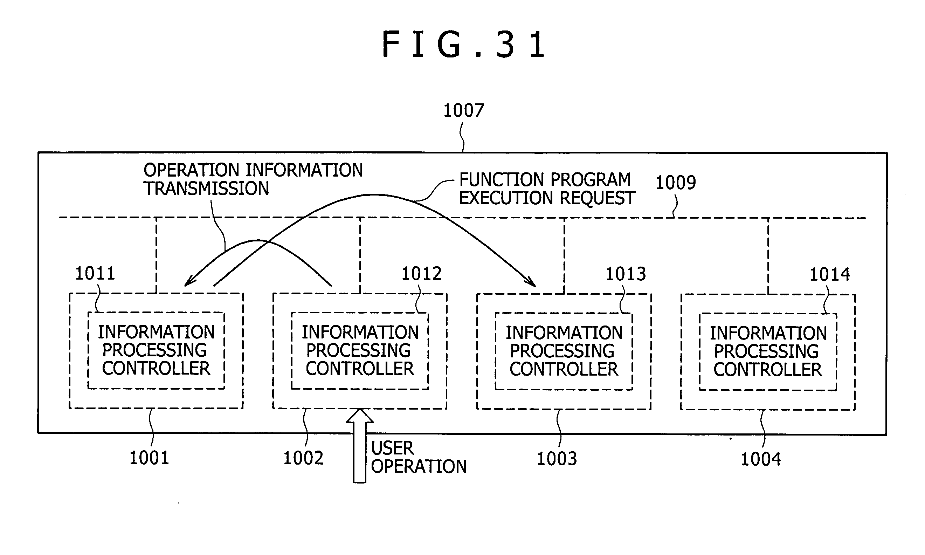

FIG. 31 shows four information processing apparatus in a state wherein they operate as a virtual single information processing apparatus 1007. It is assumed that the information processing apparatus 1001 acts as the master apparatus while the information processing apparatus 1002, 1003 and 1004 act as slave apparatus A, B, and C, respectively.

When a user operates any of the information processing apparatus connected to the network 1009, if the object of the operation is the master apparatus 1001, then the operation information then is grasped directly by the master apparatus 1001. On the other hand, if the object of the operation is a slave apparatus, then the operation information then is transmitted from the operated slave apparatus to the master apparatus 1001. In other words, irrespective of whether the object of operation of the user is the master apparatus 1001 or one of the slave apparatus, the master apparatus 1001 always grasps the operation information. Transmission of the operation information is performed, for example, using a software cell whose DMA command is the operation information transmission command.

Then, the main processor 1021-1 included in the information processing controller 1011 in the master apparatus 1001 selects a function program to be executed in accordance with the operation information. In this instance, if necessary, the main processor 1021-1 included in the information processing controller 1011 in the master apparatus 1001 loads the function program from the external recording section 1031-1 or 1031-2 of the self apparatus into the main memory 1026-1 using the method described hereinabove. However, the function program may otherwise be transmitted from a different information processing apparatus (slave apparatus) to the master apparatus 1001.

The function program defines required specifications regarding apparatus such as an information processing apparatus type ID, a processing capacity of the main processor or a sub processor, a main memory' utilization capacity, and conditions relating to an external recording section as represented as various types of information in FIG. 4, which are required for each execution unit.

The main processor 1021-1 included in the information processing controller 1011 in the master apparatus 1001 reads out such requested specifications required by the individual function programs. Further, the main processor 1021-1 refers to the apparatus information tables recorded in the main memory 1026-1 by the capacity exchange program in advance to read out the apparatus information of the individual information processing apparatus. The apparatus information here signifies the items of information including the item of the information processing apparatus ID and the succeeding items illustrated in FIG. 4 and is information relating to the main processor, sub processors, main memory, and external recording sections.

The main processor 1021-1 included in the information processing controller 1011 in the master apparatus 1001 successively compares the apparatus information of the information processing apparatus connected to the network 1009 with the required specifications necessary for execution of the function program.

For example, if the function program requires a recording function, then the main processor 1021-1 specifies and extracts only those information processing apparatus, which have a recording function, based on the information processing apparatus type IDs. Further, the main processor 1021-1 specifies that one of the slave apparatus which can assure the processing capacity of the main processor or a sub processor necessary to execute the processing program, the main memory utilization capacity, and conditions regarding an external recording section as an execution request candidate apparatus. Here, if a plurality of execution request candidate apparatus are specified, then one of the execution request candidate apparatus is specified and selected.

After a slave apparatus to which an execution request is to be issued is specified, the main processor 1021-1 included in the information processing controller 1011 in the master apparatus 1001 updates the apparatus information table with regard to the specified slave apparatus recorded in the main memory 1026-1 included in the information processing controller 1011 in the self apparatus.

Further, the main processor 1021-1 included in the information processing controller 1011 in the information processing apparatus 1001 produces a software cell, which includes the function program execution command as the DMA command, and sets information of a necessary sub processor and the sandbox size (refer to FIG. 3) regarding the function program to the cell interface of the software cell. Then, the main processor 1021-1 transmits the resulting software cell to the slave apparatus, which is requested to execute the function program.

The slave apparatus requested to execute the function program executes the function program and updates the apparatus information table of the self apparatus. In this instance, if necessary, the main processor 1021 included in the information processing controller in the slave apparatus loads the function program and a sub processor program or programs, which should operate cooperatively with the function program, from an external recording section 1031 of the self apparatus into the main memory 1026 using the method described hereinabove.

The system may be configured such that, if the necessary function program or a sub processor program or programs which should operate cooperatively with the function program is not recorded in any of the external recording sections 1031 of the slave apparatus requested to execute the function program, then a different information processing apparatus transmits the function program and the sub processor program or programs to the slave apparatus requested to execute the function program.

Also it is possible for the sub processor program or programs to be executed by a different information processing apparatus making use of the load command and the kick command described hereinabove.

After the execution of the function program comes to an end, the main processor 1021 included in the information processing controller in the slave apparatus having executed the function program transmits an execution end notification to the main processor 1021-1 included in the information processing controller 1011 in the master apparatus 1001, and updates the apparatus information table of the self apparatus. The main processor 1021-1 included in the information processing controller 1011 in the master apparatus 1001 receives the end notification and updates the apparatus information table of the slave apparatus having executed the function program.

The main processor 1021-1 included in the information processing controller 1011 in the master apparatus 1001 may possibly select the self apparatus as an information processing apparatus, which can execute the function program, from a result of the reference to the apparatus information tables of the self apparatus and the different apparatus. In this instance, the master apparatus 1001 executes the function program.

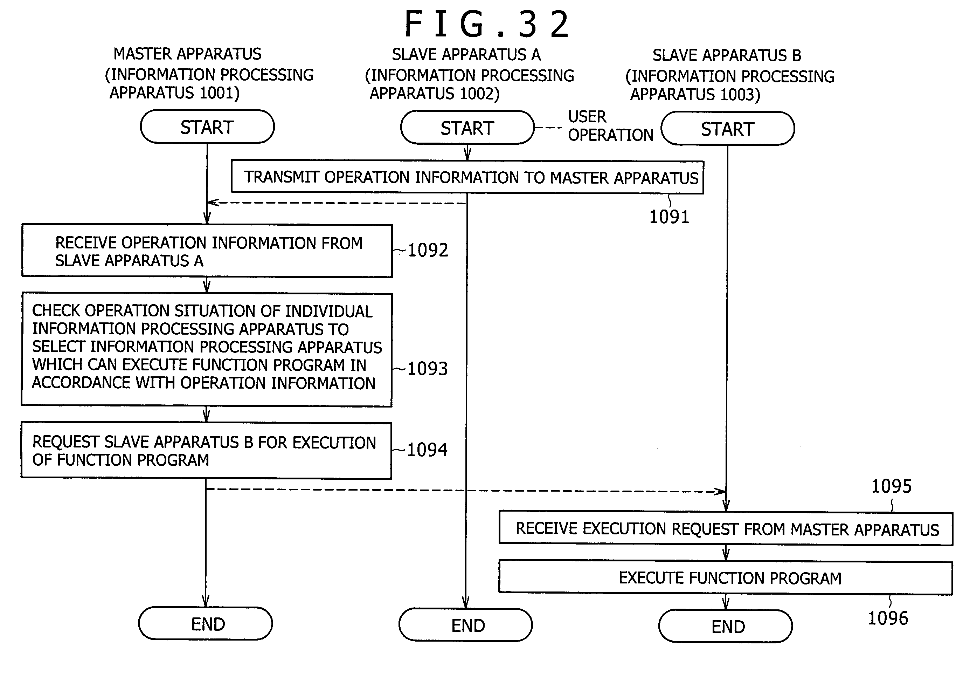

An example of distributed processing where a user operates, in the example illustrated in FIG. 31, the slave apparatus A (information processing apparatus 1002) and the different slave apparatus B (information processing apparatus 1003) executes a function program in response to the operation is described with reference to FIG. 32.

In the example illustrated in FIG. 32, when the user operates the slave apparatus A, distributed processing of the entire network system including the slave apparatus A is started, and the slave apparatus A first transmits operation information then to the master apparatus 1001 at step 1091.

The master apparatus 1001 receives the operation information at step 1092 and checks the operation states of the information processing apparatus from the apparatus information tables of the self apparatus and the different apparatus recorded in the main memory 1026-1 of the self apparatus to select an information processing apparatus, which can execute a function program corresponding to the received operation information at step 1093. In the example illustrated in FIG. 32, the slave apparatus B is selected.

Then, the master apparatus 1001 issues a request for execution of the function program to the selected slave apparatus B at step 1094.

The slave apparatus B receives the execution request at step 1095 and executes the function program whose execution is requested at step 1096.

In this manner, if a user operates only one of the information processing apparatus, then it can cause the plural information processing apparatus 1001, 1002, 1003 and 1004 to operate as a virtual single information processing apparatus 1007 without operating any other one of the information processing apparatus.

### (5-6. Particular Examples of the Information Processing Apparatus and the System)

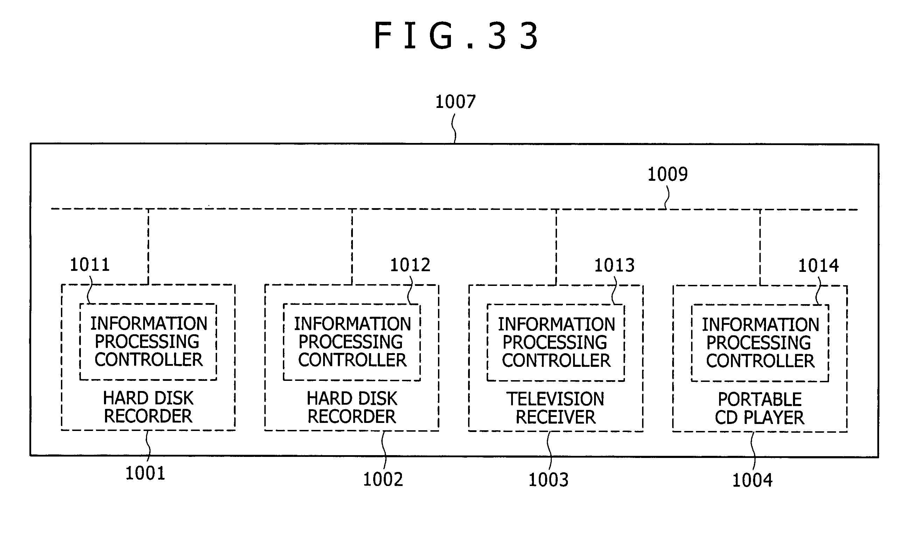

Each of the information processing apparatus 1001, 1002, 1003 and 1004 connected to each other through the network 1009 may basically have any configuration only if information processing is performed by such an information processing controller 1011, 1012, 1013 or 1014 as described hereinabove. FIG. 33 shows an example of a configuration of the information processing apparatus.

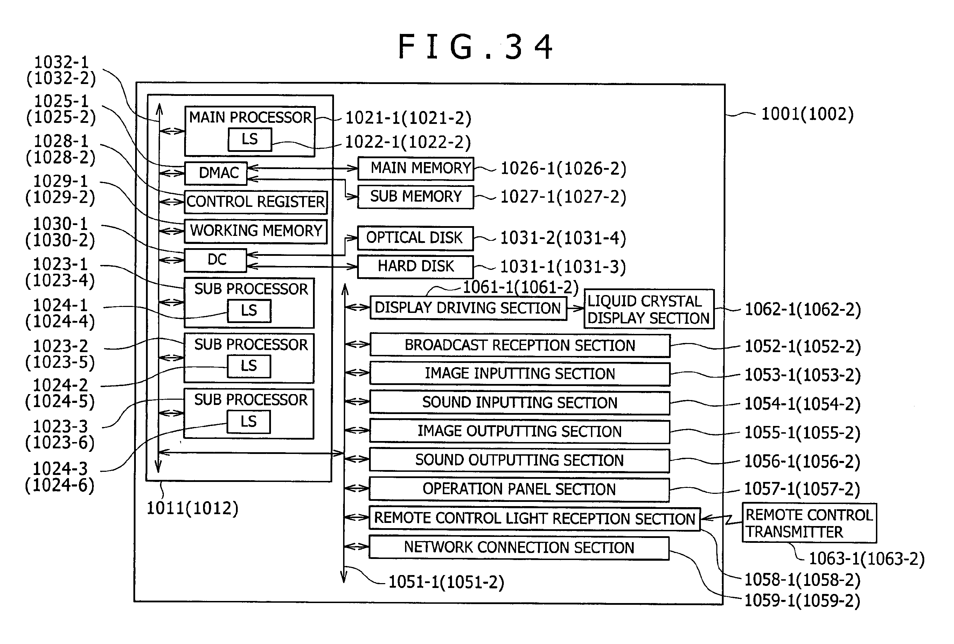

In the example shown, the information processing apparatus 1001 which includes the information processing controller 1011 is a hard disk recorder. FIG. 34 shows a hardware configuration of the hard disk recorder shown in FIG. 33. Referring to FIG. 34, the information processing apparatus 1001 shown includes, as the hardware configuration thereof, a built-in hard disk serving as the external recording section 1031-1 shown in FIG. 22. The information processing apparatus 1001 further includes the external recording section 1031-2 shown in FIG. 22 into which an optical disk such as a DVD±R/RW, a CD±R/RW, a Blu-rayDisc (registered trademark) and so forth can be loaded. The information processing apparatus 1001 further includes a broadcast reception section 1052-1, an image inputting section 1053-1, a sound inputting section 1054-1, an image outputting section 1055-1, a sound outputting section 1056-1, an operation panel section 1057-1, a remote control light reception section 1058-1, a network connection section 1059-1 and a display driving section 1061-1 connected to a bus 1051-1 which is in turn connected to the bus 1032-1 of the information processing controller 1011. A liquid crystal display section 1062-1 is connected to the display driving section 1061-1.

The broadcast reception section 1052-1, image inputting section 1053-1 and sound inputting section 1054-1 receive a broadcasting signal or receive an image signal and a sound signal from the outside of the information processing apparatus 1001, convert the received signal or signals into digital data of a predetermined format, and signals the digital data to the bus 1051-1 so as to be processed by the information processing controller 1011. The image outputting section 1055-1 and the sound outputting section 1056-1 process image data and sound data signaled from the information processing controller 1011 to the bus 1051-1 and signal the image data and the sound data as they are or after converted into analog signals to the outside of the information processing apparatus 1001. The remote control light reception section 1058-1 receives a remote control infrared signal from a remote control transmitter 1063-1.

The liquid crystal display section 1062-1 displays an operation situation of the information processing apparatus 1001 in the form of a hard disk recorder and displays a connection situation of the network 1009 and a state of the entire network system as hereinafter described.

Also the information processing apparatus 1002 which includes the information processing controller 1012 shown in FIG. 33 is a hard disk recorder and is configured similarly to the information processing apparatus 1001 as seen in FIG. 34 in which reference numerals are applied in parentheses.

The information processing apparatus 1001 and 1002 each in the form of a hard disk recorder include, as the software configuration, the MS manager and the capacity exchange program as the control programs as illustrated in FIG. 6. Further, the information processing apparatus 1001 and 1002 include programs for image and sound recording, image and sound reproduction, material search and program recording reservation as the function programs. Furthermore, the information processing apparatus 1001 and 1002 include programs for broadcast reception, image inputting, sound inputting, image outputting, sound outputting, external recording section inputting/outputting and network inputting/outputting as the device drivers.

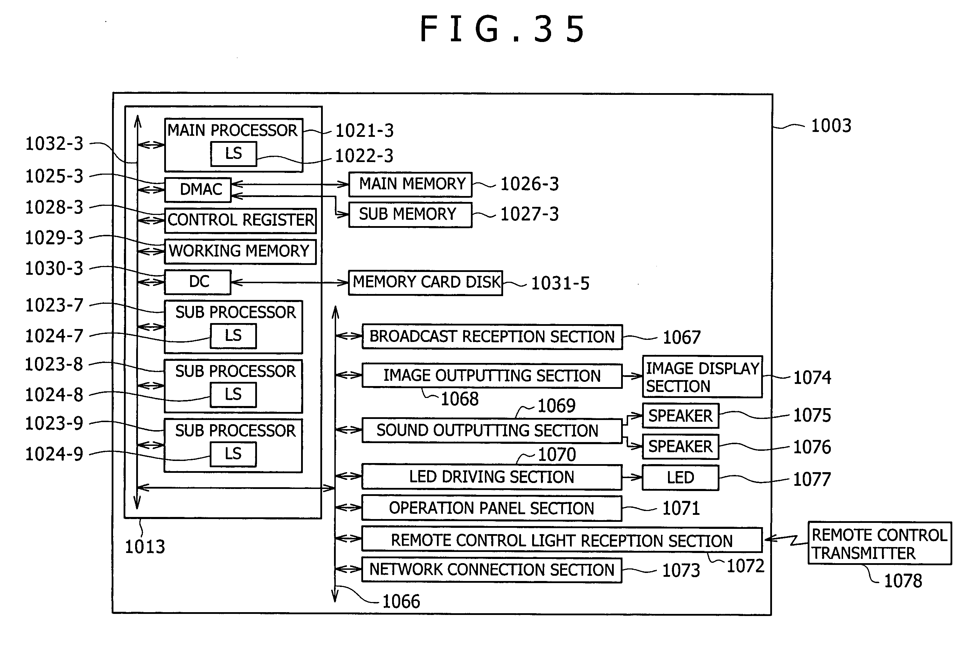

The information processing apparatus 1003 shown in FIG. 33 which includes the information processing controller 1013 has such a hardware configuration as shown in FIG. 35. Referring to FIG. 35, the information processing apparatus 1003 includes the external recording section 1031-5 shown in FIG. 22 into which a memory card disk can be loaded. The information processing apparatus 1003 further includes a broadcast reception section 1067, an image outputting section 1068, a sound outputting section 1069, an operation panel section 1071, a remote control light reception section 1072, a network connection section 1073, and an LED (light emitting diode) driving section 1070 connected to a bus 1066 which is in turn connected to the bus 1032-3 of the information processing controller 1013. An image display section 1074 such as a liquid crystal display apparatus or a plasma display apparatus is connected to the image outputting section 1068, and left and right speakers 1075 and 1076 are connected to the sound outputting section 1069. Further, an LED section 1077 is connected to the LED driving section 1070.

The broadcast reception section 1067 receives a broadcasting signal, converts an image signal and a sound signal of the broadcasting signal individually into digital data of predetermined formats, and signals the digital data to the bus 1066 so as to be processed by the information processing controller 1013. The image outputting section 1068 processes the image data signaled from the information processing controller 1013 to the bus 1066 and outputs resulting image data to the image display section 1074. The sound outputting section 1069 processes the sound data signaled from the information processing controller 1013 to the bus 1066 and outputs resulting sound data to the speakers 1075 and 1076. The remote control light reception section 1072 receives a remote control infrared signal from a remote control transmitter 1078.

The LED section 1077 indicates a connection state of the network 1009 or a state of the entire network system as hereinafter described.

It is to be noted that the information processing controller 1013 whose internal configuration is not shown in FIG. 22 includes a main processor 1021-3, sub processors 1023-7, 1023-8 and 1023-9, a direct memory access controller (DMAC) 1025-3, a disk controller (DC) 27-3, and a bus 1032-3. The main processor 1021-3 includes a local storage (LS) 1022-3, and the sub processors 1023-7, 1023-8 and 1023-9 include local storages (LS) 1024-7, 1024-8 and 1024-9, respectively.

The information processing apparatus 1003 in the form of a television receiver includes, as the software configuration, the MS manager and the capacity exchange program as the control programs as illustrated in FIG. 6. Further, the information processing apparatus 1003 includes programs for image and sound processing and so forth as the function programs and includes programs for broadcast reception, image outputting, sound outputting, network inputting/outputting and so forth as the device drivers.

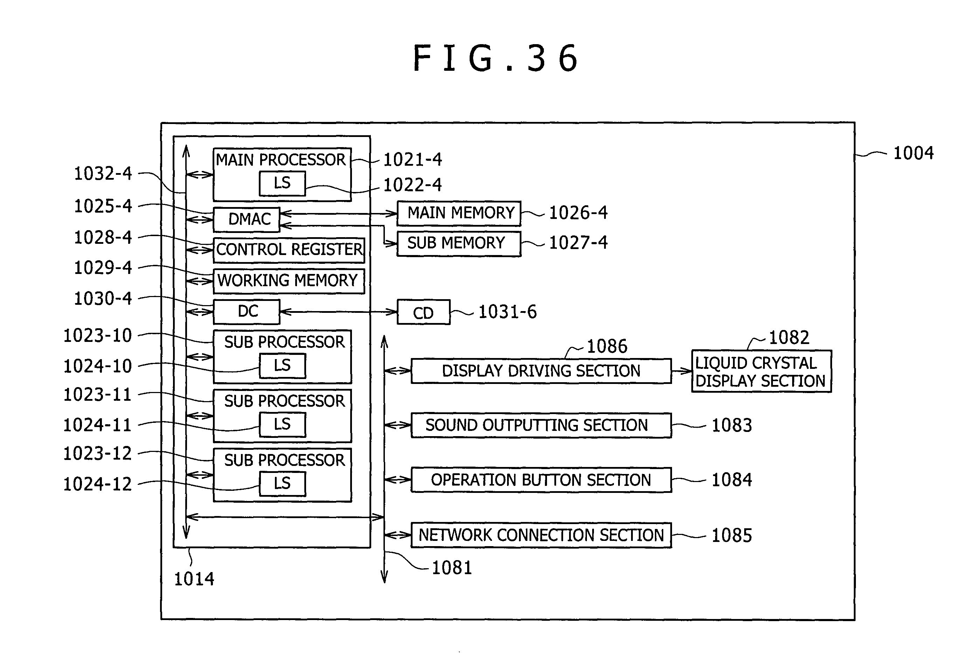

The information processing apparatus 1004 shown in FIG. 33 which includes the information processing controller 1014 is a portable CD player. FIG. 36 shows a hardware configuration of the information processing apparatus 1004 in the form of a portable CD player. Referring to FIG. 22, the information processing apparatus 1004 includes the external recording section 1031-6 into which a CD (Compact Disc) can be loaded. The information processing apparatus 1004 further includes a display driving section 1086, a sound outputting section 1083, an operation button section 1084 and a network connection section 1085 connected to a bus 1081 which is in turn connected to the bus 1032-4 of the information processing controller 1014. A liquid crystal display section 1082 is connected to the display driving section 1086.

The liquid crystal display section 1082 displays tune titles and so forth for selection operation of the information processing apparatus 1004 in the form of a portable CD player and displays a connection state of the network 1009 or a state of the entire network system.

It is to be noted that the information processing controller 1014 whose internal configuration is not shown in FIG. 22 includes a main processor 1021-4, sub processors 1023-10, 1023-11 and 1023-12, a direct memory access controller (DMAC) 1025-4, a disk controller (DC) 1030-4 and a bus 1032-4. The main processor 1021-4 includes a local storage LS) 1022-4, and the sub processors 1023-10, 1023-11 and 1023-12 include local storages (LS) 1024-10, 1024-11 and 1024-12, respectively.

The information processing apparatus 1004 in the form of a portable CD player includes, as the software configuration, the MS manager and the capacity exchange program as the control programs as illustrated in FIG. 6. Further, the information processing apparatus 1004 includes programs for music reproduction and so forth as the function programs and includes programs for sound outputting, CD control and network inputting/outputting as the device drivers.

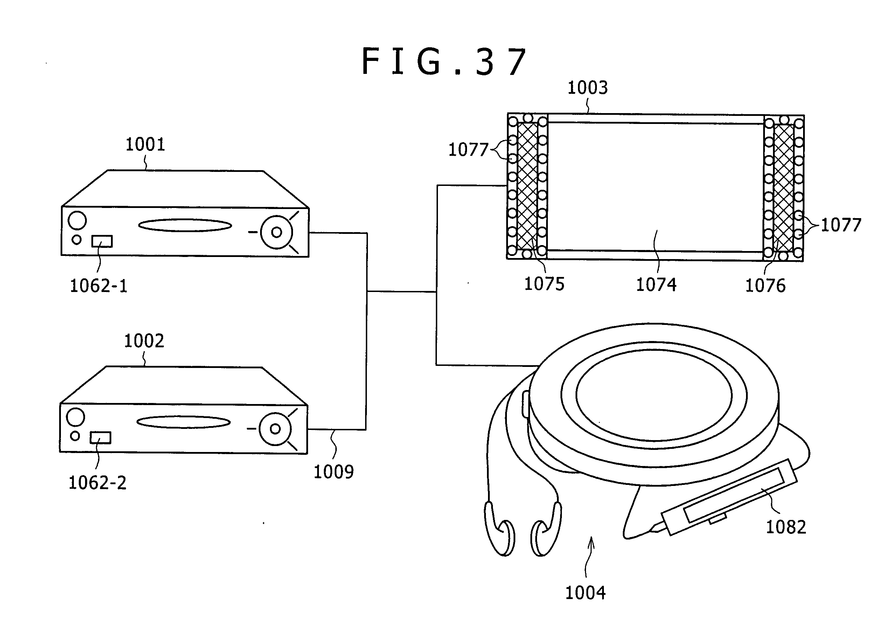

The network system having such a configuration as described above with reference to FIG. 33 has such an appearance as shown in FIG. 37.

The liquid crystal display sections 1062-1 and 1062-2 are provided on the front of the information processing apparatus 1001 and 1002 each in the form of a hard disk recorder, respectively. Meanwhile, the speakers 1075 and 1076 are provided on the left and right sides of the image display section 1074 of the information processing apparatus 1003 in the form of a television receiver, and the LED section 1077 is provided around the speakers 1075 and 1076 on the information processing apparatus 1003. Further, the liquid crystal display section 1082 is provided on the information processing apparatus 1004 in the form of a portable CD player. The LED section 1077 includes a plurality of LEDs as hereinafter described.

It is assumed that, in the system shown in FIGS. 33 to 37, the information processing apparatus 1001, 1003, and 1004 are connected to the network 1009, and the information processing apparatus 1001 is set as the master apparatus (MS status = 0) and the information processing apparatus 1003 and 1004 are set as slave apparatus (MS status = 1).

If, in this state, the information processing apparatus 1002 is newly connected to the network 1009, then the MS manager, which is executed in the main processor 1021-2 included in the information processing controller 1012 in the information processing apparatus 1002, inquires the other information processing apparatus 1001, 1003, and 1004 about the MS status and recognizes that the information processing apparatus 1001 already exists as the master apparatus. Thus, the MS manager sets the self apparatus (information processing apparatus 1002) as a slave apparatus (MS status = 1). Meanwhile, the information processing apparatus 1001 set as the master apparatus collects the apparatus information of the apparatus including the newly added information processing apparatus 1002 and updates the apparatus information tables in the main memory 1026-1 based on the collected apparatus information.

Operation of the network system of FIG. 33 when, in this state, the user operates the information processing apparatus (television receiver) 1003, which is a slave apparatus, for recording reservation of a broadcast program for two hours is described below.

In this instance, the information processing apparatus 1003, which is a slave apparatus, accepts inputting of recording reservation information including information of recording start time, recording end time, a recording object broadcast channel, and a recording picture quality, and produces a software cell including the recording reservation information and the recording reservation command as the DMA command. Then, the information processing apparatus 1003 transmits the produced software cell to the information processing apparatus (hard disk recorder) 1001, which is the master apparatus.

The main processor 1021-1 included in the information processing controller 1011 in the information processing apparatus 1001, which receives the software cell whose DMA command is the recording reservation command, reads out the recording reservation command and refers to the apparatus information tables in the main memory 1026-1 to specify an information processing apparatus, which can execute the recording reservation command.

First, the main processor 1021-1 reads out the information processing apparatus type IDs of the information processing apparatus 1001, 1002, 1003, and 1004 included in the apparatus information tables to extract those information processing apparatus that can execute a function program corresponding to the recording reservation command. Here, the information processing apparatus 1001 and 1002 having the information processing apparatus type ID indicative of the recording function are specified as candidate apparatus while the information processing apparatus 1003 and 1004 are excepted from candidate apparatus.

The main processor 1021-1 included in the information processing controller 1011 in the information processing apparatus 1001 as the master apparatus refers to the apparatus information tables to read out information regarding the apparatus such as the processing capacities of the main processors and sub processors and information regarding the main memories of the information processing apparatus 1001 and 1002, and discriminates whether or not the information processing apparatus 1001 and 1002 satisfy the required specifications necessary for execution of a function program corresponding to the recording reservation command. It is assumed here that both of the information processing apparatus 1001 and 1002 satisfy the required specifications necessary for execution of a function program corresponding to the recording reservation command.

Further, the main processor 1021-1 refers to the apparatus information tables to read out the information regarding external recording sections of the information processing apparatus 1001 and 1002, and discriminates whether or not the free capacities of the external recording sections satisfy the capacity necessary for execution of the recording reservation command. Since the information processing apparatus 1001 and 1002 are hard disk recorders, the differences between the total capacities and the used capacities of the hard disks 1031-1 and 1031-3 individually correspond to the free capacities.

In this instance, it is assumed that the free capacity of the hard disk 1031-1 of the information processing apparatus 1001 is 10 minutes when it is converted into a recording period of time and the free capacity of the hard disk 1031-3 of the information processing apparatus 1002 is 20 hours when it is converted into a recording period of time.

In this instance, the main processor 1021-1 included in the information processing controller 1011 in the information processing apparatus 1001, which is the master apparatus, specifies the information processing apparatus which can secure the free capacity for two hours necessary for execution of the recording reservation command as a slave apparatus of a destination of an execution request.

As a result, only the information processing apparatus 1002 is selected as the execution request destination slave apparatus, and the main processor 1021-1 included in the information processing controller 1011 in the information processing apparatus 1001, which is the master apparatus, transmits the recording reservation command including the recording reservation information transmitted from the information processing apparatus 1003 operated by the user to the information processing apparatus 1002 to request the information processing apparatus 1002 for recording reservation of the broadcast program for two hours described hereinabove.

Then, the main processor 1021-2 included in the information processing controller 1012 in the information processing apparatus 1002 analyzes the recording reservation command and loads a function program necessary for recording from the hard disk 1031-3, which is an external recording section, into the line memory 1026-2. Then, the main processor 1021-2 executes recording in accordance with the recording reservation information. As a result, image and sound data of the broadcast program for two hours reserved for recording are recorded on the hard disk 1031-3 of the information processing apparatus 1002.

In this manner, also in the network system shown in FIGS. 33 to 37, the user can cause the plural information processing apparatus 1001, 1002, 1003, and 1004 to operate as a virtual single information processing apparatus 1007 only by operating only one of the information processing apparatus without operating any other one of the information processing apparatus.

### [6. Presentation 2 of the Situation of the Network System]

According to the system described above, the user cannot easily recognize from the appearance of the system that a plurality of information processing apparatus construct the network system or that a plurality of information processing apparatus are operating cooperatively.

Therefore, embodiments of the present invention make it possible for a user to recognize readily and with certainty from an appearance of a system that a plurality of information processing apparatus construct the network system or that a plurality of information processing apparatus are operating cooperatively as described below.

### (6-1. System Configuration)

In the system shown in FIGS. 33 to 37, the liquid crystal display sections 1062-1 and 1062-2 are provided for the information processing apparatus 1001 and 1002 each in the form of a hard disk recorder, respectively, and the LED section 1077 is provided for the information processing apparatus 1003 in the form of a television receiver while the liquid crystal display section 1082 is provided for the information processing apparatus 1004 in the form of a portable CD player. The LED section 1077 includes a plurality of sets of, for example, a green LED, a red LED, and a blue LED around the speakers 1075 and 1076.

Further, each of the information processing apparatus 1001, 1002, 1003, and 1004 has a function of measuring the date and hour (day and time), and those of the information processing apparatus 1001, 1002, 1003, and 1004, which are connected to each other by the network 1009, are controlled by one of them set, which is as a master apparatus, so that they have common date and hour data.

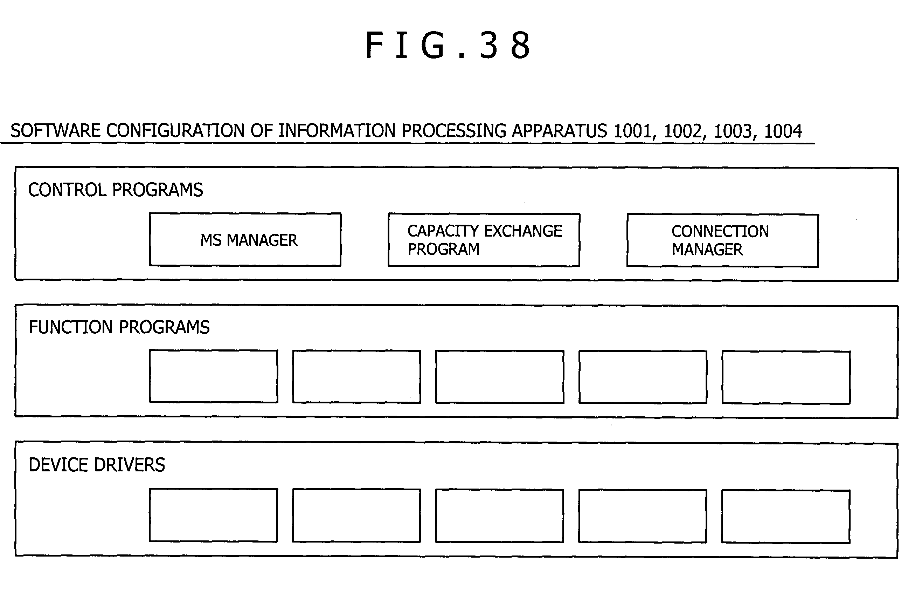

The information processing apparatus 1001, 1002, 1003, and 1004 have such a software configuration as illustrated in FIG. 38. Referring to FIG. 38, the information processing apparatus 1001, 1002, 1003, and 1004 include a connection manager in addition to the MS manager and the capacity exchange program as the control programs, and individually include such function programs and device drives as described hereinabove.

The connection manager is started after a capacity exchange (acquisition of apparatus information of a self apparatus and the other apparatus by each of the master apparatus and slave apparatus) by the capacity exchange program after an MS status (0 for the master apparatus and 1 for each slave apparatus) by the MS manager. Then, the connection manager produces flickering display information as presentation information based on the apparatus information acquired by the capacity exchange and causes the light emitting display sections of the information processing apparatus, that is, in the example of FIGS. 33 to 37, the liquid crystal display sections 1062-1 and 1062-2 of the information processing apparatus 1001 and 1002, the LED section 1077 of the information processing apparatus 1003, and the liquid crystal display section 1082 of the information processing apparatus 1004, to display flickering based on the flickering display information thereby to present a connection situation of the network 1009 or a state of the entire network system to the user.

The apparatus information for presentation such as the connection situation is various kinds of information including the kinds of information beginning with the information processing apparatus ID illustrated in FIG. 4 except information relating to sub processors such as the sub processor number and the sub processor status and additionally including special detailed information as occasion demands as seen in FIG. 15.

The special detailed information is information indicative of the number of those information processing apparatus, which are connected to the network 1009. Alternatively, where two or more information processing apparatus are connected to the network 1009, information indicating that the plural information processing apparatus are operating cooperatively, and so forth. The special detailed information is produced from apparatus information other than the apparatus information illustrated in FIG. 15.

The flickering display information produced from the apparatus information for presentation includes, for example, as seen in FIG. 16, flickering start date and hour, flickering end date and hour, display color, flickering period, flickering time ratio, light amount variation, flickering phase and extended information.

The flickering start date and hour and the flickering end date and hour indicate to perform flickering display for such a period of time from time ts to time te as seen in FIG. 17. However, in place of the flickering end date and hour, the time width of the flickering period may be indicated like 10 seconds from the flickering start date and hour.

The display color (lighting color) provides a plurality of color options such that one of colors such as green, red, and blue is selectively designated as hereinafter described.

The flickering period is the sum of a light-on time period and a light-off time period as seen in FIG. 17, and one of a plurality of options such as 1.0 second and 0.5 second is selectively designated as such.

The flickering time ratio is a ratio of the light-on time period and the light-off time period as seen in FIG. 17, and one of a plurality of options such as 50:50 and 30:70 is selectively designated.

The light amount variation indicates whether or not the amount of light to be used for illumination should be varied within the light-on time period. The light amount variation provides two options including a light amount fixed mode and a light mount variation mode. In the light amount fixed mode, the light amount for illumination is fixed as denoted by an immediate mode or a phase shift mode in FIG. 17. In the light mount variation mode, the light amount gradually decreases from its maximum value to zero and then gradually increases from zero to the maximum value within one flickering period. One of the light amount fixed mode and the light amount variation mode is selectively designated as hereinafter described.

However, in such a light amount variation mode as illustrated in FIG. 17, actually the light-off time within which the amount of light is zero is just a moment and does not provide such a flickering time ratio of 50:50 as mentioned hereinabove. However, the flickering time ratio in the light amount variation mode is defined such that the period of time within which the light amount gradually decreases from the maximum value to zero is determined as the light-off time period and the period of time within which the light amount gradually increases from zero to the maximum value is determined as the light-on time period. Alternatively, the period within which the light amount is equal to or greater than 1/2 the maximum value is determined as the light-on time and the period within which the light amount is smaller than 1/2 the maximum value is determined as the light-off time period. Then, the flickering time ratio defined in this manner is set fixedly, for example, to 50:50.

The flickering phase in the flickering display information of FIG. 16 indicates whether flickering display is to be started immediately at or after a delay for a certain interval of time from the flickering start date and hour designated as described above. The flickering phase provides, for example, such four options as illustrated in FIG. 17 including an immediate mode (no delay time is involved), a first phase shift mode D1 (the delay time is time d1 which is 1/4 the flickering period), a second phase shift mode D2 (the delay time is time d2 which is 1/2 the flickering period), and a third phase shift mode D3 (the delay time is time d3 which is 3/4 the flickering period). One of the four modes is selected for each information processing apparatus as hereinafter described.

The extended information in the flickering display information
(w) indicates the number of times of flickering within the flickering period from time ts to time te in FIG. 17 in response to the number of information processing apparatus connected to the network 1009,
(x) indicates that a plurality of colors designated by the user in advance or a plurality of colors selected at random by the connection manager are used as display colors and flickering display is performed in the order of colors designated by the user or in the order of colors determined at random by the connection manager, or
indicates some other information.

The system described above is configured such that, with regard to the display colors of the flickering display, the user can selectively set in advance
(a) that a particular one color is designated,
(b) that, although one color is designated, selection of the color is left to the system (connection manager),
(c) that a plurality of particular colors are designated and also the order of the colors to be lit is designated,
(d) that, although a plurality of particular colors are designated, determination of the order of the colors to be lit is left to the system, or
(e) that, although more than two colors are designated, selection of the colors and determination of the order of the colors to be lit are left to the system.

In the case of (a) or (b) above, the connection manager describes the particular color designated by the user or the color selected at random by the connection manager itself as the display color in the flickering display information in FIG. 16. However, in the case of (c), (d), or (e), the connection manager describes the plural colors and the order of the colors to be lit designated by the user or selectively determined at random by the connection manner itself.

### (6-2. Presentation Method)

A method for production of the flickering display information described above and flickering display based on the flickering display information is described in connection with a case wherein, while the information processing apparatus 1001, 1003, and 1004 are connected to the network 1009 and the information processing apparatus 1001 is set as a master apparatus while the information processing apparatus 1003 and 1004 are set as slave apparatus as described hereinabove, the information processing apparatus 1002 is connected newly to the network 1009.

At this time, the information processing apparatus 1002 newly added sets the information processing apparatus 1002 itself as a slave apparatus, and the information processing apparatus 1001 set as the master apparatus collects apparatus information of the information processing apparatus including the newly added information processing apparatus 1002 and updates the apparatus information tables in the main memory 1026-1 with the collected apparatus information.

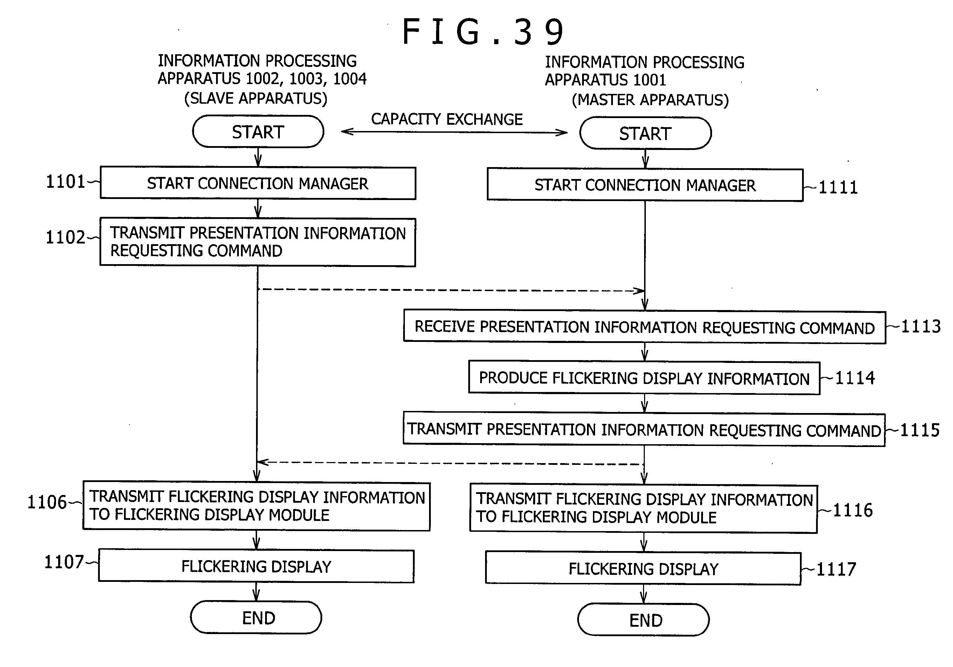

Thereafter, the main processor 1021 of each of the information processing apparatus 1001, 1002, 1003 and 1004 starts the connection manager to execute such a presentation process as illustrated in FIG. 39.

Referring to FIG. 39, after the capacity exchange (updating of the apparatus information table), the information processing apparatus 1002, 1003, and 1004 each set as a slave apparatus and the information processing apparatus 1001 set as the master apparatus start the connection manager at steps 1101 and 1111, respectively.

Then, the information processing apparatus 1002, 1003, and 1004 each set as a slave apparatus transmit a presentation information requesting command to the information processing apparatus 1001 set as the master apparatus at step 1102.

The presentation information requesting command includes, as seen in FIG. 19A, a sender ID (in this instance, information processing apparatus ID of the information processing apparatus 1002, 1003, or 1004), a sender ID (in this instance, information processing apparatus ID of the information processing apparatus 1001), and a response destination ID (in this instance, information processing apparatus ID of the information processing apparatus 1002, 1003, or 1004). The representation information requesting command further includes a presentation information requesting command body as a DMA command.

Referring back to FIG. 39, the information processing apparatus 1001 set as the master apparatus receives the presentation information requesting command at step 1113. Then at step 1114, the information processing apparatus 1001 produces such flickering display information as illustrated in FIG. 16 for the information processing apparatus 1001 itself and the other information processing apparatus as presentation information from such apparatus information as illustrated in FIG. 15 in the apparatus information tables of the information processing apparatus 1001 and the other information processing apparatus 1002, 1003, and 1004 in the main memory 1026-1.

Then at step 1115, the information processing apparatus 1001 set as the master apparatus transmits the thus produced flickering display information for the other apparatus (information processing apparatus 1002, 1003 and 1004) individually to the information processing apparatus 1002, 1003 and 1004 using a presentation information returning command.

Referring to FIG. 19B, the presentation information returning command includes a sender ID (in this instance, information processing apparatus ID of the information processing apparatus 1001), a transmission destination ID (in this instance, information processing apparatus ID of the information processing apparatus 1002, 1003, or 1004), and a response destination ID (in this instance, information processing apparatus ID of the information processing apparatus 1002, 1003, or 1004). The presentation information returning command further includes, as a DMA command, a presentation information returning command body and the produced flickering display information.

Referring back to FIG. 39, the information processing apparatus 1001 set as a master apparatus transmits the flickering display information for the information processing apparatus 1001 itself to the flickering display module of the information processing apparatus 1001 itself at step 1116. Further at step 1117, the information processing apparatus 1001 performs flickering display using the flickering display module.

On the other hand, each of the information processing apparatus 1002, 1003, and 1004 set as a slave apparatus receives the presentation information returning command destined for the information processing apparatus 1002, 1003, or 1004 itself and transmits the flickering display information for the self apparatus included in the presentation information returning command to the flickering display module of the self apparatus at step 1106. Then at step 1107, each of the information processing apparatus 1002, 1003, and 1004 performs flickering display by means of the flickering display module.

The flickering display module of each of the information processing apparatus 1001, 1002, 1003 and 1004 is formed from a flickering display program and a light emitting display section (hardware section). In the information processing apparatus 1001, 1002, 1003, and 1004, the flickering display information is analyzed and processed using the flickering display program, and the light emitting display section is driven to perform flickering display.

The light emitting display section is, in the information processing apparatus 1001, the liquid crystal display section 1062-1 shown in FIGS. 34 and 37, and is, in the information processing apparatus 1002, the liquid crystal display section 1062-2 shown in FIGS. 34 and 37 while it is, in the information processing apparatus 1003, the LED section 1077 shown in FIGS. 35 and 37 and is, in the information processing apparatus 1004, the liquid crystal display section 1082 shown in FIGS. 36 and 37.

### (6-3. Presentation Modes)

In the following, contents of the flickering display information produced in various cases and flickering display modes in the various cases are described.

### <6-3-1>

In the first mode, the apparatus information for presentation illustrated in FIG. 15 describes nothing as the special detailed information and the flickering display information illustrated in FIG. 16 describes nothing as the extended information, and for all of the information processing apparatus, for example, the display color is set to green; the flickering period is set to 1.0 second; the flickering time ratio is set to 50:50; the light amount variation is set to zero (light amount fixed); and the flickering phase is set to the immediate (no time delay).

In this instance, on the information processing apparatus 1001, the entire display screen of the liquid crystal display section 1062-1 flickers in green; on the information processing apparatus 1002, the entire display screen of the liquid crystal display section 1062-2 flickers in green; on the information processing apparatus 1003, the green LEDs in the LED section 1077 flicker; and on the information processing apparatus 1004, the entire display screen of the liquid crystal display section 1082 flickers in green.

Accordingly, the user can discriminate readily and with certainty from the appearance of the system that the information processing apparatus 1001, 1002, 1003, and 1004 construct the network system.

### <6-3-2>

In the second mode, an information processing apparatus set as the master apparatus and any other information apparatus set as a slave apparatus display in different flickering periods or in different display colors.

Since, in the example described above, the information processing apparatus 1001 is set as the master apparatus and the information processing apparatus 1002, 1003, and 1004 are set as slave apparatus, (2a) a case wherein the same display color, for example, green, is used and the flickering period is set to 0.5 second for the information processing apparatus 1001 while it is set to 1.0 second for the information processing apparatus 1002, 1003, and 1004, (2b) another case wherein the equal flickering period, for example, 1.0 second, is used and the display color is set to red for the information processing apparatus 1001 while it is set to green for the information processing apparatus 1002, 1003, and 1004, (2c) a further case wherein, for the information processing apparatus 1001, the flickering period is set to 0.5 second and the display color is set to red while, for the information processing apparatus 1002, 1003, and 1004, the flickering period is set to 1.0 second and the display color is set to green, and so forth are available.

According to the second mode, the user can recognize readily and with certainty from the appearance of the system not only that the information processing apparatus 1001, 1002, 1003, and 1004 construct the network system but also that the information processing apparatus 1001 is set as the master apparatus while the information processing apparatus 1002, 1003, and 1004 are set as slave apparatus.

### <6-3-3>

In the third mode, the flickering phase is successively displaced in order of the information processing apparatus IDs of the information processing apparatus. In particular, if the information processing apparatus IDs in the example described hereinabove are substituted into numerical values, then the information processing apparatus 1002 assumes the next place to the information processing apparatus 1001; the information processing apparatus 1003 assumes the next place to the information processing apparatus 1002; and the information processing apparatus 1004 assumes the next place to the information processing apparatus 1003 (if no higher value is available, then the next place is assigned to the information processing apparatus of the lowest value). Therefore, the information processing apparatus 1001 is set to such an immediate mode as seen in FIG. 17; the information processing apparatus 1002 is set to such a first phase shift mode D1 as seen in FIG. 17; the information processing apparatus 1003 is set to such a second phase shift mode D2 as seen in FIG. 17; and the information processing apparatus 1004 is set to such a third phase shift mode D3 as seen in FIG. 17.

According to the third mode, the user can recognize readily and with certainty from the appearance of the system not only that the information processing apparatus 1001, 1002, 1003, and 1004 construct the network system but also the order of the information processing apparatus 1001, 1002, 1003, and 1004.

### <6-3-4>

In the fourth mode, the number of those information processing apparatus connected to the network 1009 is described as the special detailed information in the apparatus information for presentation illustrated in FIG. 15, and the number of times of flickering within a flickering period as in the paragraph (w) described hereinabove is described as the extended information in the flickering display information illustrated in FIG. 16.

In the example described above, since the four information processing apparatus 1001, 1002, 1003, and 1004 are connected to the network 1009, for example, within one flickering period from time ts to time te of FIG. 17, flicking is performed four times, and then for another flickering period, the flocking state is stopped and a light-off state is maintained. Thus, each of the information processing apparatus 1001, 1002, 1003, and 1004 displays flickering in this pattern.

According to the fourth mode, the user can recognize readily and with certainty from the appearance of the system not only that a plurality of information processing apparatus construct the network system but also what number of information processing apparatus are connected to the network 1009.

### <6-3-5>

According to the fifth mode, a plurality of colors and an order of the colors designated by the user or selectively determined at random by the system (connection manager of the information processing apparatus 1001 set as the master apparatus) as in the paragraph (x) hereinabove are described in the flickering display information illustrated in FIG. 16.

In this instance, in the example described hereinabove, for example, red is for used flickering for the information processing apparatus 1001; green is used for flickering for the information processing apparatus 1002; blue is used for flickering for the information processing apparatus 1003; and yellow is used for flickering for the information processing apparatus 1004.

According to the fifth mode, the user can recognize readily and with certainty from the appearance of the system not only that a plurality of information processing apparatus construct the network system but also what number of information processing apparatus are connected to the network 1009.

It is to be noted that the information processing apparatus 1003 may be configured such that, for example, the green LED and the red LED in the LED section 1077 shown in FIG. 37 are disposed and lit flickering simultaneously to cause the information processing apparatus 1003 to flick in yellow.

### <6-3-6>

According to the sixth mode, that the network system is operating cooperatively is described as the special detailed information in the apparatus information for presentation illustrated in FIG. 15, and this is reflected on one of the items of the flickering display information illustrated in FIG. 16.

For example, when the information processing apparatus 1002 is connected to the network 1009 while the information processing apparatus 1001, 1003 and 1004 remain connected to the network 1009 as described hereinabove, if a process corresponding to an operation performed on the information processing apparatus 1003 by the user is being executed by the information processing apparatus 1001, 1003 or 1004, then the network system is in a state wherein it is operating cooperatively.

Then, for example, where the network system is operating cooperatively in this manner, blue is used as the display color, but where the network system is not in such a cooperatively operating state, green is used as the display color. Or, where the network system is operating cooperatively in this manner, the flickering period of 0.5 seconds is used, but where the network system is not in such a cooperatively operating state, the other flickering period of 1.0 second is used.

According to the sixth mode, the user can recognize readily and with certainty from the appearance of the system not only that a plurality of information processing apparatus construct the network system but also whether or not they are operating cooperatively.

### <6-3-7>

According to the seventh mode, information regarding the main processor, main memory or external recording section in the apparatus information for presentation illustrated in FIG. 15 is reflected on one of the items in the flickering display information illustrated in FIG. 16.

Further, if the main processor utilization factor of a certain information processing apparatus is higher than a fixed value, then in order to cause the user to pay attention, the flickering period is set to 0.5 seconds equal to one half the ordinary flickering period of 1.0 second or the display color is changed from green to red.

Further, the main memory utilization factor is calculated from the main memory total capacity and the main memory utilization capacity. Then, if the main memory utilization factor of a certain information processing apparatus is higher than a fixed value, then in order to cause the user to pay attention, the flickering period is set to 0.5 seconds equal to one half the ordinary flickering period of 1.0 second or the display color is changed from green to red.

Further, it is determined from the external recording section type ID whether or not a hard disk is used as the external recording section, and if a hard disk is used in any one of the information processing apparatus (in the example described above, the information processing apparatus 1001 and 1002), then the utilization factor is calculated from the total capacity of the hard disk and the utilization capacity. Then, if the hard disk utilization factor of a certain information processing apparatus is higher than a fixed value, then in order to cause the user to pay attention, the flickering period is set to 0.5 seconds equal to one half the ordinary flickering period of 1.0 second or the display color is changed from green to red.

It is to be noted that the flickering period may be varied continuously in response to the main processor utilization factor, main memory utilization factor or hard disk utilization factor so that the flickering period may be made shorter as the main processor utilization factor, main memory utilization factor or hard disk utilization factor increases.

### <6-3-8>

According to the eighth mode, if any information processing apparatus connected to the network is abnormal or has some trouble, then this is described as the special detailed information in the flickering display information illustrated in FIG. 15 so that it may be reflected on one of the items in the flickering display information illustrated in FIG. 16.

In this instance, in order to cause the user to pay attention to the information processing apparatus connected to the network or that information processing apparatus which is abnormal or has some trouble, the flickering period is set to 0.5 seconds equal to one half the ordinary flickering period of 1.0 second or the display color is changed from green to red.

### <Other Presentation Modes>

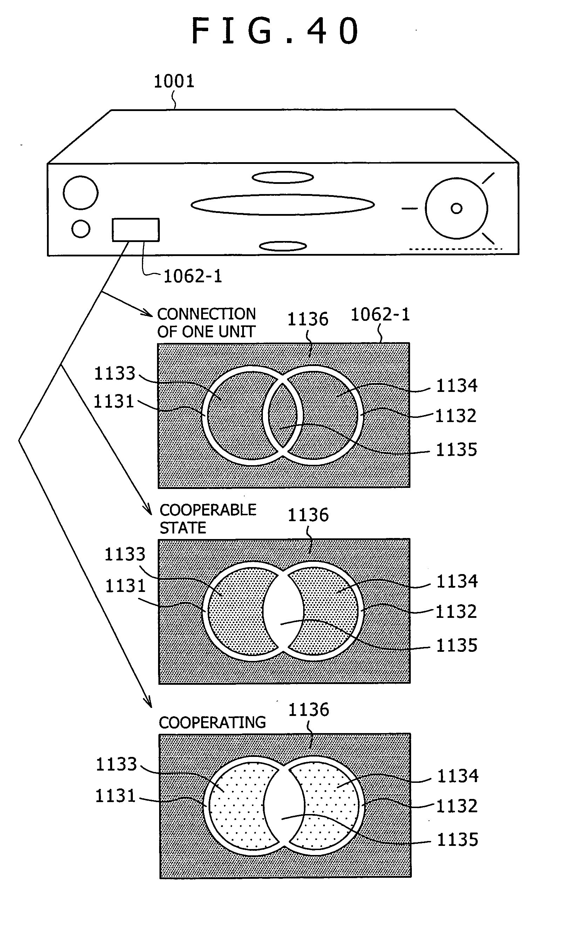

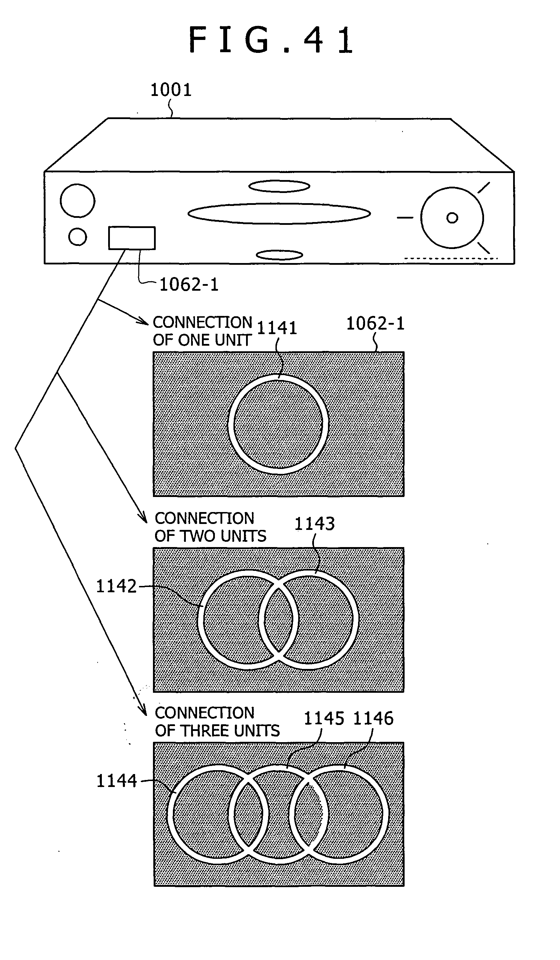

In place of or in addition to the presentation modes described above, for example, in the system described above, each of the information processing apparatus 1001 and 1002 in the form of a hard disk recorder preferably has such a presentation mode as shown in FIG. 40 or 41.

In the example of FIG. 40, where only the information processing apparatus 1001 is connected to the network 1009, two rings 1131 and 1132 are displayed flickering (or lit continuously) in a crossing state on the liquid crystal display section 1062-1 as denoted by "connection of one unit". Regarding the display color, for example, yellow having a high luminance is used for the rings 1131 and 1132, and black is used for inner portions 1133 and 1134 of the rings 1131 and 1132, a crossing portion 1135 between the rings 131 and 132 and a peripheral portion 1136 of the rings 1131 and 1132.

If the information processing apparatus 1001 and a different information processing apparatus are connected to the network 1009 but are not operating cooperatively, then as denoted by "cooperable state" in FIG. 40, blue is used for the inner portions 1133 and 1134 and yellow same as that for the rings 1131 and 1132 is used for the crossing portion 1135 while the luminance of the entire screen is set higher than that in the case of the connection of one unit.

If the information processing apparatus 1001 and a different information processing apparatus are connected to the network 1009 and besides are operating cooperatively, then as denoted by "cooperating" in FIG. 40, green is used for the inner portions 1133 and 1134 and the luminance of the entire screen is set higher than that in the case of the cooperable state.

In the system described above, the information processing apparatus 1004 in the form of a portable CD player is disconnected with a high degree of possibility from the network 1009. However, the information processing apparatus 1001 and 1002 each in the form of a hard disk recorder are placed at fixed places and disconnected with a low degree of possibility from the network 1009. Therefore, when the user checks the situation of the system, the user frequently takes notice of the information processing apparatus 1001 or 1002 in the form of a hard disk recorder.

Accordingly, if the presentation mode described above with reference to FIG. 40 is used, then the user can determine various states of the system readily and with certainty.

In the example of FIG. 41, when only the information processing apparatus 1001 is connected to the network 1009, one ring 1141 is displayed flickering (or lit continuously) on the liquid crystal display section 1062-1 as denoted by "connection of one unit". However, if the information processing apparatus 1001 and a different information processing apparatus are connected to the network 1009, then as denoted by "connection of two units" in FIG. 41, two rings 1142 and 1143 are displayed flickering (or lit continuously) in a crossing state on the liquid crystal display section 1062-1. On the other hand, if the information processing apparatus 1001 and two different information processing apparatus are connected to the network 1009, then as denoted by "connection of three units", three rings 1144, 1145 and 1146 are displayed flickering (or lit continuously) in a successively crossing state on the liquid crystal display section 1062-1.

According to the example of FIG. 41, the user can determine from the appearance of the system readily and with certainty what number of information processing apparatus are connected to the network.

### (6-4. Other Presentation Methods and Presentation Modes)

The system can be configured otherwise such that, also where only a certain one of the information processing apparatus is connected to the network and set as a master apparatus as denoted by "connection of one unit" in FIGS. 40 and 41, the master apparatus produces presentation information for the master apparatus itself from apparatus information of the master apparatus itself and performs such flickering display (or continuously lit display) as described above.

Further, the system can be configured otherwise such that, also where a certain information processing apparatus is connected to the network and set as a master apparatus and another or other information processing apparatus are newly connected to the network in this state as in the examples described hereinabove, each of the slave apparatus does not issue a request to the master apparatus but produces presentation information for the slave apparatus itself from apparatus information of the slave apparatus itself or from apparatus information of the self apparatus itself and the other apparatus and performs such flickering display (or continuously lit display) as described hereinabove.

Further, the system can be configured otherwise such that, also when a plurality of information processing apparatus are connected to the network and one or more of the information processing apparatus in this state are disconnected from the network, the other information processing apparatus which remain not disconnected from the network (when only one of the information processing apparatus remains not disconnected, the one information processing apparatus) present the situation of the network system then by a method and a mode similar to those described hereinabove.

In this instance, the user can recognize readily and with certainty from the appearance of the system that the situation of the network system has changed as a result of disconnection of a certain information processing apparatus from the network.

Further, while, in the examples described above, the light emitting display section of the information processing apparatus is lit flickering or continuously to present a situation of the network system, the system may be configured otherwise such that the situation of the network system is presented by announcement by voice.

In this instance, each of the information processing apparatus is configured in the following manner. In particular, each information processing apparatus includes a sound outputting section such as a speaker, and a program and text data for announcement by voice are prepared. Then, sound data for the announcement by voice are produced by text speech synthesis from the apparatus information described hereinabove, and the sound data are converted into and signaled as an analog sound signal to the sound outputting section such as a speaker.

Particularly, when a certain information processing apparatus is connected to the network and set as a master apparatus and another or other information processing apparatus are newly connected to the network in this state as in the examples described hereinabove, such announcement by voice as "an apparatus has been added", "apparatus have increased to four", "a hard disk recorder has been added" or "cooperative operation of four apparatus is proceeding" is provided to present the situation of the network system then. On the other hand, when a plurality of information processing apparatus are connected to the network and one or more of the information processing apparatus in this state are disconnected from the network, each of the other information processing apparatus which remain not disconnected from the network (when only one of the information processing apparatus remains not disconnected, the one information processing apparatus) presents the situation of the network system then by such announcement by voice as "an apparatus has been connected", "apparatus have decreased to three", "a CD player has been disconnected" or "the master has been disconnected and another apparatus has been set as the master".

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

## Claims

1. An information processing apparatus connectable to a network to construct a network system, comprising:
a presentation section including a light emitting section, a display section or a sound outputting section;
a detection section for detecting a situation of said network system; and
a control section for producing presentation information based on a result of the detection by said detection section and causing said presentation section to present the situation of said network system based on the presentation information.

2. The information processing apparatus according to claim 1, wherein said presentation section includes a light emitting section or a display section, and said control section causes said presentation section to flicker based on the presentation information.

3. An information processing apparatus connectable to a network to construct a network system, comprising:
a detection section for detecting a situation of said network system; and
a control section for producing presentation information based on a result of the detection by said detection section and transmitting the presentation information to a different information processing apparatus connected to said network so that the situation of said network system is presented by a presentation section included in said different information processing apparatus based on the presentation information.

4. The information processing apparatus according to claim 3, wherein said presentation section includes a light emitting section or a display section, and said control section causes said presentation section to flicker based on the presentation information.

5. A network system situation presenting method for presenting a situation of a network system wherein a plurality of information processing apparatus each including a presentation section are connected to the same network, comprising steps of:
detection, performed by one of said information processing apparatus of detecting a situation of said network system;
information production, performed by the one information processing apparatus or a different one of said plurality of information processing apparatus of producing presentation information based on a result of the detection at the detection step; and
presentation, performed by any of said plurality of information processing apparatus connected to said network of presenting the situation of said network system by means of a presentation section included in the information processing apparatus based on the presentation information produced at the information production step.

6. The network system situation presenting method according to claim 5, wherein said presentation section is a light emitting section or a display section, and at the presentation step, said presentation section is caused to flicker.

7. A computer program for causing a computer provided in an information processing apparatus, which is connected to a network to construct a network system, to present a situation of said network system by means of a presentation section provided in the information processing apparatus, the computer program causing said computer to function as:
a section for detecting a situation of said network system; and
a section for producing presentation information based on a result of the detection and causing said presentation section to present the situation of said network system based on the presentation information.

8. A computer program for causing a computer provided in an information processing apparatus, which is connected to a network to construct a network system, to allow a different information processing apparatus connected to said information processing apparatus through said network to present a situation of said network system, the computer program causing said computer to function as:
a section for detecting a situation of said network system; and
a section for producing presentation information based on a result of the detection and transmitting the presentation information to the different information processing apparatus so that the situation of said network system is presented by a presentation section included in said different information processing apparatus based on the presentation information.
